# EUROPEAN PATENT APPLICATION

(11) **EP 2 387 247 A2**
(43) Date of publication of application: **16.11.2011**
(21) Application number: 11165190.7
(22) Date of filing: 06.05.2011
(51) Int. Cl.: H04N 13/00

(54) **3D projector**

(30) Priority: 10.05.2010 US 333008 P
(71) Applicant: XpanD, Inc., Beaverton, OR 97006 (US)
(72) Inventor: MacNaughton, Boyd, Portland, OR 97239 (US); Kimmell, Rodney, Gaston, OR 97119 (US); Allen, David, Beaverton, OR 97007 (US)
(74) Representative: Sessford, Russell

(57) **Abstract**

A viewing system for viewing video displays having the appearance of a three dimensional image.

## Description

This application claims the benefit of the filing date of U.S. Provisional Patent Application No. 61/333,008, attorney docket number 092847.000318, filed on May 10, 2010, the disclosure of which is incorporated herein by reference.

This disclosure relates to image processing systems for the presentation of a video image that appears three dimensional to the viewer.

Accordingly an aspect of the present invention provides a stereoscopic image projector comprising: an image generator configured to generate three left-eye wavelength-specific images and three right-eye wavelength-specific images having different wavelengths by modulating three light beams having the different wavelengths in spatial modulators; an image combiner configured to combine the three left-eye wavelength-specific images into a single left-eye combined image and the three right-eye wavelength-specific images into a single right-eye combined image; a relay lens configured to receive the left-eye combined image and the right-eye combined image and focus a real image of the left-eye combined image and a real image of the right-eye combined image that are separated from each other; a light guide configured to separately guide the real image of the left-eye combined image and the real image of the right-eye combined image; a left-eye image projection lens configured to project the real image of the left-eye combined image guided through the light guide on a screen so that a left-eye image is focused; and a right-eye image projection lens configured to project the real image of the right-eye combined image guided through the light guide on the screen so that a right-eye image is focused.

The light guide may include first and second prisms, the first prism has an entrance surface on which the real image of the left-eye combined image is incident, a reflection surface that reflects the real image of the left-eye combined image incident through the entrance surface, and an exit surface through which the real image of the left-eye combined image reflected off the reflection surface exits, and the second prism has an entrance surface on which the real image of the right-eye combined image is incident, a reflection surface that reflects the real image of the right-eye combined image incident through the entrance surface, and an exit surface through which the real image of the right-eye combined image reflected off the reflection surface exits.

The left-eye image projection lens and the right-eye image projection lens may be configured to superimpose the left-eye image and the right-eye image on each other.

The stereoscopic image projector may further comprise a lens shift mechanism configured to adjust the distance between the left-eye image projection lens and the right-eye image projection lens in the direction perpendicular to the optical axes of the left-eye image projection lens and the right-eye image projection lens while keeping the optical axes parallel to each other.

The number of the spatial modulators may be three, the spatial modulators corresponding to the three light beams, and each of the spatial modulators has a left-eye image region in which the left-eye image is generated and a right-eye image region in which the right-eye image is generated.

The stereoscopic image projector may further comprise a polarization control filter provided upstream of the entrance surface or downstream of the exit surface of each of the left-eye image projection lens and the right-eye image projection lens, the polarization control filters converting the polarization state of the light that forms the real image of the left-eye combined image to be projected on the screen and the polarization state of the light that forms the real image of the right-eye combined image to be projected on the screen in such a way that the two polarization states differ from each other.

The stereoscopic image projector may further comprise a wavelength selection filter provided upstream of the entrance surface or downstream of the exit surface of each of the left-eye image projection lens and the right-eye image projection lens, the wavelength selection filters converting the wavelength distribution of the light that forms the real image of the left-eye combined image to be projected on the screen and the wavelength distribution of the light that forms the real image of the right-eye combined image to be projected on the screen in such a way that the two wavelength distributions differ from each other.

The light that forms the left-eye wavelength-specific images and the right-eye wavelength-specific images generated in the image generator may be circularly polarized, the light guide may include a prism, the prism may have an entrance surface on which the real image of the left-eye combined image and the real image of the right-eye combined image are incident, a reflection surface that reflects the real images incident through the entrance surface, and an exit surface through which the real images reflected off the reflection surface exit, and a polarization control filter may be provided between the image combiner and the entrance surface of the light guide, the polarization control filter converting the polarization state of the light that forms the real image of the left-eye combined image to be projected on the screen and the polarization state of the light that forms the real image of the right-eye combined image to be projected on the screen from circularly polarized light into linearly polarized light.

Another aspect provides an adaptor for a stereoscopic image projector, the adaptor comprising: a relay lens configured to receive a left-eye combined image that is a combined single image formed of three left-eye wavelength-specific images having different wavelengths and a right-eye combined image that is a combined single image formed of three right-eye wavelength-specific images having different wavelengths through the entrance surface of the relay lens and output a focused real image of the left-eye combined image and a focused real image of the right-eye combined image that are separated from each other through the exit surface of the relay lens; a light guide configured to face the exit surface of the relay lens and separately guide the real image of the left-eye combined image and the real image of the right-eye combined image in the direction away from the exit surface; and an attachment member configured to hold the relay lens and the light guide.

The stereoscopic image projector may further comprise: a left-eye optical retarder positioned in front of the left-eye image projection lens; and a right-eye optical retarder position in front of the right-eye image projection lens; wherein the image generator is configured to swap one or more of the three left-eye wavelength-specific images with one or more of the three right-eye wavelength-specific images.

The image generator may be configured to swap a location of one or more of the three left-eye wavelength-specific images with the location of one or more of the three right-eye wavelength-specific images.

Embodiments of the present invention are described, by way of example only, with reference to the accompanying drawings in which:

Fig. 1 is an illustration of an exemplary embodiment of a system for providing three dimensional images.

Fig. 2 is a flow chart of an exemplary embodiment of a method for operating the system of Fig. 1.

Fig. 3 is a graphical illustration of the operation of the method of Fig. 2.

Fig. 4 is a graphical illustration of an exemplary experimental embodiment of the operation of the method of Fig. 2.

Fig. 5 is a flow chart of an exemplary embodiment of a method for operating the system of Fig. 1.

Fig. 6 is a flow chart of an exemplary embodiment of a method for operating the system of Fig. 1.

Fig. 7 is a flow chart of an exemplary embodiment of a method for operating the system of Fig. 1.

Fig. 8 is a graphical illustration of the operation of the method of Fig. 7.

Fig. 9 is a flow chart of an exemplary embodiment of a method for operating the system of Fig. 1.

Fig. 10 is a graphical illustration of the operation of the method of Fig. 9.

Fig. 11 is a flow chart of an exemplary embodiment of a method for operating the system of Fig. 1.

Fig. 12 is a graphical illustration of the operation of the method of Fig. 11.

Fig. 13 is a flow chart of an exemplary embodiment of a method for operating the system of Fig. 1.

Fig. 14 is a graphical illustration of the operation of the method of Fig. 13.

Fig. 15 is a flow chart of an exemplary embodiment of a method for operating the system of Fig. 1.

Fig. 16 is an illustration of an exemplary embodiment of a method for operating the system of Fig. 1.

Fig. 17 is an illustration of an exemplary embodiment of the 3D glasses of the system of Fig. 1.

Figs. 18, 18a, 18b, 18c and 18d is a schematic illustration of an exemplary embodiment of 3D glasses.

Fig. 19 is a schematic illustration of the digitally controlled analog switches of the shutter controllers of the 3D glasses of Figs. 18, 18a, 18b, 18c and 18d.

Fig. 20 is a schematic illustration of the digitally controlled analog switches of the shutter controllers, the shutters, and the control signals of the CPU of the 3D glasses of Figs. 18, 18a, 18b, 18c and 18d.

Fig. 21 is a flow chart illustration of an exemplary embodiment of the operation of the 3D glasses of Figs. 18, 18a, 18b, 18c and 18d.

Fig. 22 is a graphical illustration of an exemplary embodiment of the operation of the 3D glasses of Figs. 18, 18a, 18b, 18c and 18d.

Fig. 23 is a flow chart illustration of an exemplary embodiment of the operation of the 3D glasses of Figs. 18, 18a, 18b, 18c and 18d.

Fig. 24 is a graphical illustration of an exemplary embodiment of the operation of the 3D glasses of Figs. 18, 18a, 18b, 18c and 18d.

Fig. 25 is a flow chart illustration of an exemplary embodiment of the operation of the 3D glasses of Figs. 18, 18a, 18b, 18c and 18d.

Fig. 26 is a graphical illustration of an exemplary embodiment of the operation of the 3D glasses of Figs. 18, 18a, 18b, 18c and 18d.

Fig. 27 is a flow chart illustration of an exemplary embodiment of the operation of the 3D glasses of Figs. 18, 18a, 18b, 18c and 18d.

Fig. 28 is a graphical illustration of an exemplary embodiment of the operation of the 3D glasses of Figs. 18, 18a, 18b, 18c and 18d.

Fig. 29 is a graphical illustration of an exemplary embodiment of the operation of the 3D glasses of Figs. 18, 18a, 18b, 18c and 18d.

Figs. 30, 30a, 30b and 30c is a schematic illustration of an exemplary embodiment of 3D glasses.

Fig. 31 is a schematic illustration of the digitally controlled analog switches of the shutter controllers of the 3D glasses of Figs. 30, 30a, 30b and 30c.

Fig. 32 is a schematic illustration of the operation of the digitally controlled analog switches of the shutter controllers of the 3D glasses of Figs. 30, 30a, 30b and 30c.

Fig. 33 is a flow chart illustration of an exemplary embodiment of the operation of the 3D glasses of Figs. 30, 30a, 30b and 30c.

Fig. 34 is a graphical illustration of an exemplary embodiment of the operation of the 3D glasses of Figs. 30, 30a, 30b and 30c.

Fig. 35 is a flow chart illustration of an exemplary embodiment of the operation of the 3D glasses of Figs. 30, 30a, 30b and 30c.

Fig. 36 is a graphical illustration of an exemplary embodiment of the operation of the 3D glasses of Figs. 30, 30a, 30b and 30c.

Fig. 37 is a flow chart illustration of an exemplary embodiment of the operation of the 3D glasses of Figs. 30, 30a, 30b and 30c.

Fig. 38 is a graphical illustration of an exemplary embodiment of the operation of the 3D glasses of Figs. 30, 30a, 30b and 30c.

Fig. 39 is a flow chart illustration of an exemplary embodiment of the operation of the 3D glasses of Figs. 30, 30a, 30b and 30c.

Fig. 40 is a flow chart illustration of an exemplary embodiment of the operation of the 3D glasses of Figs. 30, 30a, 30b and 30c.

Fig. 41 is a graphical illustration of an exemplary embodiment of the operation of the 3D glasses of Figs. 30, 30a, 30b and 30c.

Fig. 42 is a flow chart illustration of an exemplary embodiment of the operation of the 3D glasses of Figs. 30, 30a, 30b and 30c.

Fig. 43 is a graphical illustration of an exemplary embodiment of the operation of the 3D glasses of Figs. 30, 30a, 30b and 30c.

Fig. 44 is a top view of an exemplary embodiment of 3D glasses.

Fig. 45 is a rear view of the 3D glasses of Fig. 44.

Fig. 46 is a bottom view of the 3D glasses of Fig. 44.

Fig. 47 is a front view of the 3D glasses of Fig. 44.

Fig. 48 is a perspective view of the 3D glasses of Fig. 44.

Fig. 49 is a perspective view of the use of a key to manipulate a housing cover for a battery for the 3D glasses of Fig. 44.

Fig. 50 is a perspective view of the key used to manipulate the housing cover for the battery for the 3D glasses of Fig. 44.

Fig. 51 is a perspective view of the housing cover for the battery for the 3D glasses of Fig. 44.

Fig. 52 is a side view of the 3D glasses of Fig. 44.

Fig. 53 is a perspective side view of the housing cover, battery and an O-ring seal for the 3D glasses of Fig. 44.

Fig. 54 a perspective bottom view of the housing cover, battery and the O-ring seal for the 3D glasses of Fig. 44.

Fig. 55 is a perspective view of an alternative embodiment of the glasses of Fig. 44 and an alternative embodiment of the key used to manipulate housing cover of Fig. 50.

Fig. 56 is a schematic illustration of an exemplary embodiment of a signal sensor for use in one or more of the exemplary embodiments.

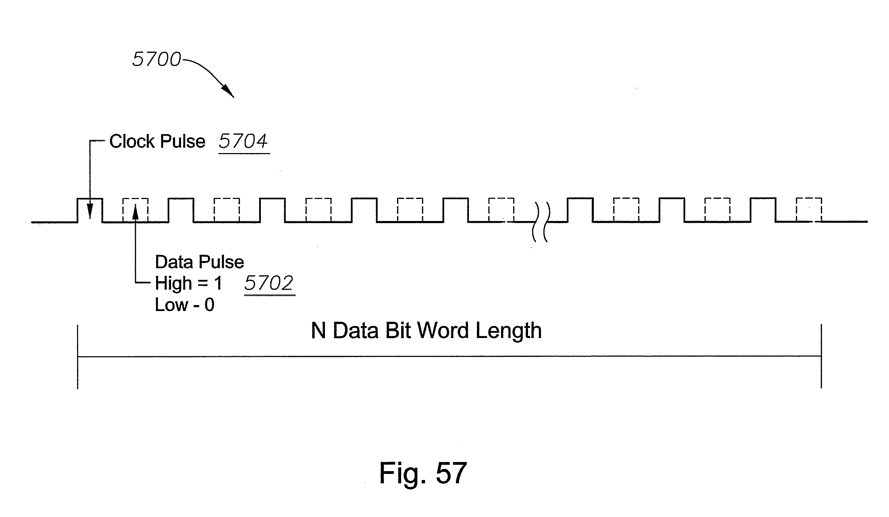

Fig. 57 is a graphical illustration of an exemplary data signal suitable for use with the signal sensor of Fig. 56.

Fig. 58 is a schematic illustration of an exemplary system for viewing 3D images.

Fig. 59 is a flow chart illustration of an exemplary method of operating the system of Fig. 58.

Fig. 59a is a schematic illustration of an exemplary embodiment of an information word for use in the method of Fig. 59.

Fig. 60 is a schematic illustration of an exemplary system for viewing 3D images.

Fig. 61 a is a flow chart illustration of an exemplary method of operating the system of Fig. 60.

Figs. 61b and 61c are schematic illustrations of exemplary embodiments of an information word for use in the method of Fig. 61 a.

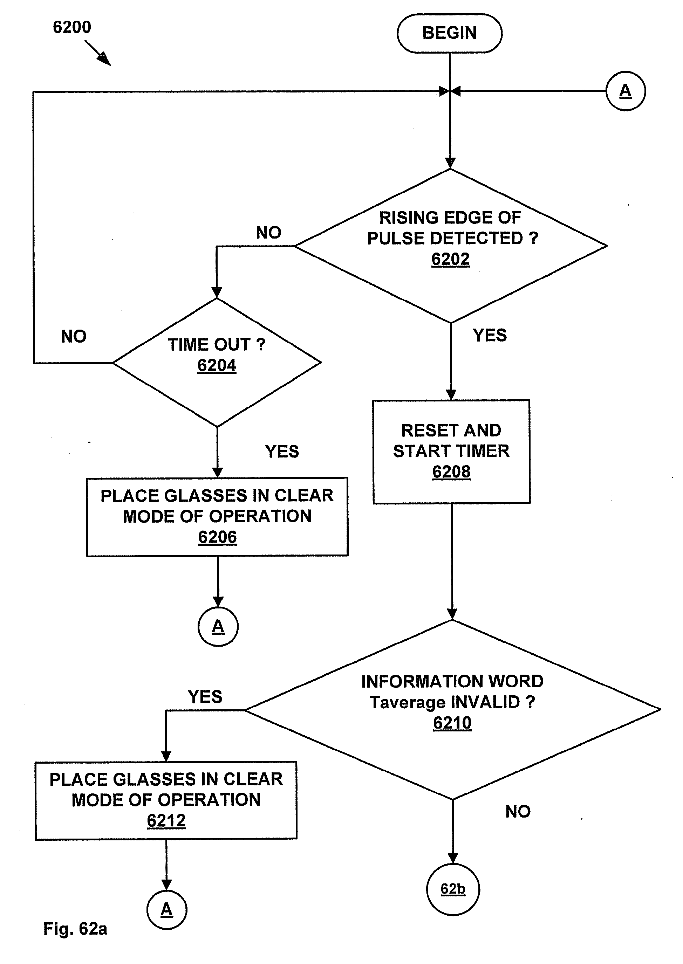

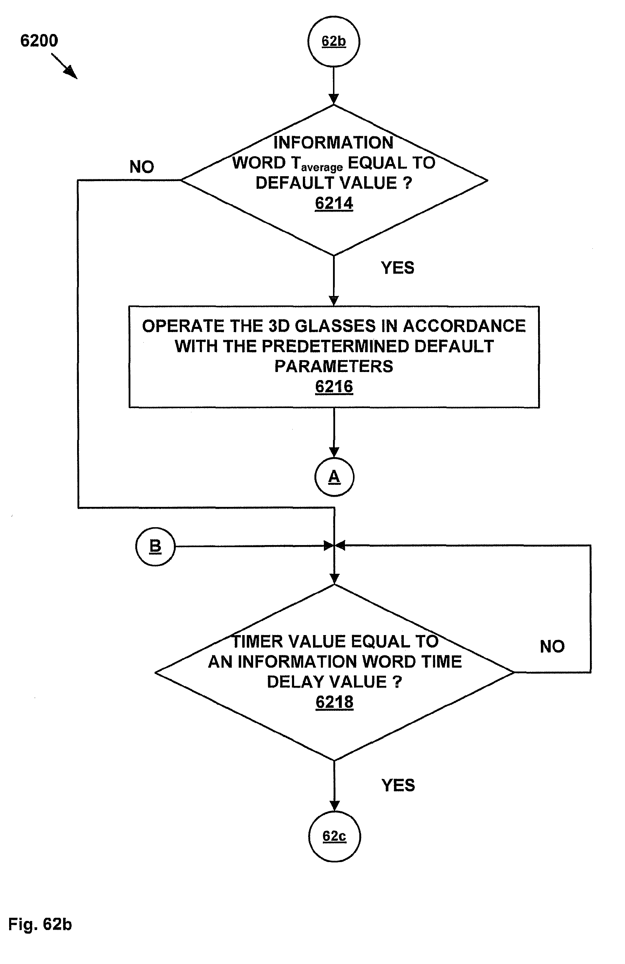

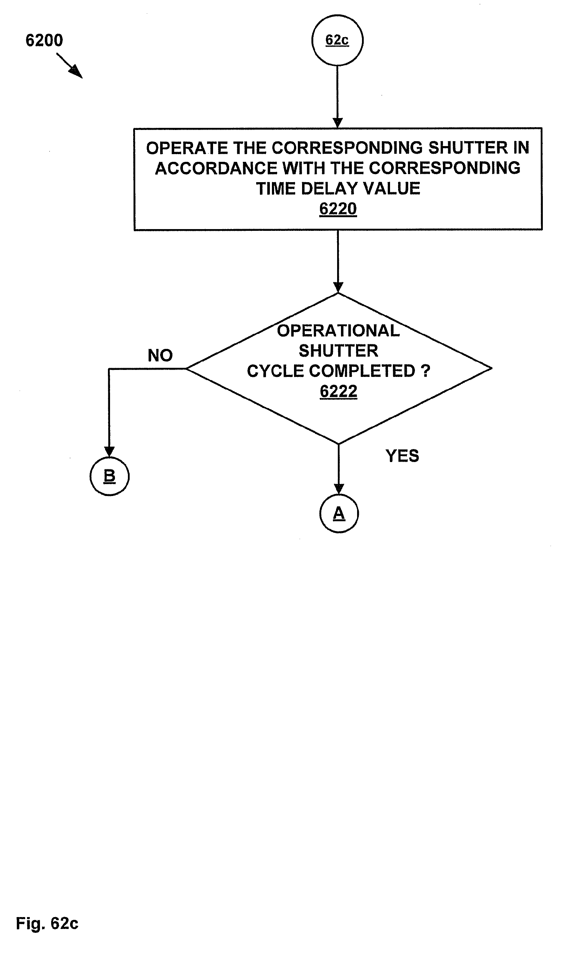

Figs. 62a, 62b and 62c is a flow chart illustration of an exemplary method of operating the system of Fig. 60.

Fig. 63 is a schematic illustration of an exemplary system for viewing 3D images.

Fig. 64 is a flow chart illustration of an exemplary method of operating the display device of the system of Fig. 63.

Figs. 64a is a schematic illustrations of an exemplary embodiment of an information word for use in the method of Fig. 64.

Figs. 65a and 65b is a flow chart illustration of an exemplary method of operating the 3D glasses of the system of Fig. 63.

Fig. 66 is a schematic illustration of an exemplary embodiment of an information word for use in the method of Figs. 65a and 65b.

FIG. 67 is a plan view showing the configuration of a stereoscopic image projector 10 of an embodiment.

FIGS. 68A to 68C explain a display screen 1402 of each of reflective liquid crystal panels 14R, 14G, and 14B.

FIG. 69 explains the operation of the stereoscopic image projector 10 of the present embodiment.

FIG. 70 explains the operation of the stereoscopic image projector 10 of the present embodiment.

FIGS. 71A, 71B, and 71C explain the operation of a stereoscopic image projector 2 of a comparative example.

In the drawings and description that follows, like parts are marked throughout the specification and drawings with the same reference numerals, respectively. The drawings are not necessarily to scale. Certain features of the invention may be shown exaggerated in scale or in somewhat schematic form and some details of conventional elements may not be shown in the interest of clarity and conciseness. The present invention is susceptible to embodiments of different forms. Specific embodiments are described in detail and are shown in the drawings, with the understanding that the present disclosure is to be considered an exemplification of the principles of the invention, and is not intended to limit the invention to that illustrated and described herein. It is to be fully recognized that the different teachings of the embodiments discussed below may be employed separately or in any suitable combination to produce desired results. The various characteristics mentioned above, as well as other features and characteristics described in more detail below, will be readily apparent to those skilled in the art upon reading the following detailed description of the embodiments, and by referring to the accompanying drawings.

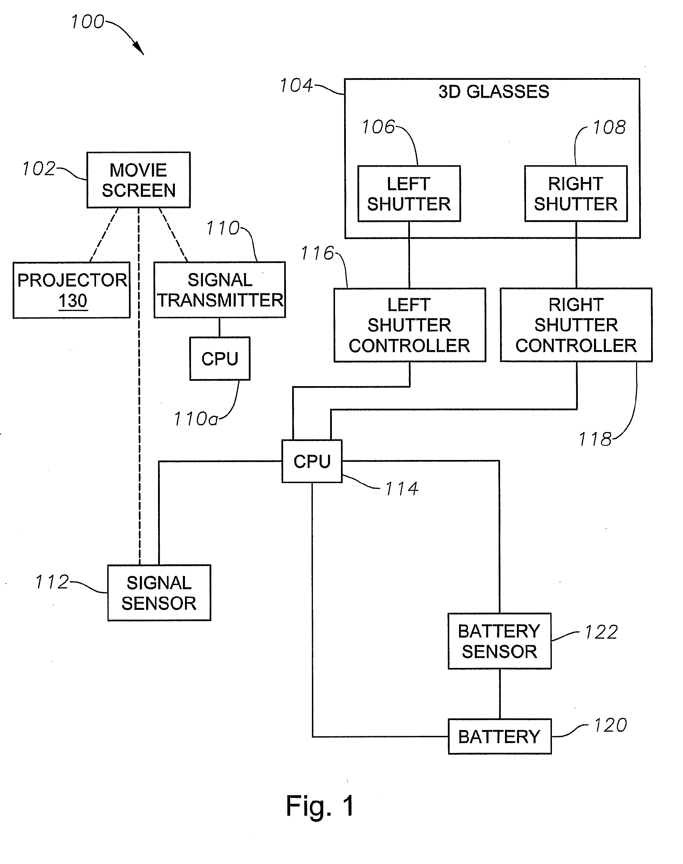

Referring initially to Fig. 1, a system 100 for viewing a three dimensional ("3D") movie on a movie screen 102 includes a pair of 3D glasses 104 having a left shutter 106 and a right shutter 108. In an exemplary embodiment, the 3D glasses 104 include a frame and the shutters, 106 and 108, are provided as left and right viewing lenses mounted and supported within the frame.

In an exemplary embodiment, the shutters, 106 and 108, are liquid crystal cells that open when the cell goes from opaque to clear, and the cell closes when the cell goes from clear back to opaque. Clear, in this case, is defined as transmitting enough light for a user of the 3D glasses 104 to see an image projected on the movie screen 102. In an exemplary embodiment, the user of the 3D glasses 104 may be able to see the image projected on the movie screen 102 when the liquid crystal cells of the shutters, 106 and/or 108, of the 3D glasses 104 become 25-30 percent transmissive. Thus, the liquid crystal cells of a shutter, 106 and/or 108, is considered to be open when the liquid crystal cell becomes 25-30 percent transmissive. The liquid crystal cells of a shutter, 106 and/or 108, may also transmit more than 25-30 percent of light when the liquid crystal cell is open.

In an exemplary embodiment, the shutters, 106 and 108, of the 3D glasses 104 include liquid crystal cells having a PI-cell configuration utilizing a low viscosity, high index of refraction liquid crystal material such as, for example, Merck MLC6080. In an exemplary embodiment, the PI-cell thickness is adjusted so that in its relaxed state it forms a ½-wave retarder. In an exemplary embodiment, the PI-cell is made thicker so that the ½-wave state is achieved at less than full relaxation. One of the suitable liquid crystal materials is MLC6080 made by Merck, but any liquid crystal with a sufficiently high optical anisotropy, low rotational viscosity and/or birefringence may be used. The shutters, 106 and 108, of the 3D glasses 104 may also use a small cell gap, including, for example, a gap of 4 microns. Furthermore, a liquid crystal with a sufficiently high index of refraction and low viscosity may also be suitable for use in the shutters, 106 and 108, of the 3D glasses 104.

In an exemplary embodiment, the Pi-cells of the shutters, 106 and 108, of the 3D glasses 104 work on an electrically controlled birefringence ("ECB") principle. Birefringence means that the Pi-cell has different refractive indices, when no voltage or a small catching voltage is applied, for light with polarization parallel to the long dimension of the Pi-cell molecules and for light with polarization perpendicular to long dimension, no and ne. The difference no-ne=Δn is optical anisotropy. Δn×d, where d is thickness of the cell, is optical thickness. When Δn×d=1/2λ the Pi-cell is acting as a ½ wave retarder when cell is placed at 45° to the axis of the polarizer. So optical thickness is important not just thickness. In an exemplary embodiment, the Pi-cells of the shutters, 106 and 108, of the 3D glasses 104 are made optically too thick, meaning that Δn×d>1/2λ. The higher optical anisotropy means thinner cell - faster cell relaxation. In an exemplary embodiment, when voltage is applied the molecules' of the Pi-cells of the shutters, 106 and 108, of the 3D glasses 104 long axes are perpendicular to substrates - homeotropic alignment, so there is no birefringence in that state, and, because the polarizers have transmitting axes crossed, no light is transmitted. In an exemplary embodiment, Pi-cells with polarizers crossed are said to work in normally white mode and transmit light when no voltage is applied. Pi-cells with polarizers' transmitting axes oriented parallel to each other work in a normally black mode, i.e., they transmit light when a voltage is applied.

In an exemplary embodiment, when high voltage is removed from the Pi-cells, the opening of the shutters, 106 and/or 108, start. This is a relaxation process, meaning that liquid crystal ("LC") molecules in the Pi-cell go back to the equilibrium state, i.e. molecules align with the alignment layer, i.e. the rubbing direction of the substrates. The Pi-cell's relaxation time depends on the cell thickness and rotational viscosity of the fluid.

In general, the thinner the Pi-cell, the faster the relaxation. In an exemplary embodiment, the important parameter is not the Pi-cell gap, d, itself, but rather the product Δnd, where Δn is the birefringence of the LC fluid. In an exemplary embodiment, in order to provide the maximum light transmission in its open state, the head-on optical retardation of the Pi-cell, Δnd, should be λ/2. Higher birefringence allows for thinner cell and so faster cell relaxation. In order to provide the fastest possible switching fluids with low rotational viscosity and higher birefringence - Δn (such as MLC 6080 by EM industries) are used.

In an exemplary embodiment, in addition to using switching fluids with low rotational viscosity and higher birefringence in the Pi-cells, to achieve faster switching from opaque to clear state, the Pi-cells are made optically too thick so that the ½-wave state is achieved at less than full relaxation. Normally, the Pi-cell thickness is adjusted so that in its relaxed state it forms a ½-wave retarder. However, making the Pi-cells optically too thick so that the ½-wave state is achieved at less than full relaxation results in faster switching from opaque to clear state. In this manner, the shutters 106 and 108 of the exemplary embodiments provide enhanced speed in opening versus prior art LC shutter devices that, in an exemplary experimental embodiment, provided unexpected results.

In an exemplary embodiment, a catch voltage may then be used to stop the rotation of the LC molecules in the Pi-cell before they rotate too far. By stopping the rotation of the LC molecules in the Pi-cell in this manner, the light transmission is held at or near its peak value.

In an exemplary embodiment, the system 100 further includes a signal transmitter 110, having a central processing unit ("CPU") 110a, that transmits a signal toward the movie screen 102. In an exemplary embodiment, the transmitted signal is reflected off of the movie screen 102 towards a signal sensor 112. The transmitted signal could be, for example, one or more of an infrared ("IR") signal, a visible light signal, multiple colored signal, or white light. In some embodiments, the transmitted signal is transmitted directly toward the signal sensor 112 and thus, may not reflected off of the movie screen 102. In some embodiments, the transmitted signal could be, for example, a radio frequency ("RF") signal that is not reflected off of the movie screen 102.

The signal sensor 112 is operably coupled to a CPU 114. In an exemplary embodiment, the signal sensor 112 detects the transmitted signal and communicates the presence of the signal to the CPU 114. The CPU 110a and the CPU 114 may, for example, each include a general purpose programmable controller, an application specific intergrated circuit ("ASIC"), an analog controller, a localized controller, a distributed controller, a programmable state controller, and/or one or more combinations of the aforementioned devices.

The CPU 114 is operably coupled to a left shutter controller 116 and a right shutter controller 118 for monitoring and controlling the operation of the shutter controllers. In an exemplary embodiment, the left and right shutter controllers, 116 and 118, are in turn operably coupled to the left and right shutters, 106 and 108, of the 3D glasses 104 for monitoring and controlling the operation of the left and right shutters. The shutter controllers, 116 and 118, may, for example, include a general purpose programmable controller, an ASIC, an analog controller, an analog or digital switch, a localized controller, a distributed controller, a programmable state controller, and/or one or more combinations of the aforementioned devices.

A battery 120 is operably coupled to at least the CPU 114 and provides power for operating one or more of the CPU, the signal sensor 112, and the shutter controllers, 116 and 118, of the 3D glasses 104. A battery sensor 122 is operably coupled to the CPU 114 and the batter 120 for monitoring the amount of power remaining in the battery.

In an exemplary embodiment, the CPU 114 may monitor and/or control the operation of one or more of the signal sensor 112, the shutter controllers, 116 and 118, and the battery sensor 122. Alternatively, or in addition, one or more of the signal sensor 112, the shutter controllers, 116 and 118, and the battery sensor 122 may include a separate dedicated controller and/or a plurality of controllers, which may or may not also monitor and/or control one or more of signal sensor 112, the shutter controllers, 116 and 118, and the battery sensor 122. Alternatively, or in addition, the operation of the CPU 114 may at least be partially distributed among one or more of the other elements of the 3D glasses 104.

In an exemplary embodiment, the signal sensor 112, the CPU 114, the shutter controllers, 116 and 118, the battery 120, and the battery sensor 122 are mounted and supported within the frame of the 3D glasses 104. If the movie screen 102 is positioned within a movie theater, then a projector 130 may be provided for projecting one or more video images on the movie screen. In an exemplary embodiment, the signal transmitter 110 may be positioned proximate, or be included within, the projector 130. In an exemplary embodiment, the projector 130 may include, for example, one or more of an electronic projector device, an electromechanical projector device, a film projector, a digital video projector, or a computer display for displaying one or more video images on the movie screen 102. Alternatively, or in addition to the movie screen 102, a television ("TV") or other video display device may also be used such as, for example, a flat screen TV, a plasma TV, an LCD TV, or other display device for displaying images for viewing by a user of the 3D glasses that may, for example, include the signal transmitter 110, or an additional signal transmitter for signaling to the 3D glasses 104, that may be positioned proximate and/or within the display surface of the display device.

In an exemplary embodiment, during operation of the system 100, the CPU 114 controls the operation of the shutters, 106 and 108, of the 3D glasses 104 as a function of the signals received by the signal sensor 112 from the signal transmitter 110 and/or as a function of signals received by the CPU from the battery sensor 122. In an exemplary embodiment, the CPU 114 may direct the left shutter controller 116 to open the left shutter 106 and/or direct the right shutter controller 118 to open the right shutter 108.

In an exemplary embodiment, the shutter controllers, 116 and 118, control the operation of the shutters, 106 and 108, respectively, by applying a voltage across the liquid crystal cells of the shutter. In an exemplary embodiment, the voltage applied across the liquid crystal cells of the shutters, 106 and 108, alternates between negative and positive. In an exemplary embodiment, the liquid crystal cells of the shutters, 106 and 108, open and close the same way regardless of whether the applied voltage is positive or negative. Alternating the applied voltage prevents the material of the liquid crystal cells of the shutters, 106 and 108, from plating out on the surfaces of the cells.

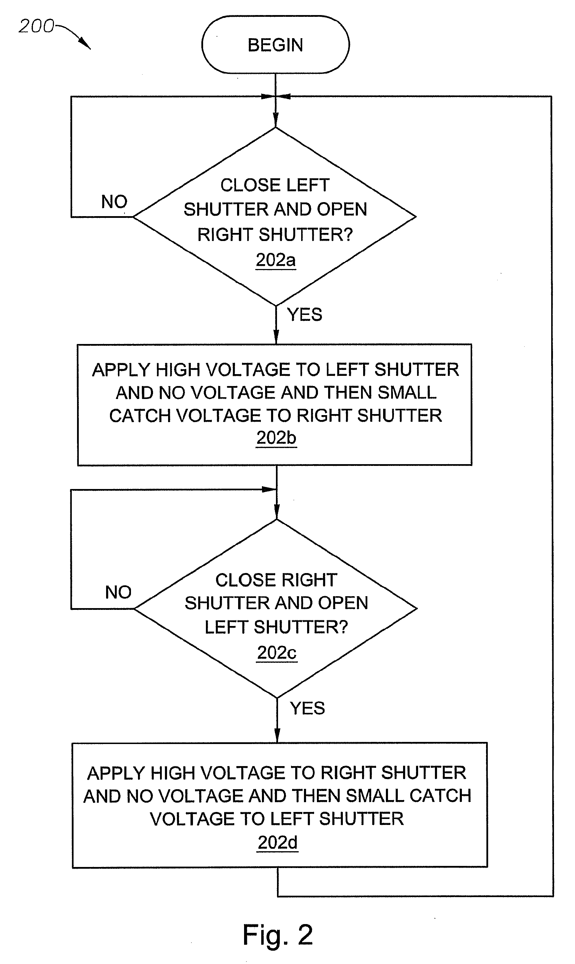

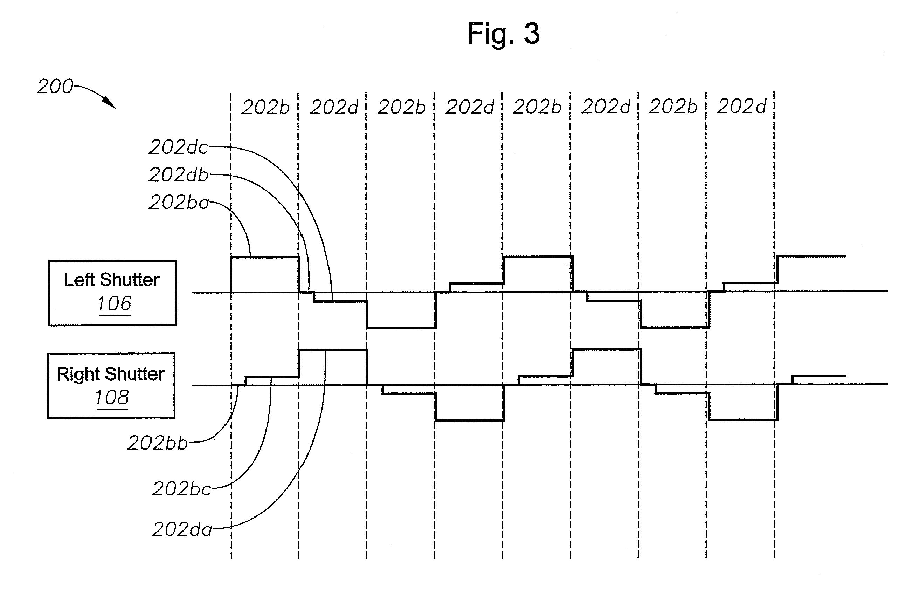

In an exemplary embodiment, during operation of the system 100, as illustrated in Figs. 2 and 3, the system may implement a left-right shutter method 200 in which, if in 202a, the left shutter 106 will be closed and the right shutter 108 will be opened, then in 202b, a high voltage 202ba is applied to the left shutter 106 and no voltage 202bb followed by a small catch voltage 202bc are applied to the right shutter 108 by the shutter controllers, 116 and 118, respectively. In an exemplary embodiment, applying the high voltage 202ba to the left shutter 106 closes the left shutter, and applying no voltage to the right shutter 108 starts opening the right shutter. In an exemplary embodiment, the subsequent application of the small catch voltage 202bc to the right shutter 108 prevents the liquid crystals in the right shutter from rotating too far during the opening of the right shutter 108. As a result, in 202b, the left shutter 106 is closed and the right shutter 108 is opened.

If in 202c, the left shutter 106 will be opened and the right shutter 108 will be closed, then in 202d, a high voltage 202da is applied to the right shutter 108 and no voltage 202db followed by a small catch voltage 202dc are applied to the left shutter 106 by the shutter controllers, 118 and 116, respectively. In an exemplary embodiment, applying the high voltage 202da to the right shutter 108 closes the right shutter, and applying no voltage to the left shutter 106 starts opening the left shutter. In an exemplary embodiment, the subsequent application of the small catch voltage 202dc to the left shutter 106 prevents the liquid crystals in the left shutter from rotating too far during the opening of the left shutter 106. As a result, in 202d, the left shutter 106 is opened and the right shutter 108 is closed.

In an exemplary embodiment, the magnitude of the catch voltage used in 202b and 202d ranges from about 10 to 20 % of the magnitude of the high voltage used in 202b and 202d.

In an exemplary embodiment, during the operation of the system 100, during the method 200, during the time that the left shutter 106 is closed and the right shutter 108 is open in 202b, a video image is presented for the right eye, and during the time that the left shutter 106 is opened and the right shutter 108 is closed in 202d, a video image is presented for the left eye. In an exemplary embodiment, the video image may be displayed on one or more of the movie theater screen 102, an LCD television screen, a digital light processing ("DLP") television, a DLP projector, a plasma screen, and the like.

In an exemplary embodiment, during the operation of the system 100, the CPU 114 will direct each shutter, 106 and 108, to open at the same time the image intended for that shutter, and viewer eye, is presented. In an exemplary embodiment, a synchronization signal may be used to cause the shutters, 106 and 108, to open at the correct time.

In an exemplary embodiment, a synchronization signal is transmitted by the signal transmitter 110 and the synchronization signal could, for example, include an infrared light. In an exemplary embodiment, the signal transmitter 110 transmits the synchronization signal toward a reflective surface and the surface reflects the signal to the signal sensor 112 positioned and mounted within the frame of the 3D glasses 104. The reflective surface could, for example, be the movie theater screen 102 or another reflective device located on or near the movie screen such that the user of the 3D glasses 104 is generally facing the reflector while watching the movie. In an exemplary embodiment, the signal transmitter 110 may send the synchronization signal directly to the sensor 112. In an exemplary embodiment, the signal sensor 112 may include a photo diode mounted and supported on the frame of the 3D glasses 104.

The synchronization signal may provide a pulse at the beginning of each left-right lens shutter sequence 200. The synchronization signal could be more frequent, for example providing a pulse to direct the opening of each shutter, 106 or 108. The synchronization signal could be less frequent, for example providing a pulse once per shutter sequence 200, once per five shutter sequences, or once per 100 shutter sequences. The CPU 114 may have an internal timer to maintain proper shutter sequencing in the absence of a synchronization signal.

In an exemplary embodiment, the combination of viscous liquid crystal material and narrow cell gap in the shutters, 106 and 108, may result in a cell that is optically too thick. The liquid crystal in the shutters, 106 and 108, blocks light transmission when voltage is applied. Upon removing the applied voltage, the molecules in the liquid crystals in the shutters, 106 and 108, rotate back to the orientation of the alignment layer. The alignment layer orients the molecules in the liquid crystal cells to allow light transmission. In a liquid crystal cell that is optically too thick, the liquid crystal molecules rotate rapidly upon removal of power and thus rapidly increase light transmission but then the molecules rotate too far and light transmission decreases. The time from when the rotation of the liquid crystal cell molecules starts until the light transmission stabilizes, i.e. liquid crystal molecules rotation stops, is the true switching time.

In an exemplary embodiment, when the shutter controllers, 116 and 118, apply the small catch voltage to the shutters, 106 and 108, this catch voltage stops the rotation of the liquid crystal cells in the shutters before they rotate too far. By stopping the rotation of the molecules in the liquid crystal cells in the shutters, 106 and 108, before they rotate too far, the light transmission through the molecules in the liquid crystal cells in the shutters is held at or near its peak value. Thus, the effective switching time is from when the liquid crystal cells in the shutters, 106 and 108, start their rotation until the rotation of the molecules in the liquid crystal cells is stopped at or near the point of peak light transmission.

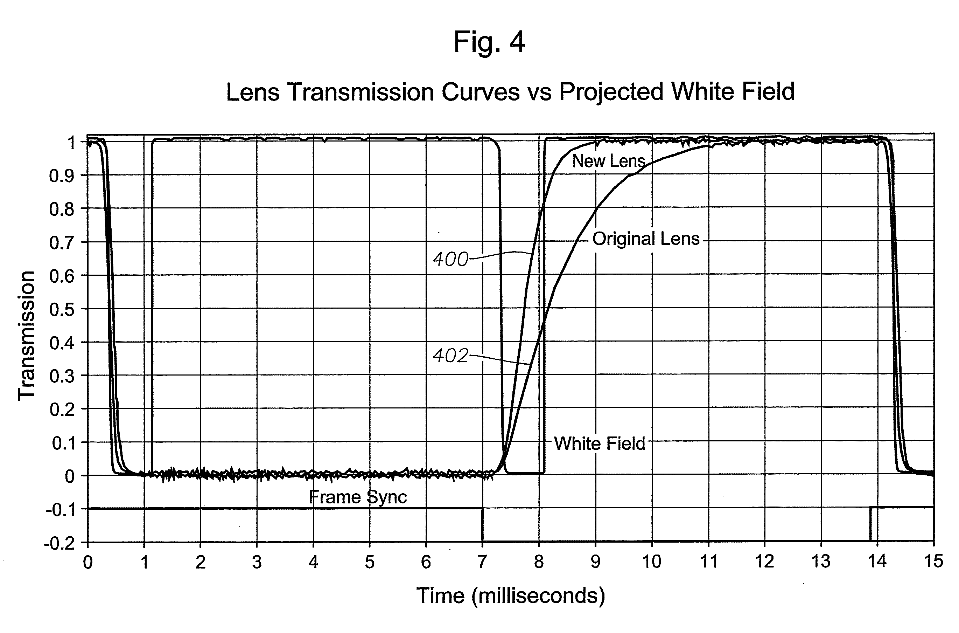

Referring now to Fig. 4, the transmission refers to the amount of light transmitted through a shutter, 106 or 108, wherein a transmission value of 1 refers to the point of maximum, or a point near the maximum, light transmission through the liquid crystal cell of the shutter, 106 or 108. Thus, for a shutter, 106 or 108, to be able to transmit its maximum of 37% of light, a transmission level of 1 indicates that the shutter, 106 or 108, is transmitting its maximum, i.e., 37%, of available light. Of course, depending upon the particular liquid crystal cell used, the maximum amount of light transmitted by a shutter, 106 or 108, could be any amount, including, for example, 33%, 30%, or significantly more or less.

As illustrated in Fig. 4, in an exemplary experimental embodiment, a shutter, 106 or 108, was operated and the light transmission 400 was measured during operation of the method 200. In the exemplary experimental embodiment of the shutter, 106 or 108, the shutter closed in approximately 0.5 milliseconds, then remained closed through the first half of the shutter cycle for about 7 milliseconds, then the shutter was opened to about 90% of the maximum light transmission in about one millisecond, and then the shutter remained open for about 7 milliseconds and then was closed. As a comparison, a commercially available shutter was also operated during the operation of the method 200 and exhibited the light transmission 402. The light transmission of the shutter, 106 and 108, of the present exemplary embodiments, during the operation of the method 200, reached about 25-30 percent transmissive, i.e., about 90% of the maximum light transmission, as shown in Fig. 4, in about one millisecond whereas the other shutter only reached about 25-30 percent transmissive, i.e., about 90% of the maximum light transmission, as shown in Fig. 4, after about 2.5 milliseconds. Thus, the shutters, 106 and 108, of the present exemplary embodiments, provided a significantly more responsive operation than commercially available shutters. This was an unexpected result.

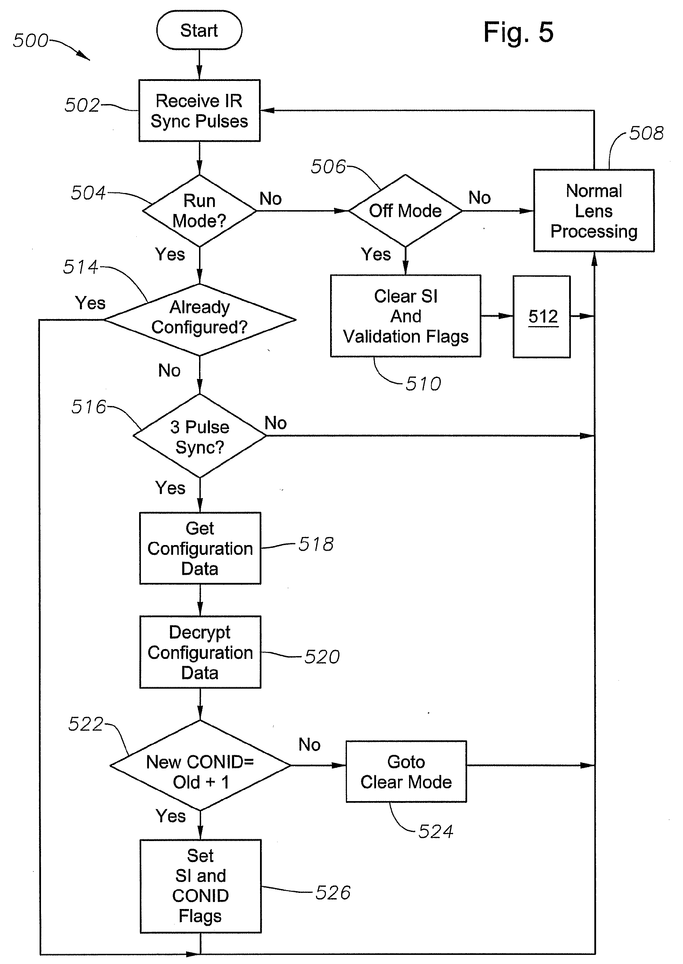

Referring now to Fig. 5, in an exemplary embodiment, the system 100 implements a method 500 of operation in which, in 502, the signal sensor 114 receives an infrared synchronization ("sync") pulse from the signal transmitter 110. If the 3D glasses 104 are not in the RUN MODE in 504, then the CPU 114 determines if the 3D glasses 104 are in the OFF MODE in 506. If the CPU 114 determines that the 3D glasses 104 are not in the OFF MODE in 506, then the CPU 114 continues normal processing in 508 and then returns to 502. If the CPU 114 determines that the 3D glasses 104 are in the OFF MODE in 506, then the CPU 114 clears the sync inverter ("SI") and validation flags in 510 to prepare the CPU 114 for the next encrypted signals, initiates a warm up sequence for the shutters, 106 and 108, in 512, and then proceeds with normal operations 508 and returns to 502.

If the 3D glasses 104 are in the RUN MODE in 504, then the CPU 114 determines whether the 3D glasses 104 are already configured for encryption in 514. If the 3D glasses 104 are already configured for encryption in 514, then the CPU 114 continues normal operations in 508 and proceeds to 502. If the 3D glasses 104 are not already configured for encryption in 514, then the CPU 114 checks to determine if the incoming signal is a three pulse sync signal in 516. If the incoming signal is not a three pulse sync signal in 516, then the CPU 114 continues normal operations in 508 and proceeds to 502. If the incoming signal is a three pulse sync signal in 516, then the CPU 114 receives configuration data from the signal transmitter 110 in 518 using the signal sensor 112. The CPU 114 then decrypts the received configuration data to determine if it is valid in 520. If the received configuration data is valid in 520, then the CPU 114 checks to see if the new configuration ID ("CONID") matches the previous CONID in 522. In an exemplary embodiment, the previous CONID may be stored in a memory device such as, for example, a nonvolatile memory device, operably coupled to the CPU 114 during the manufacture or field programming of the 3D glasses 104. If the new CONID does not match the previous CONID in 522, then the CPU 114 directs the shutters, 106 and 108, of the 3D glasses 104 to go into CLEAR MODE in 524. If the new CONID does match the previous CONID, in 522, then the CPU 114 sets the Sl and CONID flags to trigger the NORMAL MODE shutter sequence for viewing three dimensional images in 526.

In an exemplary embodiment, in the RUN or NORMAL MODE, the 3D glasses 104 are fully operational. In an exemplary embodiment, in the OFF MODE, the 3D glasses are not operational. In an exemplary embodiment, in the NORMAL MODE, the 3D glasses are operational and may implement the method 200.

In an exemplary embodiment, the signal transmitter 110 may be located near the theater projector 130. In an exemplary embodiment, the signal transmitter 110, among other functions, sends a synchronization signal ("sync signal") to the signal sensor 112 of the 3D glasses 104. The signal transmitter 110 may instead, or in addition to, receive a synchronization signal from the theater projector 130 and/or any display and/or any emitter device. In an exemplary embodiment, an encryption signal may be used to prevent the 3D glasses 104 from operating with a signal transmitter 110 that does not contain the correct encryption signal. Furthermore, in an exemplary embodiment, the encrypted transmitter signal will not properly actuate 3D glasses 104 that are not equipped to receive and process the encrypted signal. In an exemplary embodiment, the signal transmitter 110 may also send encryption data to the 3D glasses 104.

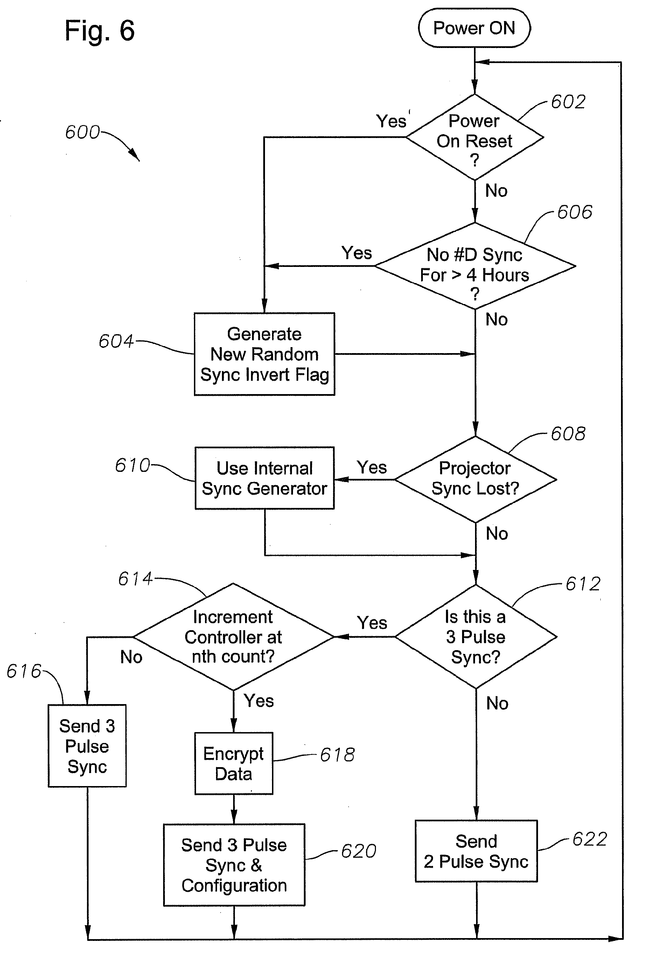

Referring now to Fig. 6, in an exemplary embodiment, during operation, the system 100 implements a method 600 of operation in which, in 602, the system determines if the signal transmitter 110 was reset because the power just came on in 602. If the signal transmitter 110 was reset because the power just came on in 602, then the signal transmitter generates a new random sync invert flag in 604. If the signal transmitter 110 did not have a power on reset condition in 602, then the CPU 110a of the signal transmitter 110 determines whether the same sync encoding has been used for more than a predetermined amount of time in 606. In an exemplary embodiment, the predetermined time in 606 could be four hours or the length of a typical movie or any other suitable time. If the same sync encoding has been used for more than four hours in 606, then the CPU 110a of the signal transmitter 110 generates a new sync invert flag in 604.

The CPU 110a of the signal transmitter 110 then determines if the signal transmitter is still receiving a signal from the projector 130 in 608. If the signal transmitter 110 is not still receiving a signal from the projector 130 in 608, then the signal transmitter 110 may use its own internal sync generator to continue sending sync signals to the signal sensor 112 at the proper time in 610.

During operation, the signal transmitter 110 may, for example, alternate between two-pulse sync signals and three-pulse sync signals. In an exemplary embodiment, a two-pulse sync signal directs the 3D glasses 104 to open the left shutter 108, and a three-pulse sync signal directs the 3D glasses 104 to open the right shutter 106. In an exemplary embodiment, the signal transmitter 110 may send an encryption signal after every n^{th} signal.

If the signal transmitter 110 determines that it should send a three-pulse sync signal in 612, then the signal transmitter determines the signal count since the last encryption cycle in 614. In an exemplary embodiment, the signal transmitter 110 sends an encryption signal only once out of every ten signals. However, in an exemplary embodiment, there could be more or less signal cycles between encryption signals. If the CPU 110a of the signal transmitter 110 determines this is not the n^{th} three-pulse sync in 614, then the CPU directs the signal transmitter to send a standard three pulse sync signal in 616. If the sync signal is the n^{th} three-pulse signal, then the CPU 110a of the signal transmitter 110 encrypts the data in 618 and sends a three pulse sync signal with embedded configuration data in 620. If the signal transmitter 110 determines that it should not send a three-pulse sync signal in 612, then the signal transmitter sends a two-pulse sync signal in 622.

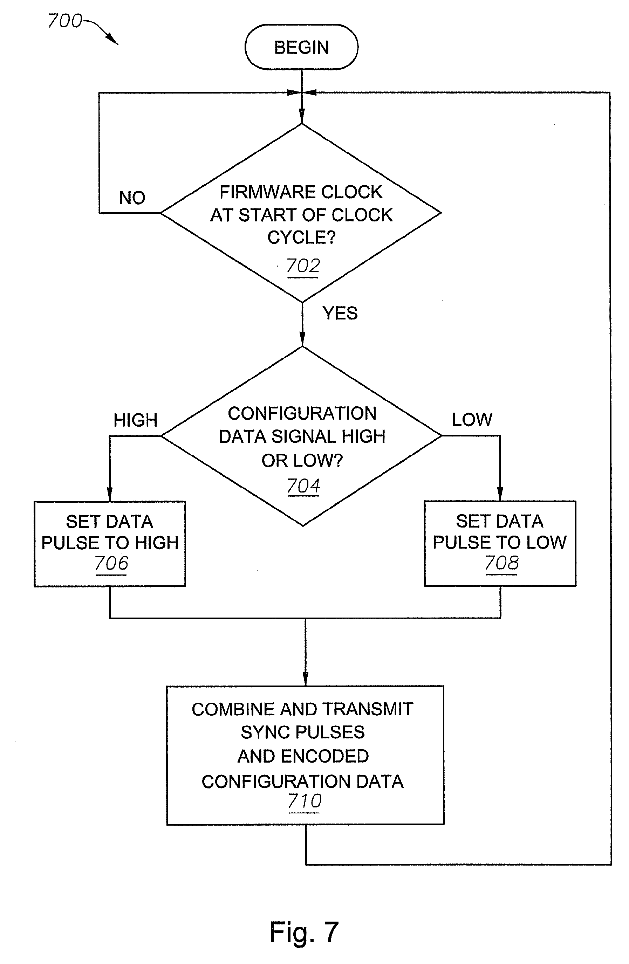

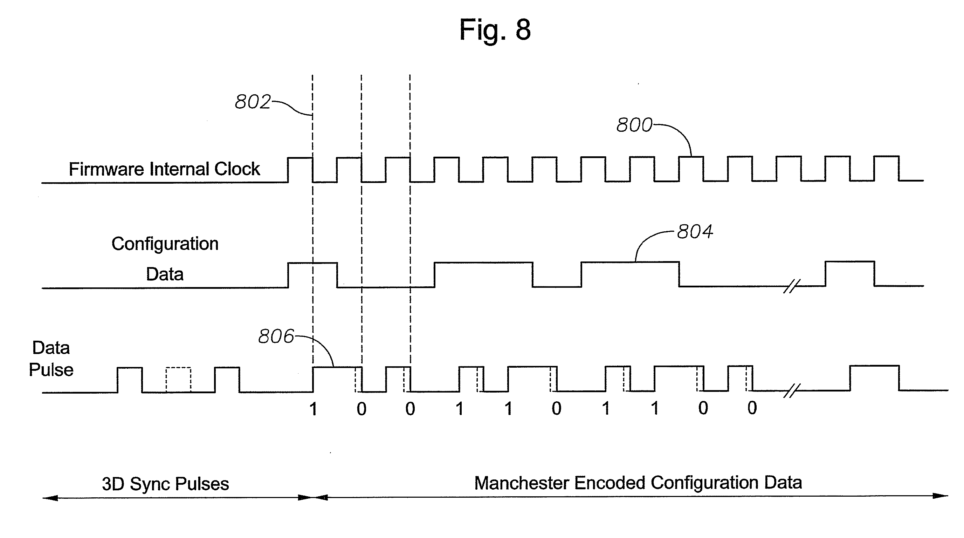

Referring now to Figs. 7 and 8, in an exemplary embodiment, during operation of the system 100, the signal transmitter 110 implements a method 700 of operation in which the sync pulses are combined with encoded configuration data and then transmitted by the signal transmitter 110. In particular, the signal transmitter 110 includes a firmware internal clock that generates a clock signal 800. In 702, the CPU 110a of the signal transmitter 110 determines if the clock signal 800 is at the beginning of the clock cycle 802. If the CPU 110a of the signal transmitter 110 determines that the clock signal 800 is at the beginning of the clock cycle in 702, then the CPU of the signal transmitter checks to see if a configuration data signal 804 is high or low in 704. If the configuration data signal 804 is high, then a data pulse signal 806 is set to a high value in 706. If the configuration data signal 804 is low, then the data pulse signal 806 is set to a low value in 708. In an exemplary embodiment, the data pulse signal 806 may already include the sync signal. Thus, the data pulse signal 806 is combined with the synch signal in 710 and transmitted by the signal transmitter 110 in 710.

In an exemplary embodiment, the encrypted form of the configuration data signal 804 may be sent during every sync signal sequence, after a predetermined number of sync signal sequences, embedded with the sync signal sequences, overlayed with the sync signal sequences, or combined with the sync signal sequences - before or after the encryption operation. Furthermore, the encrypted form of the configuration data signal 804 could be sent on either the two or three pulse sync signal, or both, or signals of any other number of pulses. In addition, the encrypted configuration data could be transmitted between the transmission of the sync signal sequence with or without encrypting the sync signals on either end of the transmission.

In an exemplary embodiment, encoding the configuration data signal 804, with or without the sync signal sequence, may be provided, for example, using Manchester encoding.

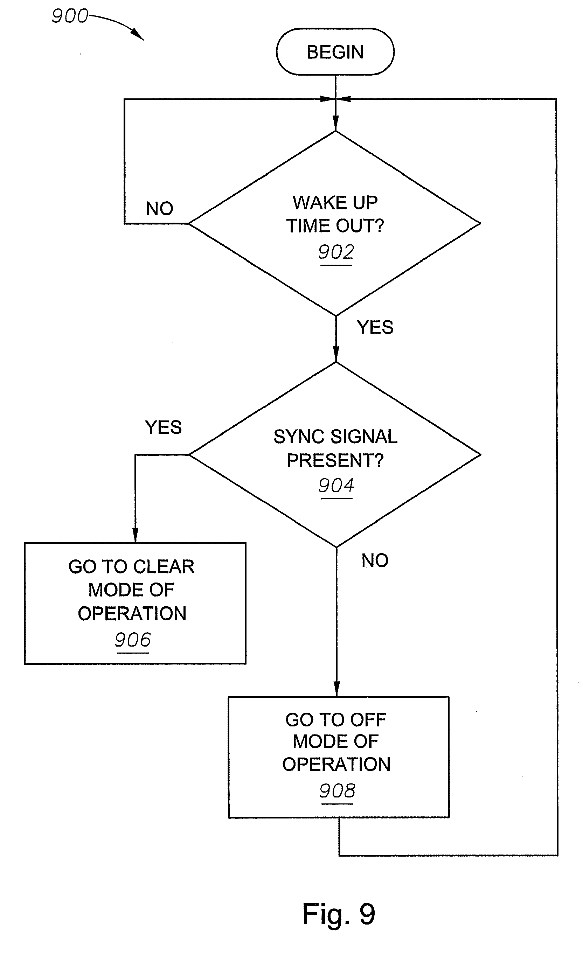

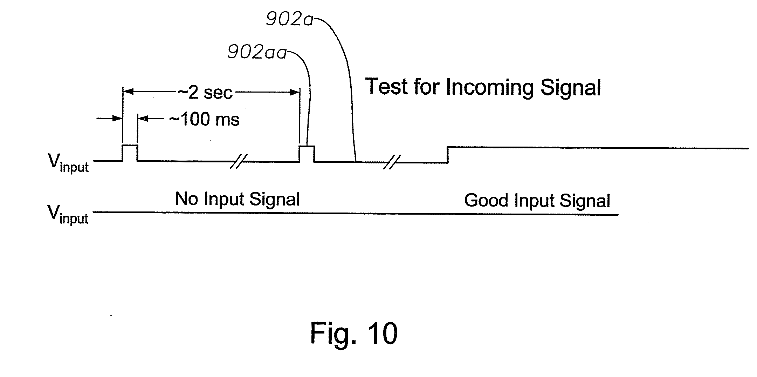

Referring now to Figs. 2, 5, 8, 9 and 10, in an exemplary embodiment, during the operation of the system 100, the 3D glasses 104 implement a method 900 of operation in which, in 902, the CPU 114 of the 3D glasses 104 checks for a wake up mode time out. In an exemplary embodiment, the presence of a wake up mode time out in 902 is provided by a clock signal 902a having a high pulse 902aa with a duration of 100 milliseconds that may occur every 2 seconds, or other predetermined time period. In an exemplary embodiment, the presence of the high pulse 902aa indicates a wake up mode time out.

If the CPU 114 detects a wake up time out in 902, then the CPU checks for the presence or absence of a sync signal using the signal sensor 112 in 904. If the CPU 114 detects a sync signal in 904, then the CPU places the 3D glasses 104 in a CLEAR MODE of operation in 906. In an exemplary embodiment, in the CLEAR MODE of operation, the 3D glasses implement, at least portions of, one or more of the methods 200 and 500, receiving sync pulses, and/or processing configuration data 804. In an exemplary embodiment, in the CLEAR mode of operation, the 3D glasses may provide at least the operations of the method 1300, described below.

If the CPU 114 does not detect a sync signal in 904, then the CPU places the 3D glasses 104 in an OFF MODE of operation in 908 and then, in 902, the CPU checks for a wake up mode time out. In an exemplary embodiment, in the OFF MODE of operation, the 3D glasses do not provide the features of NORMAL or CLEAR mode of operations.

In an exemplary embodiment, the method 900 is implemented by the 3D glasses 104 when the 3D glasses are in either the OFF MODE or the CLEAR MODE.

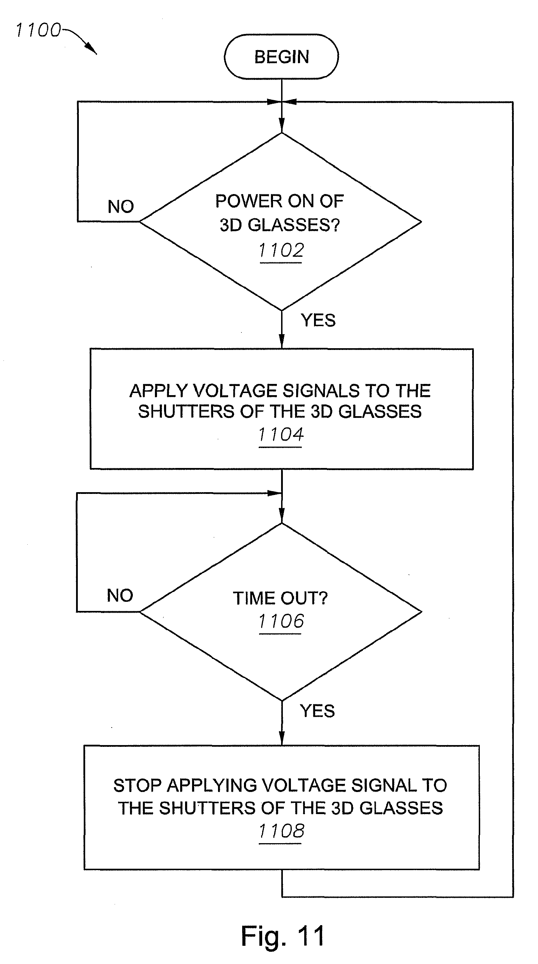

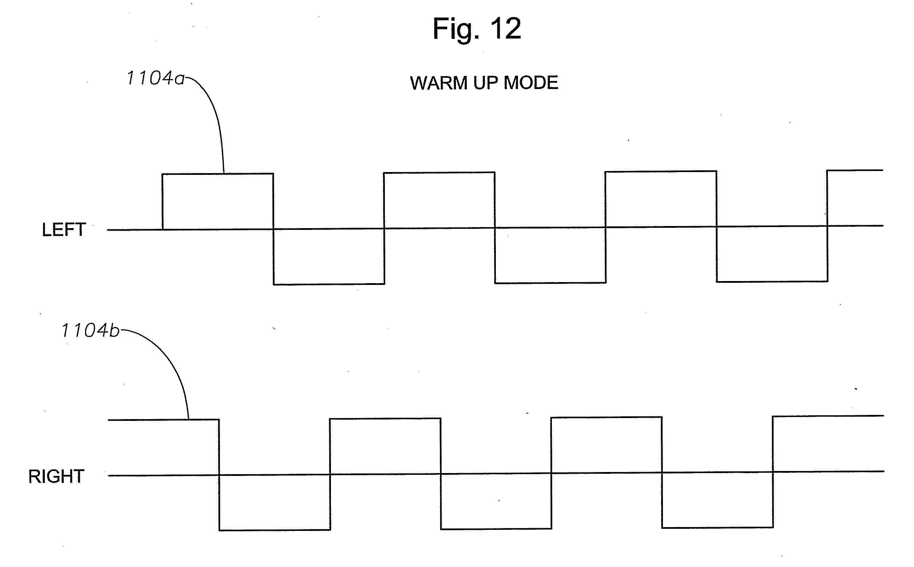

Referring now to Figs. 11 and 12, in an exemplary embodiment, during operation of the system 100, the 3D glasses 104 implement a warm up method 1100 of operation in which, in 1102, the CPU 114 of the 3D glasses checks for a power on of the 3D glasses. In an exemplary embodiment, the 3D glasses 104 may be powered on either by a user activating a power on switch or by an automatic wakeup sequence. In the event of a power on of the 3D glasses 104, the shutters, 106 and 108, of the 3D glasses may, for example, require a warm-up sequence. The molecules of the liquid crystal cells of the shutters, 106 and 108, that do not have power for a period of time may be in an indefinite state.

If the CPU 114 of the 3D glasses 104 detect a power on of the 3D glasses in 1102, then the CPU applies alternating voltage signals, 1104a and 1104b, to the shutters, 106 and 108, respectively, in 1104. In an exemplary embodiment, the voltage applied to the shutters, 106 and 108, is alternated between positive and negative peak values to avoid ionization problems in the liquid crystal cells of the shutter. In an exemplary embodiment, the voltage signals, 1104a and 1104b, are at least partly out of phase with one another. Alternatively, the voltage signals, 1104a and 1104b, may be in phase or completely out of phase. In an exemplary embodiment, one or both of the voltage signals, 1104a and 1104b, may be alternated between a zero voltage and a peak voltage. In an exemplary embodiment, other forms of voltage signals may be applied to the shutters, 106 and 108, such that the liquid crystal cells of the shutters are placed in a definite operational state. In an exemplary embodiment, the application of the voltage signals, 1104a and 1104b, to the shutters, 106 and 108, causes the shutters to open and close, either at the same time or at different times. Alternatively, the application of the voltage signals, 1104a and 1104b, causes the shutters, 106 and 108, to be closed all of the time.

During the application of the voltage signals, 1104a and 1104b, to the shutters, 106 and 108, the CPU 114 checks for a warm up time out in 1106. If the CPU 114 detects a warm up time out in 1106, then the CPU will stop the application of the voltage signals, 1104a and 1104b, to the shutters, 106 and 108, in 1108.

In an exemplary embodiment, in 1104 and 1106, the CPU 114 applies the voltage signals, 1104a and 1104b, to the shutters, 106 and 108, for a period of time sufficient to actuate the liquid crystal cells of the shutters. In an exemplary embodiment, the CPU 114 applies the voltage signals, 1104a and 1104b, to the shutters, 106 and 108, for a time out period of two seconds. In an exemplary embodiment, the maximum magnitude of the voltage signals, 1104a and 1104b, may be 14 volts. In an exemplary embodiment, the time out period in 1106 may be two seconds. In an exemplary embodiment, the maximum magnitude of the voltage signals, 1104a and 1104b, may be greater or lesser than 14 volts, and the time out period may be longer or shorter. In an exemplary embodiment, during the method 1100, the CPU 114 may open and close the shutters, 106 and 108, at a different rate than would be used for viewing a movie. In an exemplary embodiment, in 1104, the voltage signals, 1104a and 1104b, applied to the shutters, 106 and 108, alternate at a different rate than would be used for viewing a movie. In an exemplary embodiment, in 1104, the voltage signals applied to the shutters, 106 and 108, do not alternate and are applied constantly during the warm up time period and therefore the liquid crystal cells of the shutters may remain opaque for the entire warm up period. In an exemplary embodiment, the warm-up method 1100 may occur with or without the presence of a synchronization signal. Thus, the method 1100 provides a WARM UP mode of the operation for the 3D glasses 104. In an exemplary embodiment, after implementing the warm up method 1100, the 3D glasses are placed in a NORMAL RUN MODE of operation and may then implement the method 200. Alternatively, in an exemplary embodiment, after implementing the warm up method 1100, the 3D glasses are placed in a CLEAR MODE of operation and may then implement the method 1300, described below.

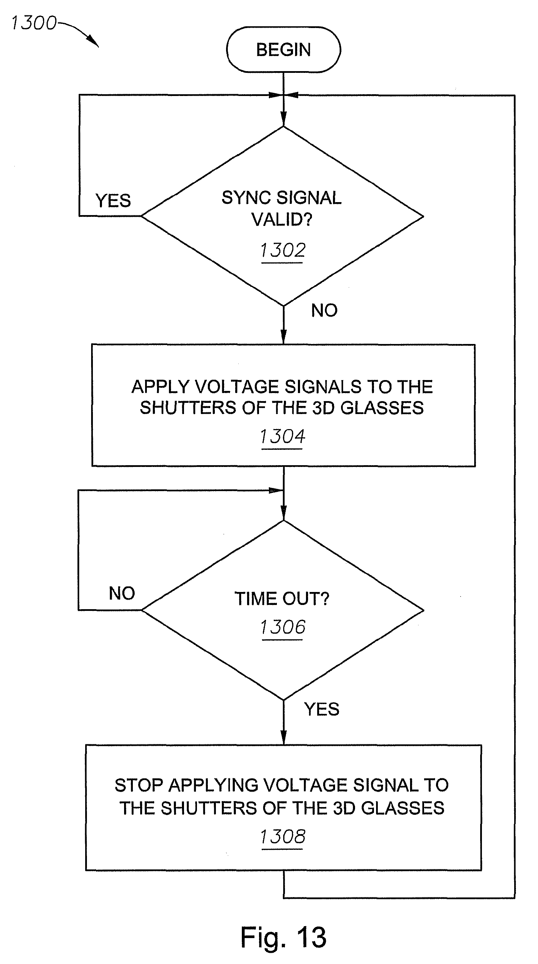

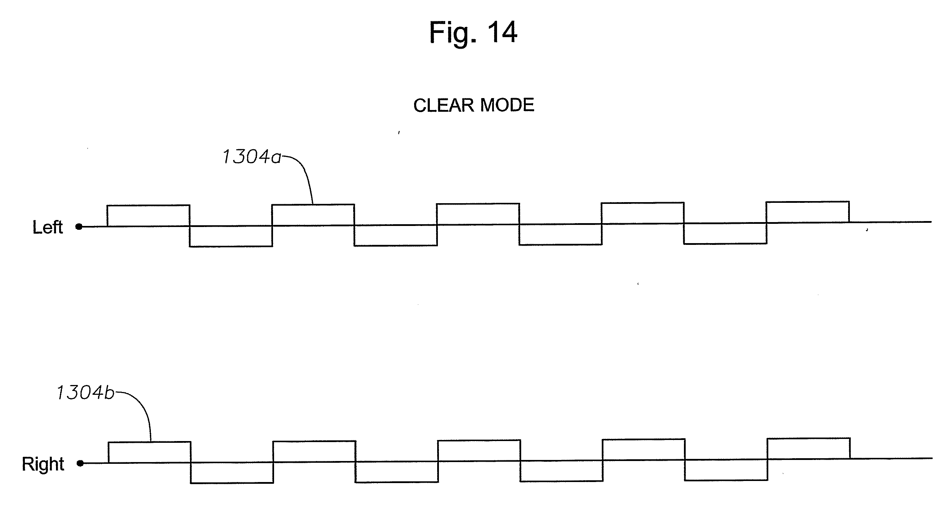

Referring now to Figs. 13 and 14, in an exemplary embodiment, during the operation of the system 100, the 3D glasses 104 implement a method 1300 of operation in which, in 1302, the CPU 114 checks to see if the sync signal detected by the signal sensor 112 is valid or invalid. If the CPU 114 determines that the sync signal is invalid in 1302, then the CPU applies voltage signals, 1304a and 1304b, to the shutters, 106 and 108, of the 3D glasses 104 in 1304. In an exemplary embodiment, the voltage applied to the shutters, 106 and 108, is alternated between positive and negative peak values to avoid ionization problems in the liquid crystal cells of the shutter. In an exemplary embodiment, one or both of the voltage signals, 1104a and 1104b, may be alternated between a zero voltage and a peak voltage. In an exemplary embodiment, other forms of voltage signals may be applied to the shutters, 106 and 108, such that the liquid crystal cells of the shutters remain open so that the user of the 3D glasses 104 can see normally through the shutters. In an exemplary embodiment, the application of the voltage signals, 1104a and 1104b, to the shutters, 106 and 108, causes the shutters to open.

During the application of the voltage signals, 1304a and 1304b, to the shutters, 106 and 108, the CPU 114 checks for a clearing time out in 1306. If the CPU 114 detects a clearing time out in 1306, then the CPU will stop the application of the voltage signals, 1304a and 1304b, to the shutters, 106 and 108, in 1308.

Thus, in an exemplary embodiment, if the 3D glasses 104 do not detect a valid synchronization signal, they may go to a clear mode of operation and implement the method 1300. In the clear mode of operation, in an exemplary embodiment, both shutters, 106 and 108, of the 3D glasses 104 remain open so that the viewer can see normally through the shutters of the 3D glasses. In an exemplary embodiment, a constant voltage is applied, alternating positive and negative, to maintain the liquid crystal cells of the shutters, 106 and 108, of the 3D glasses in a clear state. The constant voltage could, for example, be in the range of 2-3 volts, but the constant voltage could be any other voltage suitable to maintain reasonably clear shutters. In an exemplary embodiment, the shutters, 106 and 108, of the 3D glasses 104 may remain clear until the 3D glasses are able to validate an encryption signal. In an exemplary embodiment, the shutters, 106 and 108, of the 3D glasses may alternately open and close at a rate that allows the user of the 3D glasses to see normally.

Thus, the method 1300 provides a method of clearing the operation of the 3D glasses 104 and thereby provide a CLEAR MODE of operation.

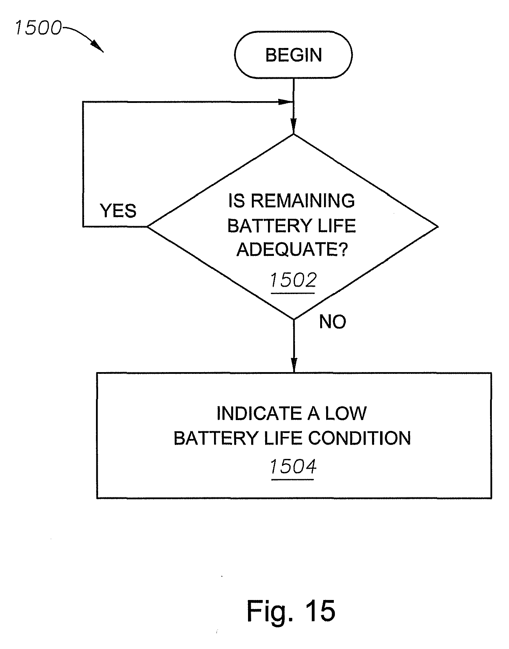

Referring now to Fig. 15, in an exemplary embodiment, during the operation of the system 100, the 3D glasses 104 implement a method 1500 of monitoring the battery 120 in which, in 1502, the CPU 114 of the 3D glasses uses the battery sensor 122 to determine the remaining useful life of the battery. If the CPU 114 of the 3D glasses determines that the remaining useful life of the battery 120 is not adequate in 1502, then the CPU provides an indication of a low battery life condition in 1504.

In an exemplary embodiment, an inadequate remaining battery life may, for example, be any period less than 3 hours. In an exemplary embodiment, an adequate remaining battery life may be preset by the manufacturer of the 3D glasses and/or programmed by the user of the 3D glasses.

In an exemplary embodiment, in 1504, the CPU 114 of the 3D glasses 104 will indicate a low battery life condition by causing the shutters, 106 and 108, of the 3D glasses to blink slowly, by causing the shutters to simultaneously blink at a moderate rate that is visible to the user of the 3D glasses, by flashing an indicator light, by generating an audible sound, and the like.

In an exemplary embodiment, if the CPU 114 of the 3D glasses 104 detects that the remaining battery life is insufficient to last for a specified period of time, then the CPU of the 3D glasses will indicate a low battery condition in 1504 and then prevent the user from turning on the 3D glasses.

In an exemplary embodiment, the CPU 114 of the 3D glasses 104 determines whether or not the remaining battery life is adequate every time the 3D glasses transition to the CLEAR MODE of operation.

In an exemplary embodiment, if the CPU 114 of the 3D glasses determines that the battery will last for at least the predetermined adequate amount of time, then the 3D glasses will continue to operate normally. Operating normally may include staying in the CLEAR MODE of operation for five minutes while checking for a valid signal from the signal transmitter 110 and then going to an OFF MODE wherein the 3D glasses 104 periodically wake up to check for a signal from the signal transmitter.

In an exemplary embodiment, the CPU 114 of the 3D glasses 104 checks for a low battery condition just before shutting off the 3D glasses. In an exemplary embodiment, if the battery 120 will not last for the predetermined adequate remaining life time, then the shutters, 106 and 108, will begin blinking slowly.

In an exemplary embodiment, if the battery 120 will not last for the predetermined adequate remaining life time, the shutters, 106 and/or 108, are placed into an opaque condition, i.e., the liquid crystal cells are closed, for two seconds and then placed into a clear condition, i.e., the liquid crystal cells are opened, for 1/10^{th} of a second. The time period that the shutters, 106 and/or 108, are closed and opened may be any time period.

In an exemplary embodiment, the 3D glasses 104 may check for a low battery condition at any time including during warm up, during normal operation, during clear mode, during power off mode, or at the transition between any conditions. In an exemplary embodiment, if a low battery life condition is detected at a time when the viewer is likely to be in the middle of a movie, the 3D glasses 104 may not immediately indicate the low battery condition.

In some embodiments, if the CPU 114 of the 3D glasses 104 detects a low battery level, the user will not be able to power the 3D glasses on.

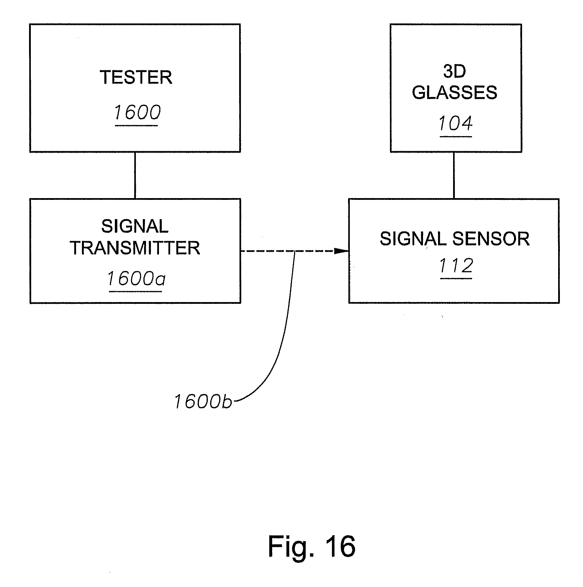

Referring now to Fig. 16, in an exemplary embodiment, a tester 1600 may be positioned proximate the 3D glasses 104 in order to verify that the 3D glasses are working properly. In an exemplary embodiment, the tester 1600 includes a signal transmitter 1600a for transmitting test signals 1600b to the signal sensor 112 of the 3D glasses. In an exemplary embodiment, the test signal 1600b may include a sync signal having a low frequency rate to cause the shutters, 106 and 108, of the 3D glasses 104 to blink at a low rate that is visible to the user of the 3D glasses. In an exemplary embodiment, a failure of the shutters, 106 and 108, to blink in response to the test signal 1600b may indicate a failure on the part of the 3D glasses 104 to properly operate.

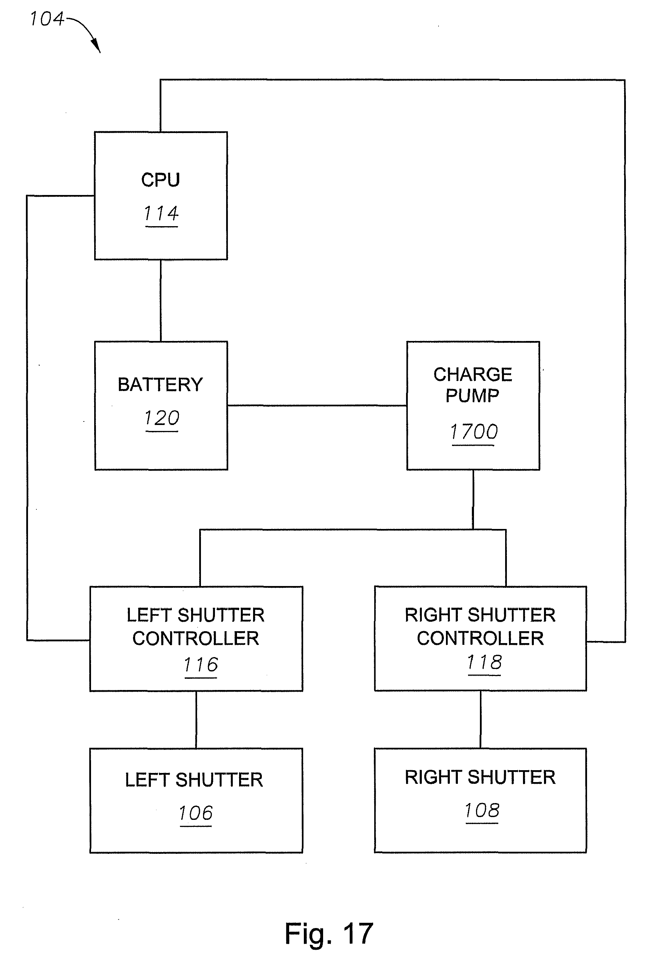

Referring now to Fig. 17, in an exemplary embodiment, the 3D glasses 104 further include a charge pump 1700 operably coupled to the CPU 114, the shutter controllers, 116 and 118, the battery 120 for converting the output voltage of the battery to a higher output voltage for use in operating the shutter controllers.

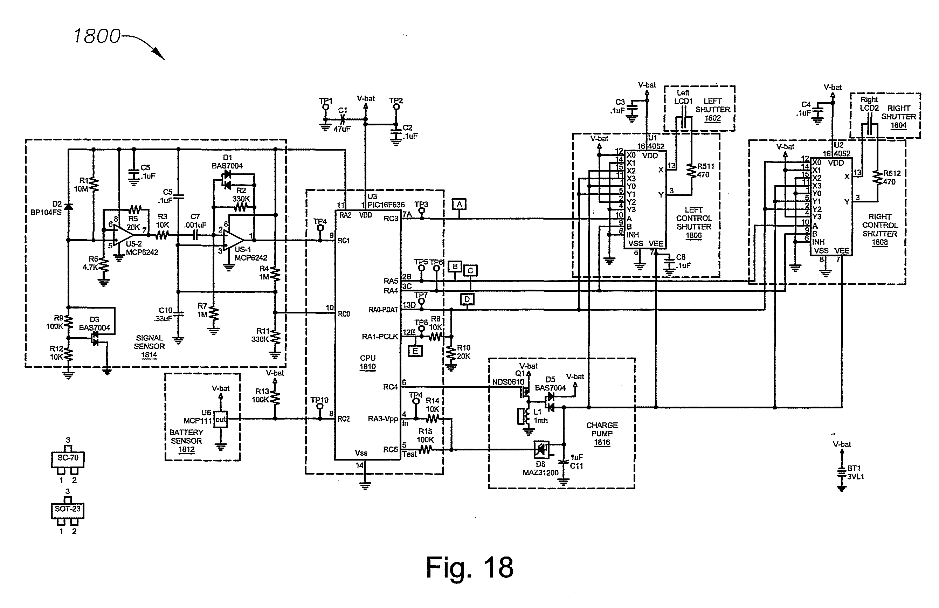

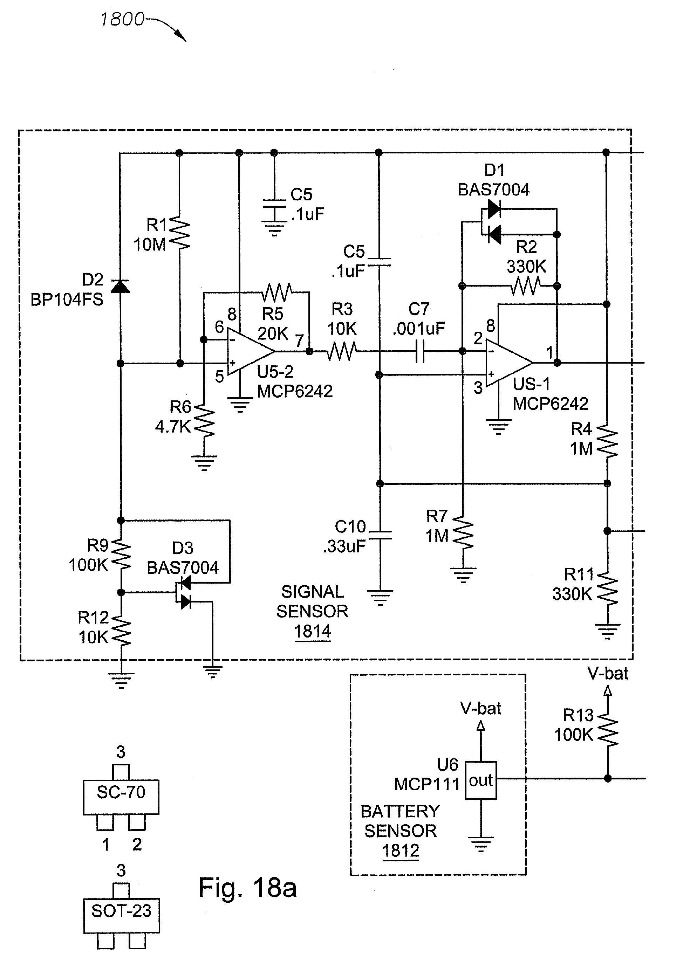

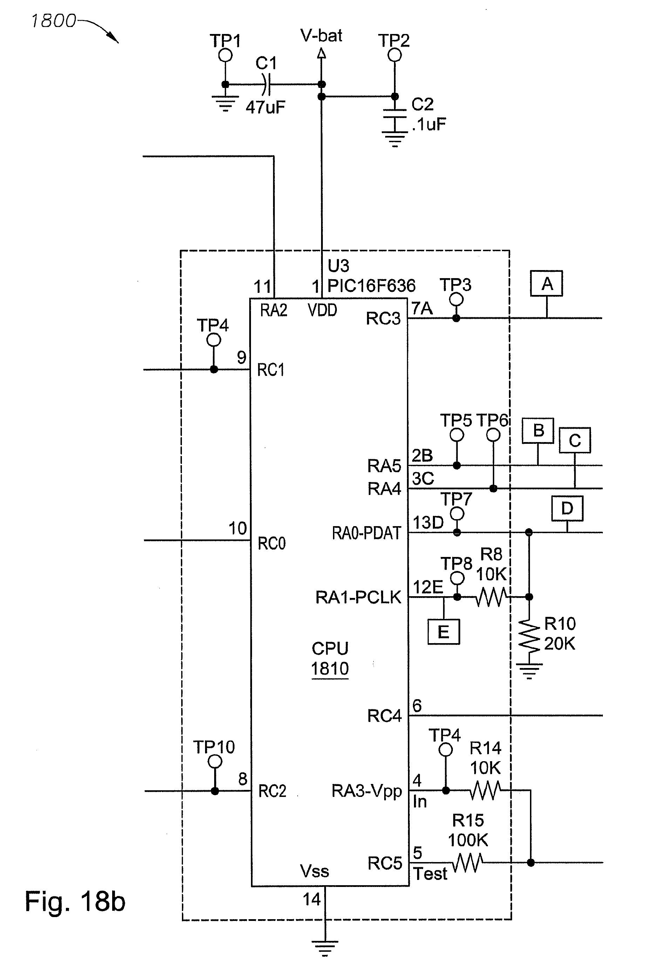

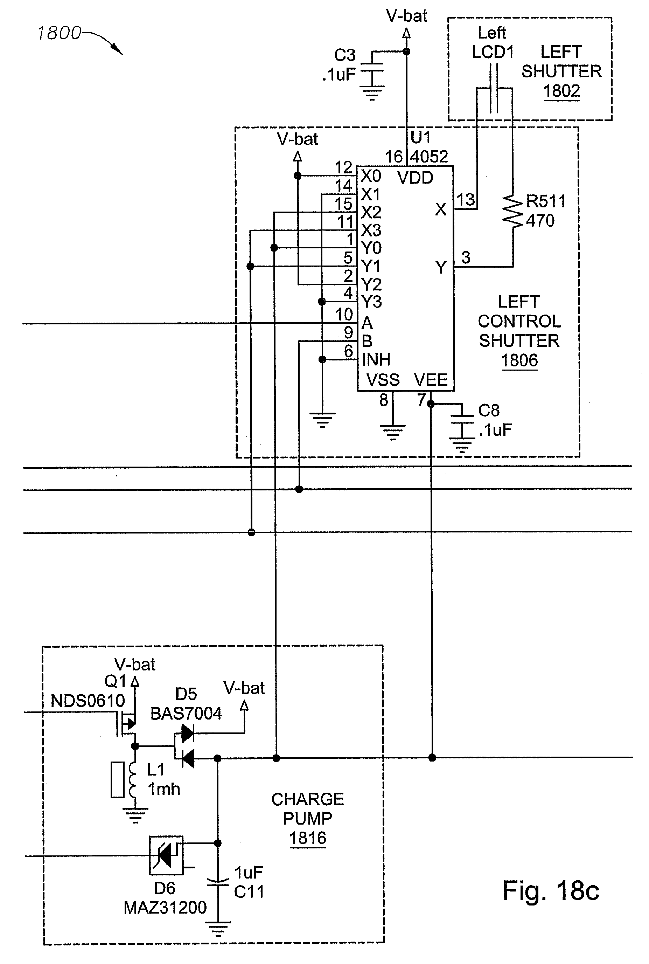

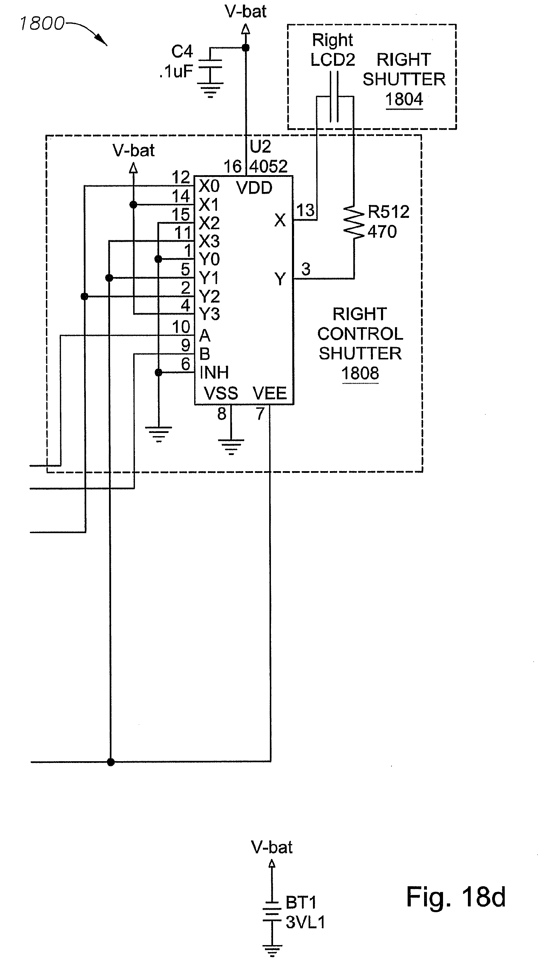

Referring to Figs. 18, 18a, 18b, 18c and 18d, an exemplary embodiment of 3D glasses 1800 is provided that is substantially identical in design and operation as the 3D glasses 104 illustrated and described above except as noted below. The 3D glasses 1800 include a left shutter 1802, a right shutter 1804, a left shutter controller 1806, a right shutter controller 1808, a CPU 1810, a battery sensor 1812, a signal sensor 1814 and a charge pump 1816. In an exemplary embodiment, the design and operation of the left shutter 1802, the right shutter 1804, the left shutter controller 1806, the right shutter controller 1808, the CPU 1810, the battery sensor 1812, the signal sensor 1814, and the charge pump 1816 of the 3D glasses 1800 are substantially identical to the left shutter 106, the right shutter 108, the left shutter controller 116, the right shutter controller 118, the CPU 114, the battery sensor 122, the signal sensor 112, and the charge pump 1700 of the 3D glasses 104 described and illustrated above.

In an exemplary embodiment, the 3D glasses 1800 include the following components:

| **NAME** | **VALUE/ID** |
|---|---|
| R12 | 10K |
| R9 | 100K |
| D3 | BAS7004 |
| R6 | 4.7K |
| D2 | BP104FS |
| R1 | 10M |
| C5 | .1uF |
| R5 | 20K |
| U5-2 | MCP6242 |
| R3 | 10K |
| C6 | .1uF |
| C7 | .001uf |
| C10 | .33uF |
| R7 | 1M |
| D1 | BAS7004 |
| R2 | 330K |
| U5-1 | MCP6242 |
| R4 | 1M |
| R11 | 330K |
| U6 | MCP111 |
| R13 | 100K |
| U3 | PIC16F636 |
| C1 | 47uF |
| C2 | .1uF |
| R8 | 10K |
| R10 | 20K |
| R14 | 10K |
| R15 | 100K |
| Q1 | NDS0610 |
| D6 | MAZ31200 |
| D5 | BAS7004 |
| L1 | 1mh |
| C11 | 1uF |
| C3 | .1uF |
| U1 | 4052 |
| R511 | 470 |
| C8 | .1uF |
| C4 | .1uF |
| U2 | 4052 |
| R512 | 470 |
| C1 | 47uF |
| C11 | 1 uf |
| Left Lens | LCD1 |
| Right Lens | LCD 2 |
| BT1 | 3V Li |

In an exemplary embodiment, the left shutter controller 1806 includes a digitally controlled analog switch U1 that, under the control of the CPU 1810, depending upon the mode of operation, applies a voltage across the left shutter 1802 for controlling the operation of the left shutter. In similar fashion, the right shutter controller 1808 includes a digitally controller analog switch U2 that, under the control of the CPU 1810, depending upon the mode of operation, applies a voltage across the right shutter 1804 for controlling the operation of the right shutter. In an exemplary embodiment, U1 and U2 are conventional commercially available digitally controlled analog switches available from Unisonic Technologies or Texas Instruments as part numbers, UTC 4052 and TI 4052, respectively.

As will be recognized by persons having ordinary skill in the art, the 4052 digitally controlled analog switch includes control input signals A, B and INHIBIT ("INH"), switch I/O signals X0, X1, X2, X3, Y0, Y1, Y2 and Y3, and output signals X and Y and further provides the following truth table:

| TRUTH TABLE | | | | |
|---|---|---|---|---|
| Control Inputs | | | ON Switches | |
| Inhibit | Select | | | |
| | B | A | | |
| 0 | 0 | 0 | Y0 | X0 |
| 0 | 0 | 1 | Y1 | X1 |
| 0 | 1 | 0 | Y2 | X2 |
| 0 | 1 | 1 | Y3 | X3 |
| 1 | X | X | None | |

| | | | | |
|---|---|---|---|---|
| *X=Dont Care | | | | |

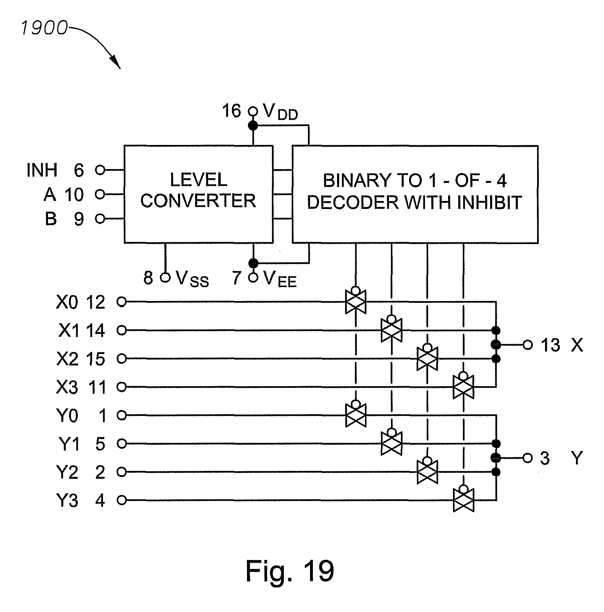

And, as illustrated in Fig. 19, the 4052 digitally controlled analog switch also provides a functional diagram 1900. Thus, the 4052 digitally controlled analog switch provides a digitally controlled analog switch, each having two independent switches, that permits the left and right shutter controllers, 1806 and 1808, to selectively apply a controlled voltage across the left and right shutters, 1802 and 1804, to control the operation of the shutters.

In an exemplary embodiment, the CPU 1810 includes a microcontroller U3 for generating output signals A, B, C, D and E for controlling the operation of the digitally controlled analog switches, U1 and U2, of the left and right shutter controllers, 1806 and 1808. The output control signals A, B and C of the microcontroller U3 provide the following input control signals A and B to each of the digitally controlled analog switches, U1 and U2:

| **U3 - Output Control Signals** | **U1 - Input Control Signals** | **U2 - Input Control Signals** |
|---|---|---|
| A | A | |
| B | | A |
| C | B | B |

In an exemplary embodiment, the output control signals D and E of the microcontroller U3 provide, or otherwise affect, the switch I/O signals X0, X1, X2, X3, Y0, Y1, Y2 and Y3 of the digitally controlled analog switches, U1 and U2:

| **U3 - Output Control Signals** | **U1 - Switch I/O Signals** | **U2 - Switch I/O Signals** |
|---|---|---|
| D | X3, Y1 | X0, Y2 |
| E | X3, Y1 | X0, Y2 |

In an exemplary embodiment, the microcontroller U3 of the CPU 1810 is a model number PIC16F636 programmable microcontroller, commercially available from Microchip.

In an exemplary embodiment, the battery sensor 1812 includes a power detector U6 for sensing the voltage of the battery 120. In an exemplary embodiment, the power detector U6 is a model MCP111 micropower voltage detector, commercially available from Microchip.

In an exemplary embodiment, the signal sensor 1814 includes a photodiode D2 for sensing the transmission of the signals, including the sync signal and/or configuration data, by the signal transmitter 110. In an exemplary embodiment, the photodiode D2 is a model BP104FS photodiode, commercially available from Osram. In an exemplary embodiment, the signal sensor 1814 further includes operational amplifiers, U5-1 and U5-2, and related signal conditioning components, resistors R1, R2, R3, R4, R5, R6, R7, R9, R11, and R12, capacitors C5, C6, C7, and C10, and schottky diodes, D1 and D3.

In an exemplary embodiment, the charge pump 1816 amplifies the magnitude of the output voltage of the battery 120, using a charge pump, from 3V to -12V. In an exemplary embodiment, the charge pump 1816 includes a MOSFET Q1, a schottky diode D5, an inductor L1, and a zener diode D6. In an exemplary embodiment, the output signal of the charge pump 1816 is provided as input signals to switch I/O signals X2 and Y0 of the digitally controlled analog switch U1 of the left shutter controller 1806 and as input signals to switch I/O signals X3 and Y1 of the digitally controlled analog switch U2 of the right shutter controller 1808.

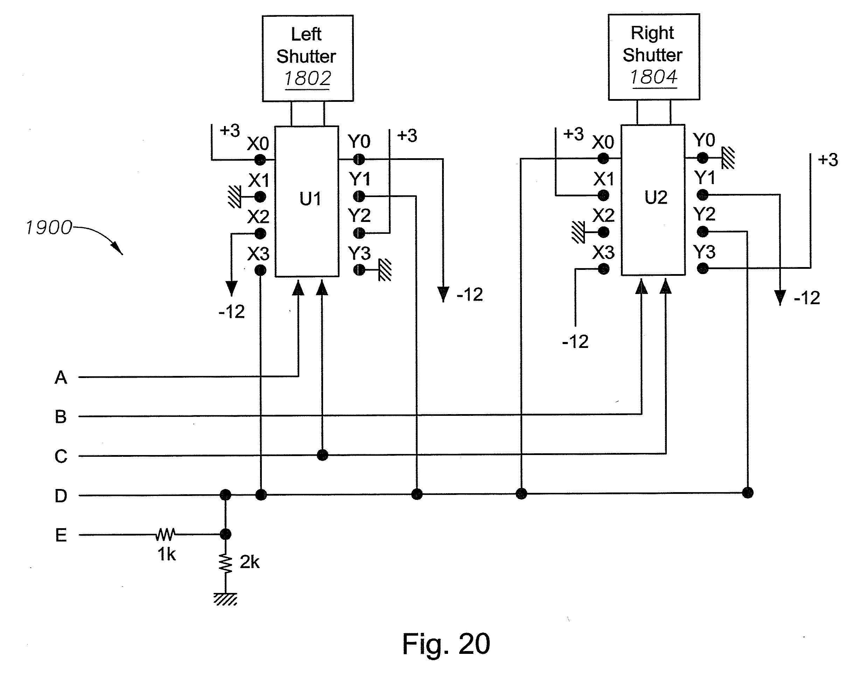

As illustrated in Fig. 20, in an exemplary embodiment, during operation of the 3D glasses 1800, the digitally controlled analog switches, U1 and U2, under the control of the control signals A, B, C, D, and E of the CPU 1810, may provide various voltages across one or both of the left and right shutters, 1802 and 1804. In particular, the digitally controlled analog switches, U1 and U2, under the control of the control signals A, B, C, D, and E of the CPU 1810, may provide: 1) a positive or negative 15 volts across one or both of the left and right shutters, 1802 and 1804, 2) a positive or negative voltage, in the range of 2-3 volts, across one or both of the left and right shutters, or 3) provide 0 volts, i.e., a neutral state, across one or both of the left and right shutters. In an exemplary embodiment, the digitally controlled analog switches, U1 and U2, under the control of the control signals A, B, C, D, and E of the CPU 1810, may provide 15 volts by, for example, combining +3 volts with -12 volts to achieve a differential of 15 volts across the one or both of the left and right shutters, 1802 and 1804. In an exemplary embodiment, the digitally controlled analog switches, U1 and U2, under the control of the control signals A, B, C, D, and E of the CPU 1810, may provide a 2 volt catch voltage, for example, by reducing the 3 volt output voltage of the battery 120 to 2 volts with a voltage divider, including components R8 and R10.

Alternatively, the digitally controlled analog switches, U1 and U2, under the control of the control signals A, B, C, D, and E of the CPU 1810, may provide: 1) a positive or negative 15 volts across one or both of the left and right shutters, 1802 and 1804, 2) a positive or negative voltage, of about 2 volts, across one or both of the left and right shutters, 3) a positive or negative voltage, of about 3 volts, across one or both of the left and right shutters, or 4) provide 0 volts, i.e., a neutral state, across one or both of the left and right shutters. In an exemplary embodiment, the digitally controlled analog switches, U1 and U2, under the control of the control signals A, B, C, D, and E of the CPU 1810, may provide 15 volts by, for example, combining +3 volts with -12 volts to achieve a differential of 15 volts across the one or both of the left and right shutters, 1802 and 1804. In an exemplary embodiment, the digitally controlled analog switches, U1 and U2, under the control of the control signals A, B, C, D, and E of the CPU 1810, may provide a 2 volt catch voltage, for example, by reducing the 3 volt output voltage of the battery 120 to 2 volts with a voltage divider, including components R8 and R10.

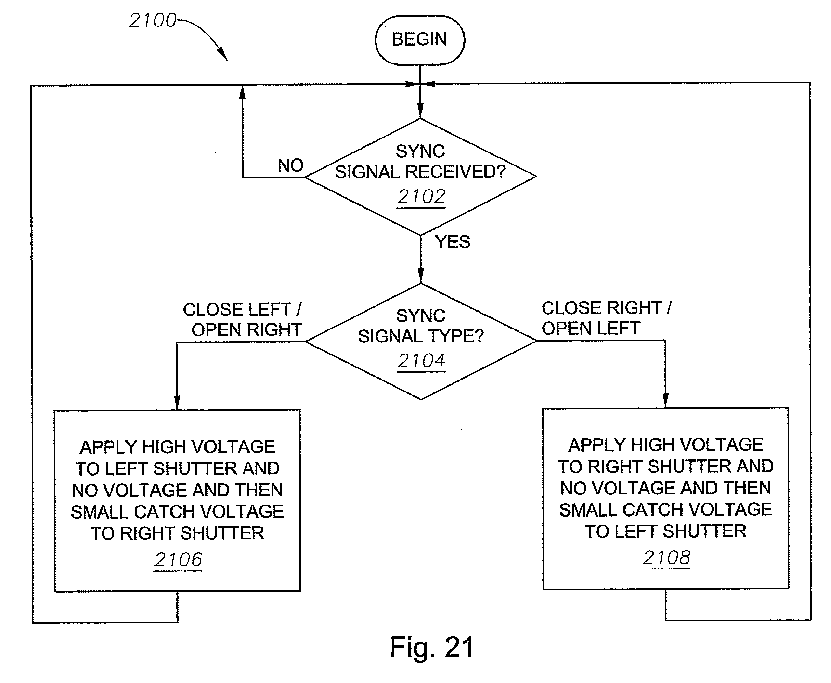

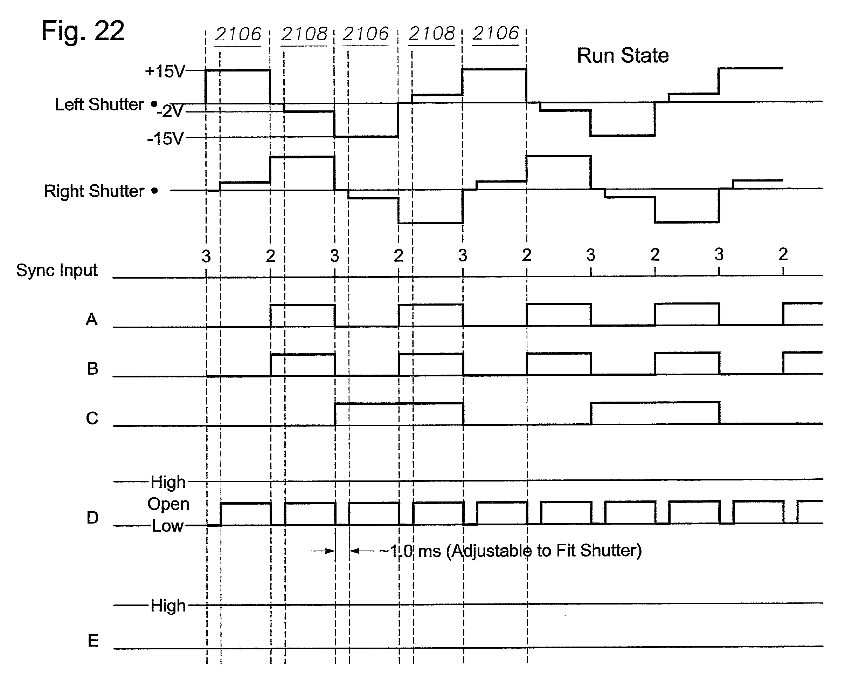

Referring now to Figs. 21 and 22, in an exemplary embodiment, during the operation of the 3D glasses 1800, the 3D glasses execute a normal run mode of operation 2100 in which the control signals A, B, C, D and E generated by the CPU 1810 are used to control the operation of the left and right shutter controllers, 1806 and 1808, to in turn control the operation of the left and right shutters, 1802 and 1804, as a function of the type of sync signal detected by the signal sensor 1814.

In particular, in 2102, if the CPU 1810 determines that the signal sensor 1814 has received a sync signal, then, in 2104, the CPU determines the type of sync signal received. In an exemplary embodiment, a sync signal that includes 3 pulses indicates that the left shutter 1802 should be closed and the right shutter 1804 should be opened while a sync signal that includes 2 pulses indicates that the left shutter should be opened and the right shutter should be closed. More generally, any number of different pulses may used to control the opening and closing of the left and right shutters, 1802 and 1804.

If, in 2104, the CPU 1810 determines that sync signal received indicates that the left shutter 1802 should be closed and the right shutter 1804 should be opened, then the CPU transmits control signals A, B, C, D and E to the left and right shutter controllers, 1806 and 1808, in 2106, to apply a high voltage to the left shutter 1802 and no voltage followed by a small catch voltage to the right shutter 1804. In an exemplary embodiment, the magnitude of the high voltage applied to the left shutter 1802 in 2106 is 15 volts. In an exemplary embodiment, the magnitude of the catch voltage applied to the right shutter 1804 in 2106 is 2 volts. In an exemplary embodiment, the catch voltage is applied to the right shutter 1804 in 2106 by controlling the operational state of the control signal D, which can be either low, high or open, to be open thereby enabling the operation of the voltage divider components R8 and R10, and maintaining the control signal E at a high state. In an exemplary embodiment, the application of the catch voltage in 2106 to the right shutter 1804 is delayed by a predetermined time period to allow faster rotation of the molecules within the liquid crystals of the right shutter during the predetermined time period. The subsequent application of the catch voltage, after the expiration of the predetermined time period, then prevents the molecules within the liquid crystals in the right shutter 1804 from rotating too far during the opening of the right shutter.

Alternatively, if, in 2104, the CPU 1820 determines that sync signal received indicates that the left shutter 1802 should be opened and the right shutter 1804 should be closed, then the CPU transmits control signals A, B, C, D and E to the left and right shutter controllers, 1806 and 1808, in 2108, to apply a high voltage to the right shutter 1804 and no voltage followed by a small catch voltage to the left shutter 1802. In an exemplary embodiment, the magnitude of the high voltage applied to the right shutter 1804 in 2108 is 15 volts. In an exemplary embodiment, the magnitude of the catch voltage applied to the left shutter 1802 in 2108 is 2 volts. In an exemplary embodiment, the catch voltage is applied to the left shutter 1802 in 2108 by controlling the control signal D to be open thereby enabling the operation of the voltage divider components R8 and R10, and maintaining the control signal E at a high level. In an exemplary embodiment, the application of the catch voltage in 2108 to the left shutter 1802 is delayed by a predetermined time period to allow faster rotation of the molecules within the liquid crystals of the left shutter during the predetermined time period. The subsequent application of the catch voltage, after the expiration of the predetermined time period, then prevents the molecules within the liquid crystals in the left shutter 1802 from rotating too far during the opening of the left shutter.

In an exemplary embodiment, during the method 2100, the voltages applied to the left and right shutters, 1802 and 1804, are alternately positive and negative in subsequent repetitions of the steps 2106 and 2108 in order to prevent damage to the liquid crystal cells of the left and right shutters.

Thus, the method 2100 provides a NORMAL or RUN MODE of operation for the 3D glasses 1800.

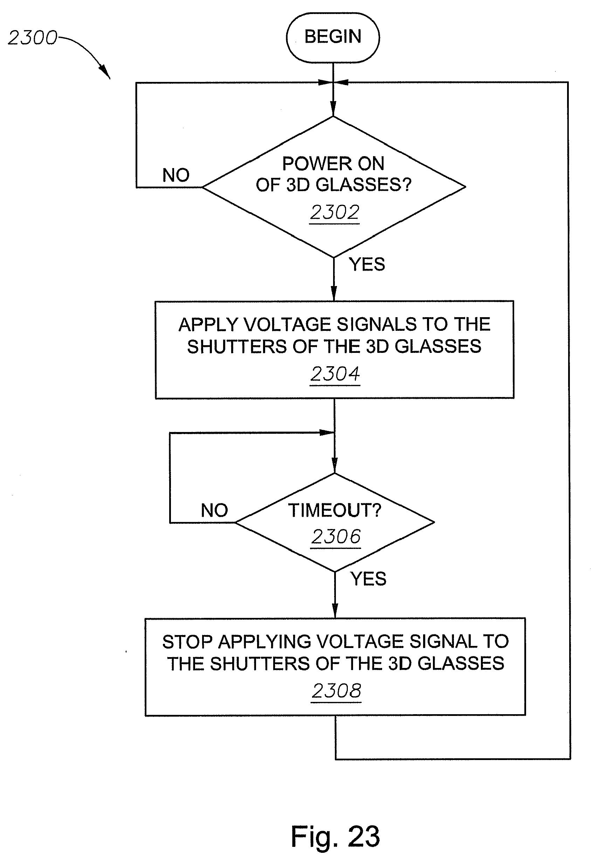

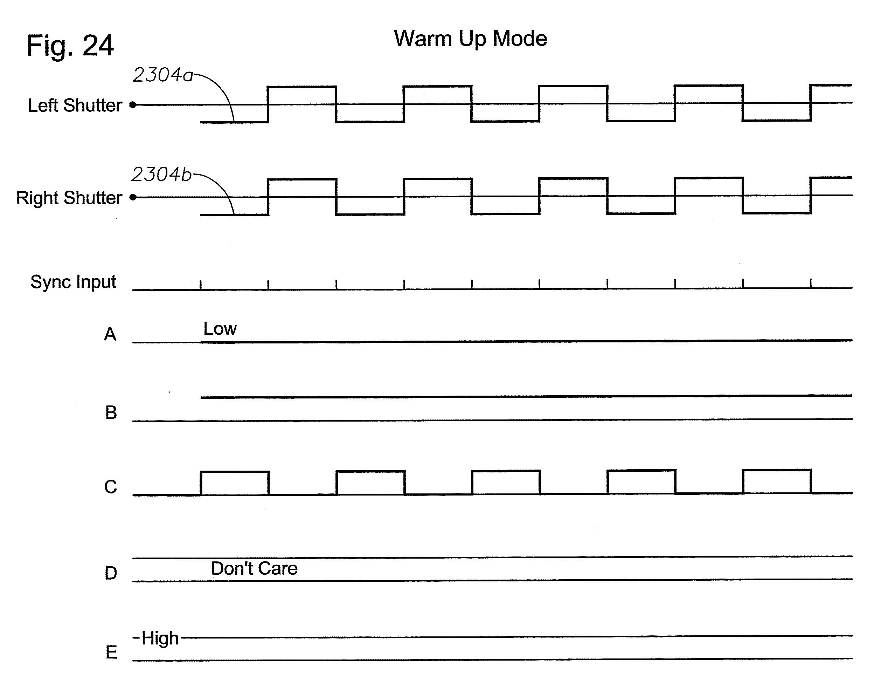

Referring now to Figs. 23 and 24, in an exemplary embodiment, during operation of the 3D glasses 1800, the 3D glasses implement a warm up method 2300 of operation in which the control signals A, B, C, D and E generated by the CPU 1810 are used to control the operation of the left and right shutter controllers, 1806 and 1808, to in turn control the operation of the left and right shutters, 1802 and 1804.

In 2302, the CPU 1810 of the 3D glasses checks for a power on of the 3D glasses. In an exemplary embodiment, the 3D glasses 1810 may be powered on either by a user activating a power on switch or by an automatic wakeup sequence. In the event of a power on of the 3D glasses 1810, the shutters, 1802 and 1804, of the 3D glasses may, for example, require a warm-up sequence. The liquid crystal cells of the shutters, 1802 and 1804, that do not have power for a period of time may be in an indefinite state.

If the CPU 1810 of the 3D glasses 1800 detects a power on of the 3D glasses in 2302, then the CPU applies alternating voltage signals, 2304a and 2304b, to the left and right shutters, 1802 and 1804, respectively, in 2304. In an exemplary embodiment, the voltage applied to the left and right shutters, 1802 and 1804, is alternated between positive and negative peak values to avoid ionization problems in the liquid crystal cells of the shutter. In an exemplary embodiment, the voltage signals, 2304a and 2304b, may be at least partially out of phase with one another. In an exemplary embodiment, one or both of the voltage signals, 2304a and 2304b, may be alternated between a zero voltage and a peak voltage. In an exemplary embodiment, other forms of voltage signals may be applied to the left and right shutters, 1802 and 1804, such that the liquid crystal cells of the shutters are placed in a definite operational state. In an exemplary embodiment, the application of the voltage signals, 2304a and 2304b, to the left and right shutters, 1802 and 1804, causes the shutters to open and close, either at the same time or at different times. Alternatively, the application of the voltage signals, 2304a and 2304b, to the left and right shutters, 1802 and 1804, may causes the shutters to remain closed.

During the application of the voltage signals, 2304a and 2304b, to the left and right shutters, 1802 and 1804, the CPU 1810 checks for a warm up time out in 2306. If the CPU 1810 detects a warm up time out in 2306, then the CPU will stop the application of the voltage signals, 2304a and 2304b, to the left and right shutters, 1802 and 1804, in 2308.

In an exemplary embodiment, in 2304 and 2306, the CPU 1810 applies the voltage signals, 2304a and 2304b, to the left and right shutters, 1802 and 1804, for a period of time sufficient to actuate the liquid crystal cells of the shutters. In an exemplary embodiment, the CPU 1810 applies the voltage signals, 2304a and 2304b, to the left and right shutters, 1802 and 1804, for a period of two seconds. In an exemplary embodiment, the maximum magnitude of the voltage signals, 2304a and 2304b, may be 15 volts. In an exemplary embodiment, the time out period in 2306 may be two seconds. In an exemplary embodiment, the maximum magnitude of the voltage signals, 2304a and 2304b, may be greater or lesser than 15 volts, and the time out period may be longer or shorter. In an exemplary embodiment, during the method 2300, the CPU 1810 may open and close the left and right shutters, 1802 and 1804, at a different rate than would be used for viewing a movie. In an exemplary embodiment, in 2304, the voltage signals applied to the left and right shutters, 1802 and 1804, do not alternate and are applied constantly during the warm up time period and therefore the liquid crystal cells of the shutters may remain opaque for the entire warm up period. In an exemplary embodiment, the warm-up method 2300 may occur with or without the presence of a synchronization signal. Thus, the method 2300 provides a WARM UP mode of the operation for the 3D glasses 1800. In an exemplary embodiment, after implementing the warm up method 2300, the 3D glasses 1800 are placed in a NORMAL or RUN MODE of operation and may then implement the method 2100. Alternatively, in an exemplary embodiment, after implementing the warm up method 2300, the 3D glasses 1800 are placed in a CLEAR MODE of operation and may then implement the method 2500 described below.

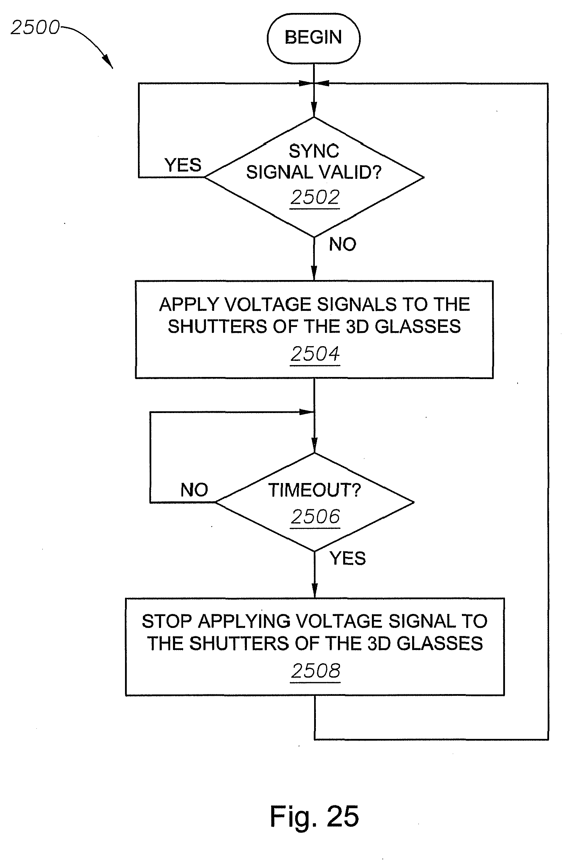

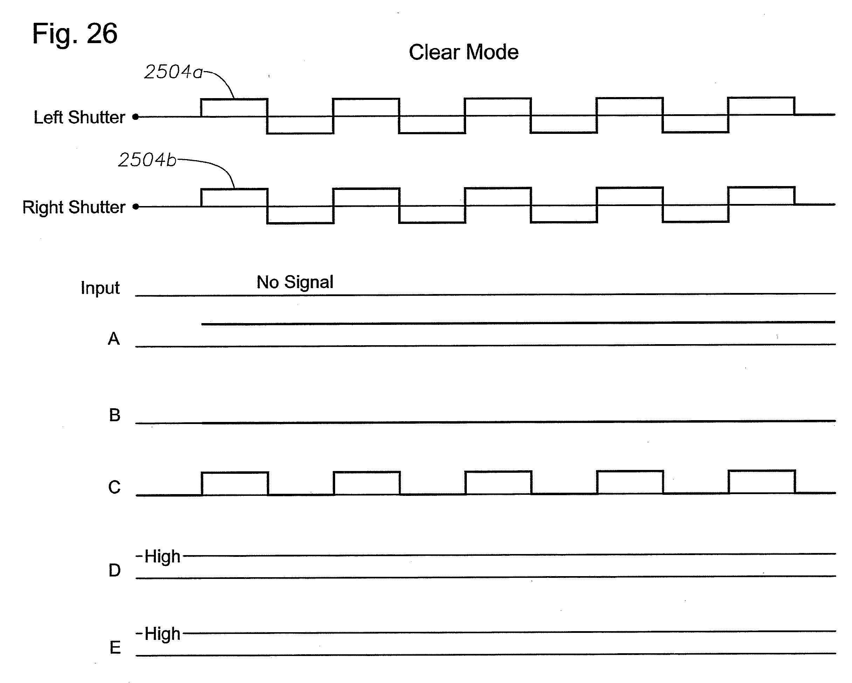

Referring now to Figs. 25 and 26, in an exemplary embodiment, during the operation of the 3D glasses 1800, the 3D glasses implement a method 2500 of operation in which the control signals A, B, C, D and E generated by the CPU 1810 are used to control the operation of the left and right shutter controllers, 1806 and 1808, to in turn control the operation of the left and right shutters, 1802 and 1804, as a function of the sync signal received by the signal sensor 1814.

In 2502, the CPU 1810 checks to see if the sync signal detected by the signal sensor 1814 is valid or invalid. If the CPU 1810 determines that the sync signal is invalid in 2502, then the CPU applies voltage signals, 2504a and 2504b, to the left and right shutters, 1802 and 1804, of the 3D glasses 1800 in 2504. In an exemplary embodiment, the voltage applied, 2504a and 2504b, to the left and right shutters, 1802 and 1804, is alternated between positive and negative peak values to avoid ionization problems in the liquid crystal cells of the shutter. In an exemplary embodiment, one or both of the voltage signals, 2504a and 2504b, may be alternated between a zero voltage and a peak voltage. In an exemplary embodiment, other forms of voltage signals may be applied to the left and right shutters, 1802 and 1804, such that the liquid crystal cells of the shutters remain open so that the user of the 3D glasses 1800 can see normally through the shutters. In an exemplary embodiment, the application of the voltage signals, 2504a and 2504b, to the left and right shutters, 1802 and 1804, causes the shutters to open.

During the application of the voltage signals, 2504a and 2504b, to the left and right shutters, 1802 and 1804, the CPU 1810 checks for a clearing time out in 2506. If the CPU 1810 detects a clearing time out in 2506, then the CPU 1810 will stop the application of the voltage signals, 2504a and 2504b, to the shutters, 1802 and 1804, in 2508.

Thus, in an exemplary embodiment, if the 3D glasses 1800 do not detect a valid synchronization signal, they may go to a clear mode of operation and implement the method 2500. In the clear mode of operation, in an exemplary embodiment, both shutters, 1802 and 1804, of the 3D glasses 1800 remain open so that the viewer can see normally through the shutters of the 3D glasses. In an exemplary embodiment, a constant voltage is applied, alternating positive and negative, to maintain the liquid crystal cells of the shutters, 1802 and 1804, of the 3D glasses 1800 in a clear state. The constant voltage could, for example, be in the range of 2-3 volts, but the constant voltage could be any other voltage suitable to maintain reasonably clear shutters. In an exemplary embodiment, the shutters, 1802 and 1804, of the 3D glasses 1800 may remain clear until the 3D glasses are able to validate an encryption signal and/or until a clearing mode time out. In an exemplary embodiment, the shutters, 1802 and 1804, of the 3D glasses 1800 may remain clear until the 3D glasses are able to validate an encryption signal and then may implement the method 2100 and/or if a time out occurs in 2506, then may implement the method 900. In an exemplary embodiment, the shutters, 1802 and 1804, of the 3D glasses 1800 may alternately open and close at a rate that allows the user of the 3D glasses to see normally.

Thus, the method 2500 provides a method of clearing the operation of the 3D glasses 1800 and thereby provide a CLEAR MODE of operation.

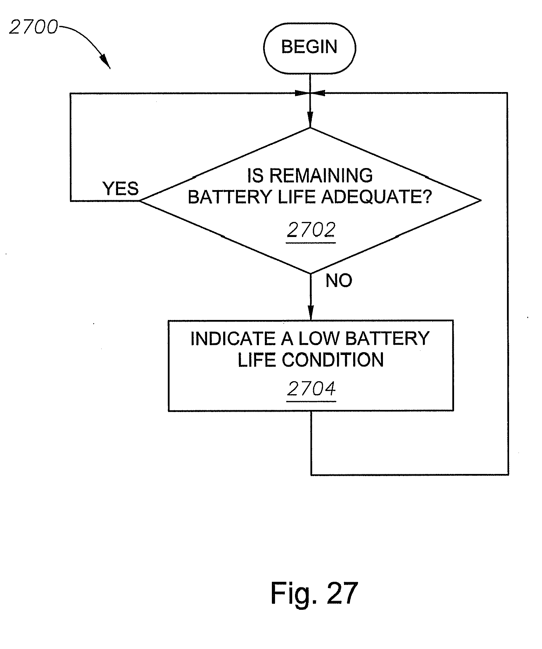

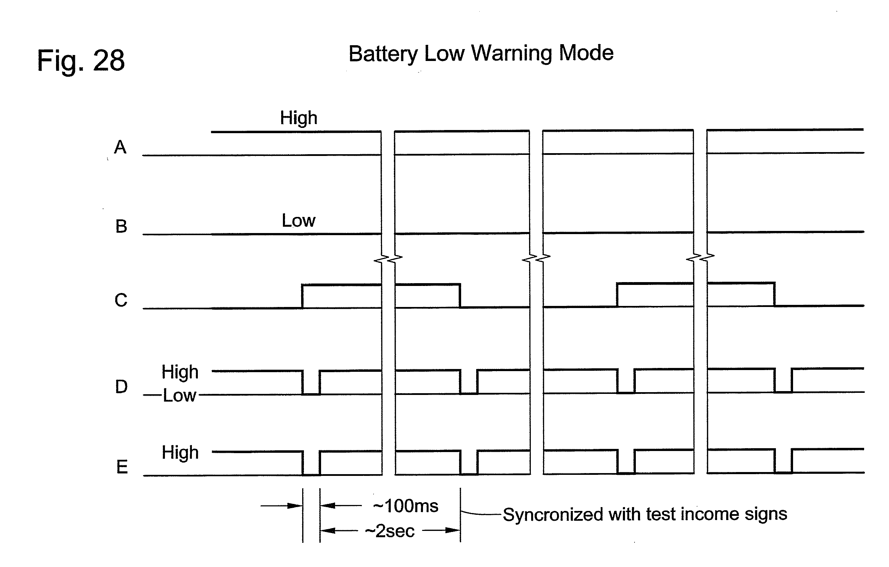

Referring now to Figs. 27 and 28, in an exemplary embodiment, during the operation of the 3D glasses 1800, the 3D glasses implement a method 2700 of monitoring the battery 120 in which the control signals A, B, C, D and E generated by the CPU 1810 are used to control the operation of the left and right shutter controllers, 1806 and 1808, to in turn control the operation of the left and right shutters, 1802 and 1804, as a function of the condition of the battery 120 as detected by battery sensor 1812.

In 2702, the CPU 1810 of the 3D glasses uses the battery sensor 1812 to determine the remaining useful life of the battery 120. If the CPU 1810 of the 3D glasses 1800 determines that the remaining useful life of the battery 120 is not adequate in 2702, then the CPU provides an indication of a low battery life condition in 2704.

In an exemplary embodiment, an inadequate remaining battery life may, for example, be any period less than 3 hours. In an exemplary embodiment, an adequate remaining battery life may be preset by the manufacturer of the 3D glasses 1800 and/or programmed by the user of the 3D glasses.

In an exemplary embodiment, in 2704, the CPU 1810 of the 3D glasses 1800 will indicate a low battery life condition by causing the left and right shutters, 1802 and 1804, of the 3D glasses to blink slowly, by causing the shutters to simultaneously blink at a moderate rate that is visible to the user of the 3D glasses, by flashing an indicator light, by generating an audible sound, and the like.

In an exemplary embodiment, if the CPU 1810 of the 3D glasses 1800 detects that the remaining battery life is insufficient to last for a specified period of time, then the CPU of the 3D glasses will indicate a low battery condition in 2704 and then prevent the user from turning on the 3D glasses.

In an exemplary embodiment, the CPU 1810 of the 3D glasses 1800 determines whether or not the remaining battery life is adequate every time the 3D glasses transition to the OFF MODE and/or to the CLEAR MODE of operation.

In an exemplary embodiment, if the CPU 1810 of the 3D glasses 1800 determines that the battery will last for at least the predetermined adequate amount of time, then the 3D glasses will continue to operate normally. Operating normally may, for example, include staying in the CLEAR MODE of operation for five minutes while checking for a signal from the signal transmitter 110 and then going to the OFF MODE or to a turn-on mode wherein the 3D glasses 1800 periodically wake up to check for a signal from the signal transmitter.

In an exemplary embodiment, the CPU 1810 of the 3D glasses 1800 checks for a low battery condition just before shutting off the 3D glasses. In an exemplary embodiment, if the battery 120 will not last for the predetermined adequate remaining life time, then the shutters, 1802 and 1804, will begin blinking slowly.

In an exemplary embodiment, if the battery 120 will not last for the predetermined adequate remaining life time, the shutters, 1802 and/or 1804, are placed into an opaque condition, i.e., the liquid crystal cells are closed, for two seconds and then placed into a clear condition, i.e., the liquid crystal cells are opened, for 1/10^{th} of a second. The time period that the shutters, 1802 and/or 1804, are closed and opened may be any time period. In an exemplary embodiment, the blinking of the shutters, 1802 and 1804, is synchronized with providing power to the signal sensor 1814 to permit the signal sensor to check for a signal from the signal transmitter 110.

In an exemplary embodiment, the 3D glasses 1800 may check for a low battery condition at any time including during warm up, during normal operation, during clear mode, during power off mode, or at the transition between any conditions. In an exemplary embodiment, if a low battery life condition is detected at a time when the viewer is likely to be in the middle of a movie, the 3D glasses 1800 may not immediately indicate the low battery condition.

In some embodiments, if the CPU 1810 of the 3D glasses 1800 detects a low battery level, the user will not be able to power the 3D glasses on.

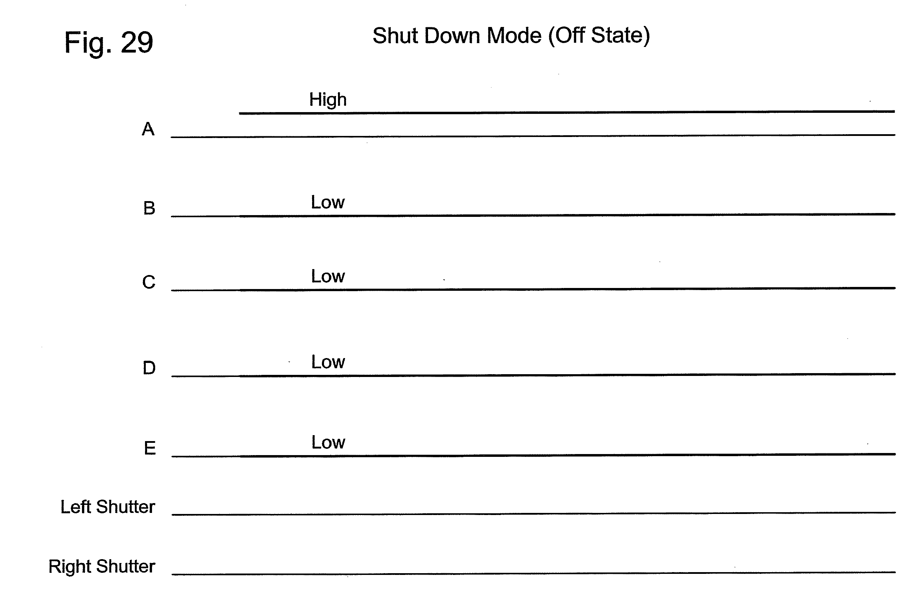

Referring now to Fig. 29, in an exemplary embodiment, during the operation of the 3D glasses 1800, the 3D glasses implement a method for shutting down the 3D glasses in which the control signals A, B, C, D and E generated by the CPU 1810 are used to control the operation of the left and right shutter controllers, 1806 and 1808, to in turn control the operation of the left and right shutters, 1802 and 1804, as a function of the condition of the battery 120 as detected by the battery sensor 1812. In particular, if the user of 3D glasses 1800 selects shutting down the 3D glasses or the CPU 1810 selects shutting down the 3D glasses, then the voltage applied to the left and right shutters, 1802 and 1804, of the 3D glasses are both set to zero.

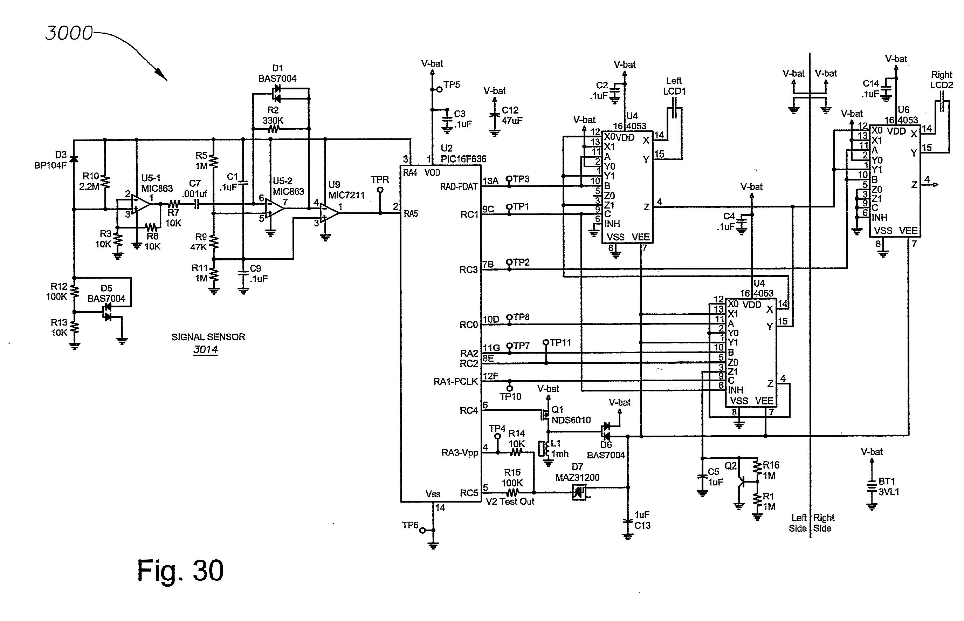

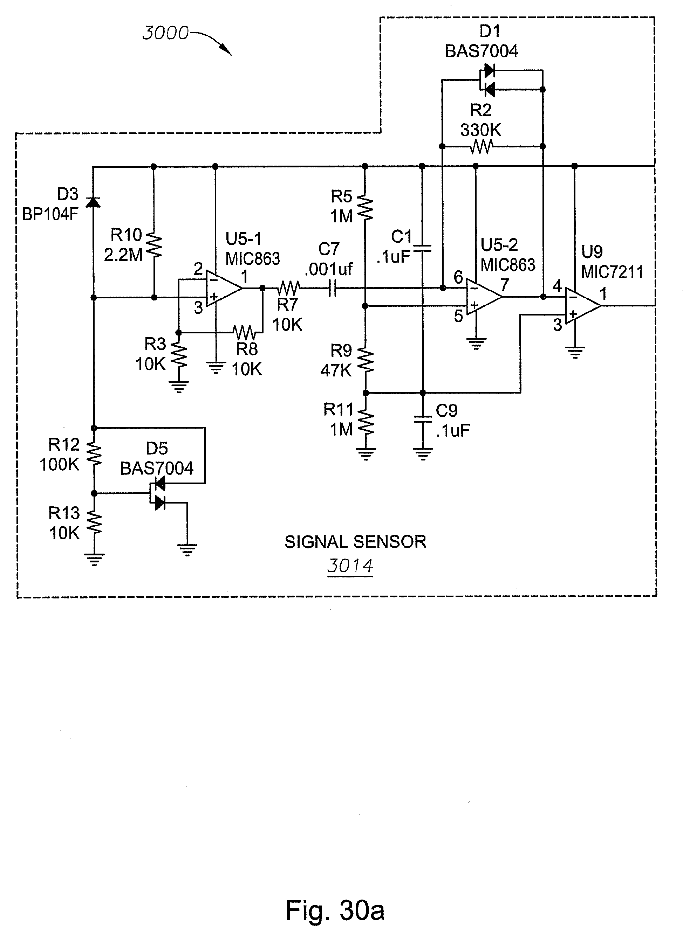

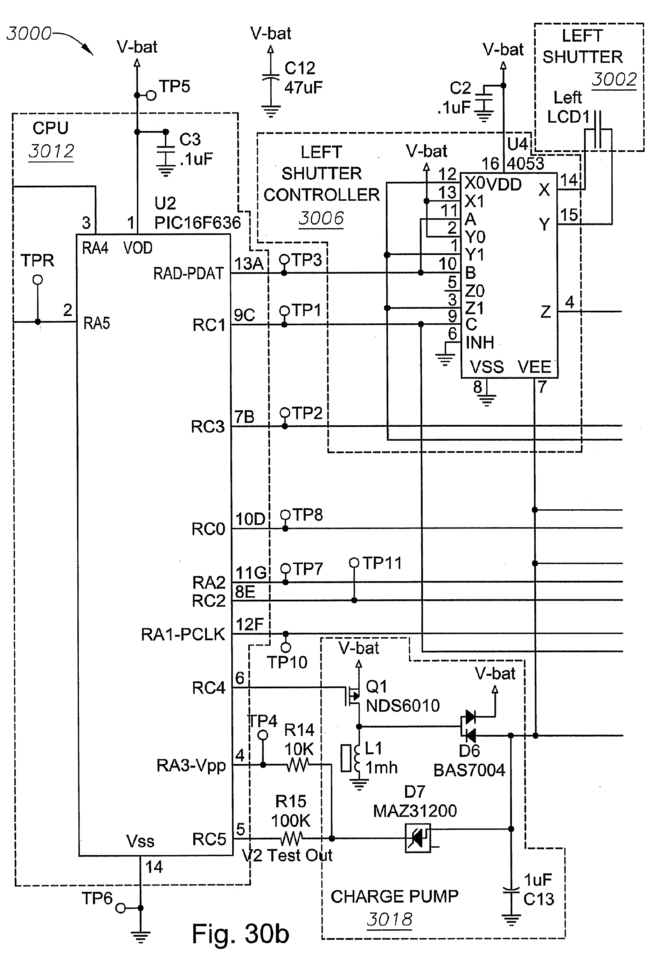

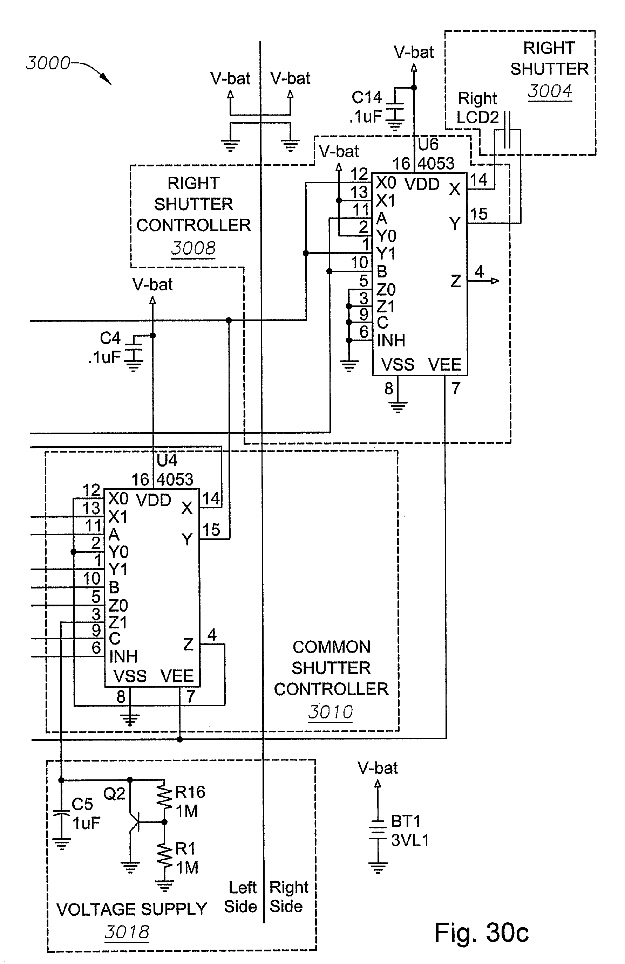

Referring to Figs. 30, 30a, 30b and 30c, an exemplary embodiment of 3D glasses 3000 is provided that is substantially identical in design and operation as the 3D glasses 104 illustrated and described above except as noted below. The 3D glasses 3000 include a left shutter 3002, a right shutter 3004, a left shutter controller 3006, a right shutter controller 3008, common shutter controller 3010, a CPU 3012, a signal sensor 3014, a charge pump 3016, and a voltage supply 3018. In an exemplary embodiment, the design and operation of the left shutter 3002, the right shutter 3004, the left shutter controller 3006, the right shutter controller 3008, the CPU 3012, the signal sensor 3014, and the charge pump 3016 of the 3D glasses 3000 are substantially identical to the left shutter 106, the right shutter 108, the left shutter controller 116, the right shutter controller 118, the CPU 114, the signal sensor 112, and the charge pump 1700 of the 3D glasses 104 described and illustrated above, except as described below and illustrated herein.

In an exemplary embodiment, the 3D glasses 3000 include the following components:

| **NAME** | **VALUE/ID** |
|---|---|
| R13 | 10K |
| D5 | BAS7004 |
| R12 | 100K |
| D3 | BP104F |
| R10 | 2.2M |
| U5-1 | MIC863 |
| R3 | 10K |
| R7 | 10K |
| R8 | 10K |
| R5 | 1M |
| C7 | .001uF |
| R9 | 47K |
| R11 | 1M |
| C1 | .1uF |
| C9 | .1uF |
| D1 | BAS7004 |
| R2 | 330K |
| U5-2 | MIC863 |
| U3 | MIC7211 |
| U2 | PIC16F636 |
| C3 | .1uF |
| C12 | 47uF |
| C2 | .1uF |
| LCD1 | LEFT SHUTTER |
| C14 | .1uF |
| LCD2 | RIGHT SHUTTER |
| U1 | 4053 |
| U6 | 4053 |
| C4 | .1uF |
| U4 | 4053 |
| R14 | 10K |
| R15 | 100K |
| Q1 | NDS0610 |
| L1 | 1mh |
| D6 | BAS7004 |
| D7 | MAZ31200 |
| C13 | 1uF |
| C5 | 1uF |
| Q2 | |
| R16 | 1M |
| R1 | 1M |
| BT1 | 3V Li |

In an exemplary embodiment, the left shutter controller 3006 includes a digitally controlled analog switch U1 that, under the control of the common controller 3010, that includes a digitally controlled analog switch U4, and the CPU 3012, depending upon the mode of operation, applies a voltage across the left shutter 3002 for controlling the operation of the left shutter. In similar fashion, the right shutter controller 3008 includes a digitally controller analog switch U6 that, under the control of the common controller 3010 and the CPU 3012, depending upon the mode of operation, applies a voltage across the right shutter 3004 for controlling the operation of the right shutter 3004. In an exemplary embodiment, U1, U4 and U6 are conventional commercially available digitally controlled analog switches available from Unisonic Technologies as part number UTC 4053.

As will be recognized by persons having ordinary skill in the art, the UTC 4053 digitally controlled analog switch includes control input signals A, B, C and INHIBIT ("INH"), switch I/O signals X0, X1, Y0, Y1, Z0 and Z1, and output signals X, Y and Z, and further provides the following truth table:

| **TRUTH TABLE** | | | | | | |
|---|---|---|---|---|---|---|
| Control Inputs | | | | ON Switches | | |
| Inhibit | Select | | | | | |
| | C | B | A | UTC 4053 | | |
| 0 | 0 | 0 | 0 | Z0 | Y0 | X0 |
| 0 | 0 | 0 | 1 | Z0 | Y0 | X1 |
| 0 | 0 | 1 | 0 | Z0 | Y1 | X0 |
| 0 | 0 | 1 | 1 | Z0 | Y1 | X1 |
| 0 | 1 | 0 | 0 | Z1 | Y0 | X0 |
| 0 | 1 | 0 | 1 | Z1 | Y0 | X0 |
| 0 | 1 | 1 | 0 | Z1 | Y1 | X0 |
| 0 | 1 | 1 | 1 | Z1 | Y1 | X1 |
| 1 | x | x | x | None | | |

| | | | | | | |
|---|---|---|---|---|---|---|
| x = Don't Care | | | | | | |

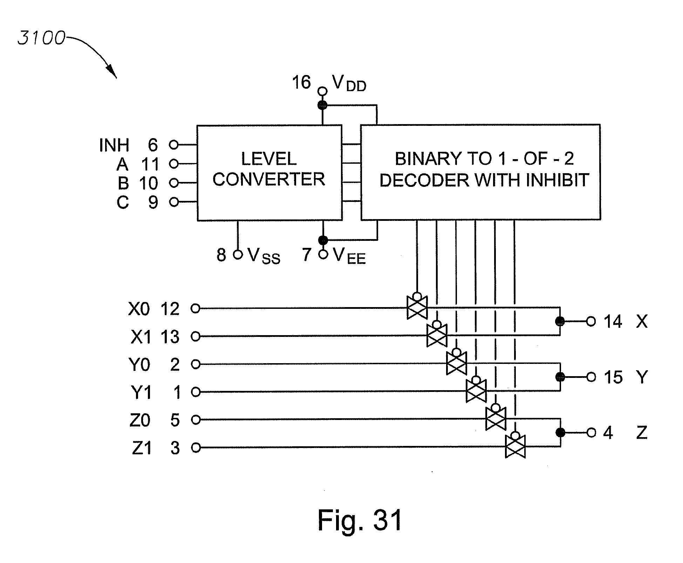

And, as illustrated in Fig. 31, the UTC 4053 digitally controlled analog switch also provides a functional diagram 3100. Thus, the UTC 4053 provides a digitally controlled analog switch, each having three independent switches, that permits the left and right shutter controllers, 3006 and 3008, and the common shutter controller 3010, under the control of the CPU 3012, to selectively apply a controlled voltage across the left and right shutters, 3002 and 3004, to control the operation of the shutters.

In an exemplary embodiment, the CPU 3012 includes a microcontroller U2 for generating output signals A, B, C, D, E, F and G for controlling the operation of the digitally controlled analog switches, U1, U6 and U4, of the left and right shutter controllers, 3006 and 3008, and the common shutter controller 3010.

The output control signals A, B, C, D, E, F and G of the microcontroller U2 provide the following input control signals A, B, C and INH to each of the digitally controlled analog switches, U1, U6 and U4:

| **U2 - Output Control Signals** | **U1 - Input Control Signals** | **U6 - Input Control Signals** | **U4 - Input Control Signals** |
|---|---|---|---|
| A | A, B | | |
| B | | A, B | |
| C | C | | INH |
| D | | | A |
| E | | | |
| F | | | C |
| G | | | B |

In an exemplary embodiment, input control signal INH of U1 is connected to ground and input control signals C and INH of U6 are connected ground.

In an exemplary embodiment, the switch I/O signals X0, X1, Y0, Y1, Z0 and Z1 of the digitally controlled analog switches, U1, U6 and U4, are provided with the following inputs :

| **U1 - Switch I/O Signals** | **INPUT For U1** | **U6 - Switch I/O Signals** | **INPUT For U6** | **U4 - Switch I/O Signals** | **INPUT For U4** |
|---|---|---|---|---|---|
| X0 | X of U4 | X0 | Z of U1 Y of U4 | X0 | Z of U4 |
| X1 | V-bat | X1 | V-bat | X1 | output of charge pump 3016 |
| Y0 | V-bat | Y0 | V-bat | Y0 | Z of U4 |
| Y1 | X of U4 | Y1 | Z of U1 Y of U4 | Y1 | output of charge pump 3016 |
| Z0 | GND | Z0 | GND | Z0 | E of U2 |
| Z1 | X of U4 | Z1 | GND | Z1 | output of voltage supply 3018 |

In an exemplary embodiment, the microcontroller U2 of the CPU 3012 is a model number PIC16F636 programmable microcontroller, commercially available from Microchip.

In an exemplary embodiment, the signal sensor 3014 includes a photodiode D3 for sensing the transmission of the signals, including the sync signal and/or configuration data, by the signal transmitter 110. In an exemplary embodiment, the photodiode D3 is a model BP104FS photodiode, commercially available from Osram. In an exemplary embodiment, the signal sensor 3014 further includes operational amplifiers, U5-1, U5-2, and U3, and related signal conditioning components, resistors R2, R3, R5, R7, R8, R9, R10, R11, R12 and R13, capacitors C1, C7, and C9, and schottky diodes, D1 and D5, that may, for example, condition the signal by preventing clipping of the sensed signal by controlling the gain.

In an exemplary embodiment, the charge pump 3016 amplifies the magnitude of the output voltage of the battery 120, using a charge pump, from 3V to -12V. In an exemplary embodiment, the charge pump 3016 includes a MOSFET Q1, a schottky diode D6, an inductor L1, and a zener diode D7. In an exemplary embodiment, the output signal of the charge pump 3016 is provided as input signals to switch I/O signals X1 and Y1 of the digitally controlled analog switch U4 of the common shutter controller 3010 and as input voltage VEE to the digitally controlled analog switches U1, U6, and U4 of the left shutter controller 3006, the right shutter controller 3008, and the common shutter controller 3010.

In an exemplary embodiment, the voltage supply 3018 includes a transistor Q2, a capacitor C5, and resistors R1 and R16. In an exemplary embodiment, the voltage supply 3018 provides 1 V signal as an input signal to switch I/O signal Z1 of the digitally controlled analog switch U4 of the common shutter controller 3010. In an exemplary embodiment, the voltage supply 3018 provides a ground lift.

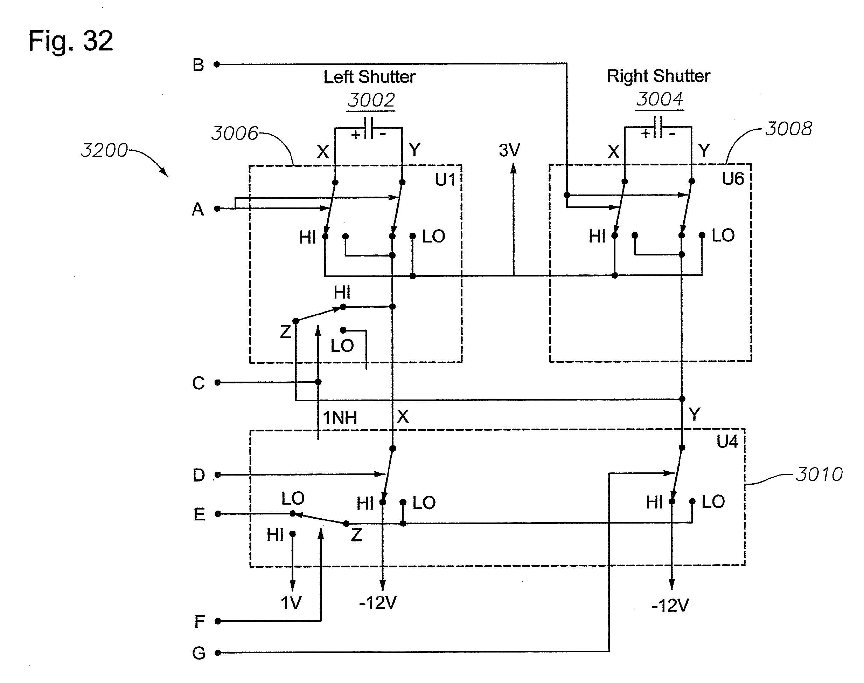

As illustrated in Fig. 32, in an exemplary embodiment, during operation of the 3D glasses 3000, the digitally controlled analog switches, U1, U6 and U4, under the control of the control signals A, B, C, D, E, F and G of the CPU 3012, may provide various voltages across one or both of the left and right shutters, 3002 and 3004. In particular, the digitally controlled analog switches, U1, U6 and U4, under the control of the control signals A, B, C, D, E, F and G of the CPU 3012, may provide: 1) a positive or negative 15 volts across one or both of the left and right shutters, 3002 and 3004, 2) a positive or negative 2 volts across one or both of the left and right shutters, 3) a positive or negative 3 volts across one or both of the left and right shutters, and 4) provide 0 volts, i.e., a neutral state, across one or both of the left and right shutters.

In an exemplary embodiment, as illustrated in Fig. 32, the control signal A controls the operation of left shutter 3002 and the control signal B controls the operation of the right shutter 3004 by controlling the operation of the switches within the digitally controlled analog switches, U1 and U6, respectively, that generate output signals X and Y that are applied across the left and right shutters. In an exemplary embodiment, the control inputs A and B of each of the digitally controlled analog switches U1 and U6 are connected together so that switching between two pairs of input signals occurs simultaneously and the selected inputs are forwarded to terminals of the left and right shutters, 3002 and 3004. In an exemplary embodiment, control signal A from the CPU 3012 controls the first two switches in the digitally controlled analog switch U1 and control signal B from the CPU controls first two switches in the digitally controlled analog switch U6.

In an exemplary embodiment, as illustrated in Fig. 32, one of the terminals of each of the left and right shutters, 3002 and 3004, are always connected to 3V. Thus, in an exemplary embodiment, the digitally controlled analog switches U1, U6 and U4, under the control of the control signals A, B, C, D, E, F and G of the CPU 3012, are operated to bring either -12V, 3V, 1 V or 0V to the other terminals of the left and right shutters, 3002 and 3004. As a result, in an exemplary embodiment, the digitally controlled analog switches U1, U6 and U4, under the control of the control signals A, B, C, D, E, F and G of the CPU 3012, are operated to generate a potential difference of 15V, 0V, 2V or 3V across the terminals of the left and right shutters, 3002 and 3004.

In an exemplary embodiment, the third switch of the digitally controlled analog switch U6 is not used and all of the terminals for the third switch are grounded. In an exemplary embodiment, the third switch of the digitally controlled analog switch U1 is used for power saving.

In particular, in an exemplary embodiment, as illustrated in Fig. 32, the control signal C controls the operation of the switch within the digitally controlled analog switch U1 that generates the output signal Z. As a result, when the control signal C is a digital high value, the input signal INH for the digitally controlled analog switch U4 is also a digital high value thereby causing all of the output channels of the digitally controlled analog switch U4 to be off. As a result, when the control signal C is a digital high value, the left and right shutters, 3002 and 3004, are short circuited thereby permitting half of the charge to be transferred between the shutters thereby saving power and prolonging the life of the battery 120.

In an exemplary embodiment, by using the control signal C to short circuit the left and right shutters, 3002 and 3004, the high amount of charge collected on one shutter that is in the closed state can be used to partially charge the other shutter just before it goes to the closed state, therefore saving the amount of charge that would otherwise have to be fully provided by the battery 120.

In an exemplary embodiment, when the control signal C generated by the CPU 3012 is a digital high value, for example, the negatively charged plate, -12V, of the left shutter 3002, then in the closed state and having a 15V potential difference there across, is connected to the more negatively charged plate of the right shutter 3004, then in the open state and still charged to +1V and having a 2V potential difference there across. In an exemplary embodiment, the positively charged plates on both shutters, 3002 and 3004, will be charged to +3V. In an exemplary embodiment, the control signal C generated by the CPU 3012 goes to a digital high value for a short period of time near the end of the closed state of the left shutter 3002 and just before the closed state of the right shutter 3004. When the control signal C generated by the CPU 3012 is a digital high value, the inhibit terminal INH on the digitally controlled analog switch U4 is also a digital high value. As a result, in an exemplary embodiment, all of the output channels, X, Y and Z, from U4 are in the off state. This allows the charge stored across the plates of the left and right shutters, 3002 and 3004, to be distributed between the shutters so that the potential difference across both of the shutter is approximately 17/2V or 8.5V. Since one terminal of the shutters, 3002 and 3004, is always connected to 3V, the negative terminals of the shutters, 3002 and 3004, are then at -5.5V. In an exemplary embodiment, the control signal C generated by the CPU 3012 then changes to a digital low value and thereby disconnects the negative terminals of the shutters, 3002 and 3004, from one another. Then, in an exemplary embodiment, the closed state for the right shutter 3004 begins and the battery 120 further charges the negative terminal of the right shutter, by operating the digitally controlled analog switch U4, to -12V. As a result, in an exemplary experimental embodiment, a power savings of approximately 40% was achieved during a normal run mode of operation, as described below with reference to the method 3300, of the 3D glasses 3000.

In an exemplary embodiment, the control signal C generated by the CPU 3012 is provided as a short duration pulse that transitions from high to low when the control signals A or B, generated by the CPU, transition from high to low or low to high, to thereby start the next left shutter open/right shutter closed or right shutter open/left shutter closed.

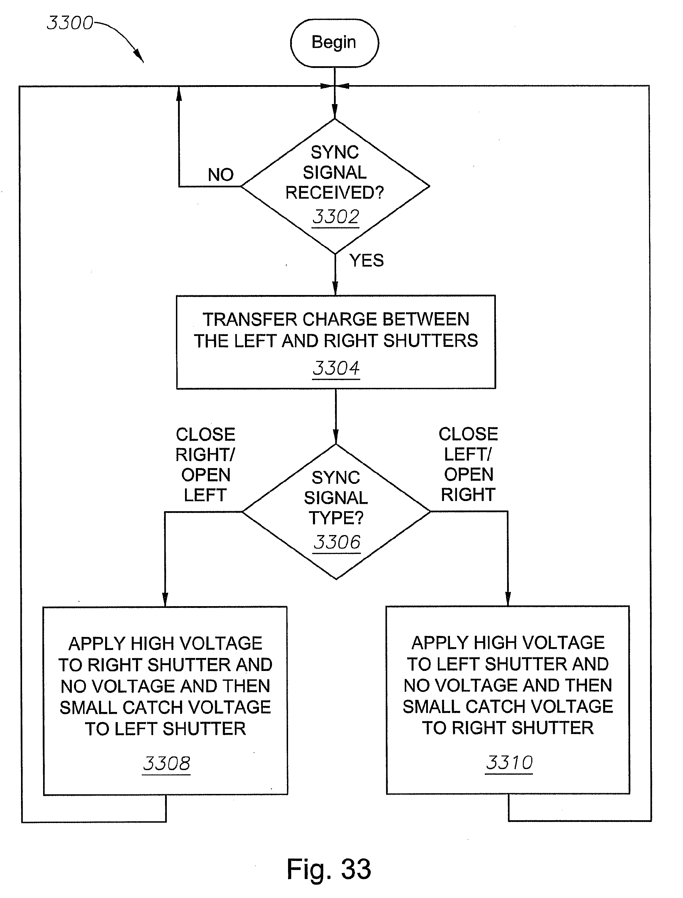

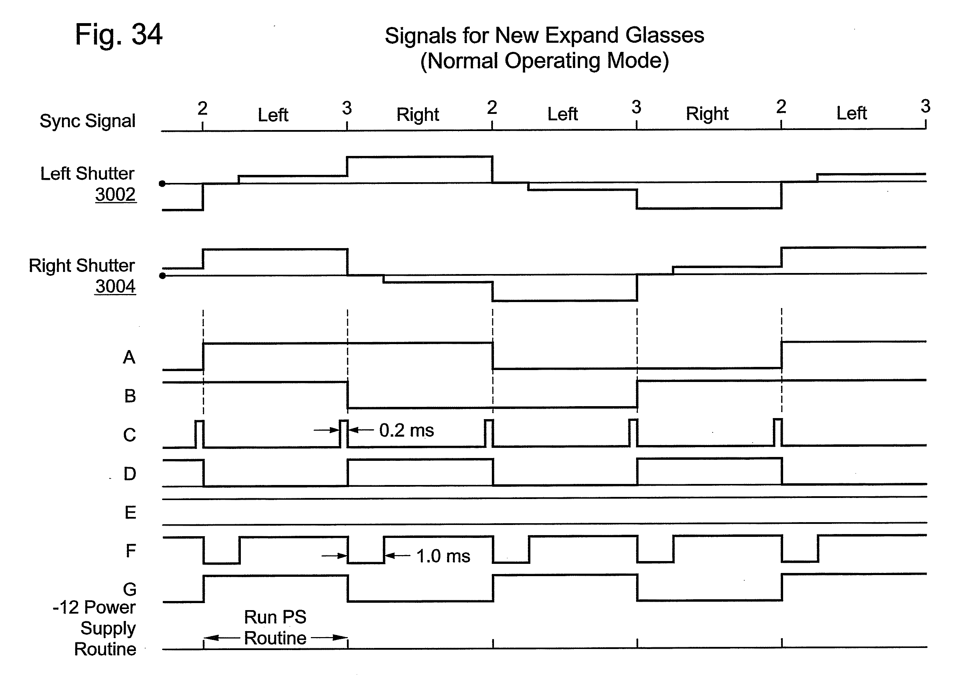

Referring now to Figs. 33 and 34, in an exemplary embodiment, during the operation of the 3D glasses 3000, the 3D glasses execute a normal run mode of operation 3300 in which the control signals A, B, C, D, E, F and G generated by the CPU 3012 are used to control the operation of the left and right shutter controllers, 3006 and 3008, and central shutter controller 3010, to in turn control the operation of the left and right shutters, 3002 and 3004, as a function of the type of sync signal detected by the signal sensor 3014.

In particular, in 3302, if the CPU 3012 determines that the signal sensor 3014 has received a sync signal, then, in 3304, control signals A, B, C, D, E, F and G generated by the CPU 3012 are used to control the operation of the left and right shutter controllers, 3006 and 3008, and central shutter controller 3010, to transfer charge between the left and right shutters, 3002 and 3004, as described above with reference to Fig. 32.

In an exemplary embodiment, in 3304, the control signal C generated by the CPU 3012 is set to a high digital value for approximately 0.2 milliseconds to thereby short circuit the terminals of the left and right shutters, 3002 and 3004, and thus transfer charge between the left and right shutters. In an exemplary embodiment, in 3304, the control signal C generated by the CPU 3012 is set to a high digital value for approximately 0.2 milliseconds to thereby short circuit the more negatively charged terminals of the left and right shutters, 3002 and 3004, and thus transfer charge between the left and right shutters. Thus, the control signal C is provided as a short duration pulse that transitions from high to low when, or before, the control signals A or B transition from high to low or from low to high. As a result, power savings is provided during the operation of the 3D glasses 3000 during the cycle of alternating between open left/closed right and closed left/opened right shutters.

The CPU 3012 then determines the type of sync signal received in 3306. In an exemplary embodiment, a sync signal that includes 2 pulses indicates that the left shutter 3002 should be opened and the right shutter 3004 should be closed while a sync signal that includes 3 pulses indicates that the right shutter should be opened and the left shutter should be closed. In an exemplary embodiment, other different numbers and formats of sync signals may be used to control the alternating opening and closing of the left and right shutters, 3002 and 3004.

If, in 3306, the CPU 3012 determines that sync signal received indicates that the left shutter 3002 should be opened and the right shutter 3004 should be closed, then the CPU transmits control signals A, B, C, D, E, F and G to the left and right shutter controllers, 3006 and 3008, and the common shutter controller 3010, in 3308, to apply a high voltage across the right shutter 3004 and no voltage followed by a small catch voltage to the left shutter 3002. In an exemplary embodiment, the magnitude of the high voltage applied across the right shutter 3004 in 3308 is 15 volts. In an exemplary embodiment, the magnitude of the catch voltage applied to the left shutter 3002 in 3308 is 2 volts. In an exemplary embodiment, the catch voltage is applied to the left shutter 3002 in 3308 by controlling the operational state of the control signal D to be low and the operational state of the control signal F, which may be either be low or high, to be high. In an exemplary embodiment, the application of the catch voltage in 3308 to the left shutter 3002 is delayed by a predetermined time period to allow faster rotation of the molecules within the liquid crystal of the left shutter. The subsequent application of the catch voltage, after the expiration of the predetermined time period, prevents the molecules within the liquid crystals in the left shutter 3002 from rotating too far during the opening of the left shutter. In an exemplary embodiment, the application of the catch voltage in 3308 to the left shutter 3002 is delayed by about 1 millisecond.

Alternatively, if, in 3306, the CPU 3012 determines that sync signal received indicates that the left shutter 3002 should be closed and the right shutter 3004 should be opened, then the CPU transmits control signals A, B, C, D, E, F and G to the left and right shutter controllers, 3006 and 3008, and the common shutter controller 3010, in 3310, to apply a high voltage across the left shutter 3002 and no voltage followed by a small catch voltage to the right shutter 3004. In an exemplary embodiment, the magnitude of the high voltage applied across the left shutter 3002 in 3310 is 15 volts. In an exemplary embodiment, the magnitude of the catch voltage applied to the right shutter 3004 in 3310 is 2 volts. In an exemplary embodiment, the catch voltage is applied to the right shutter 3004 in 3310 by controlling the control signal F to be high and the control signal G to be low. In an exemplary embodiment, the application of the catch voltage in 3310 to the right shutter 3004 is delayed by a predetermined time period to allow faster rotation of the molecules within the liquid crystal of the right shutter. The subsequent application of the catch voltage, after the expiration of the predetermined time period, prevents the molecules within the liquid crystals in the right shutter 3004 from rotating too far during the opening of the right shutter. In an exemplary embodiment, the application of the catch voltage in 3310 to the right shutter 3004 is delayed by about 1 millisecond.

In an exemplary embodiment, during the method 3300, the voltages applied to the left and right shutters, 3002 and 3004, are alternately positive and negative in subsequent repetitions of the steps 3308 and 3310 in order to prevent damage to the liquid crystal cells of the left and right shutters.

Thus, the method 3300 provides a NORMAL or RUN MODE of operation for the 3D glasses 3000.

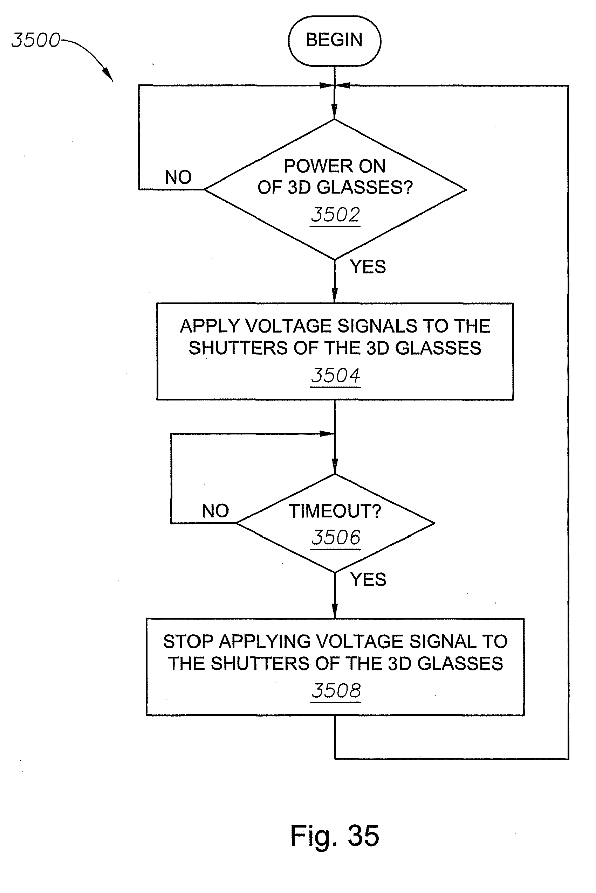

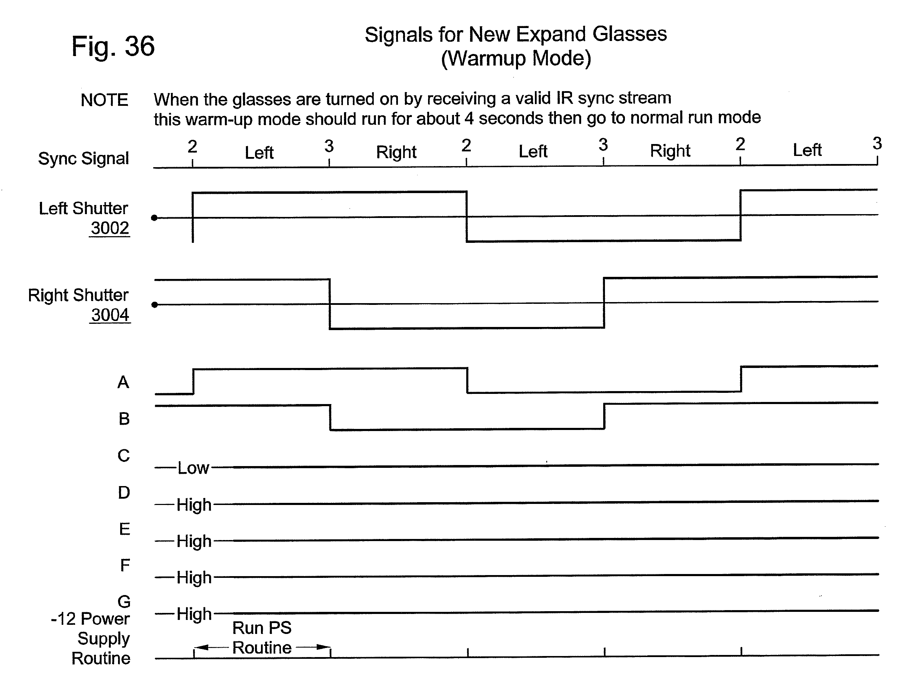

Referring now to Figs. 35 and 36, in an exemplary embodiment, during operation of the 3D glasses 3000, the 3D glasses implement a warm up method 3500 of operation in which the control signals A, B, C, D, E, F and G generated by the CPU 3012 are used to control the operation of the left and right shutter controllers, 3006 and 3008, and central shutter controller 3010, to in turn control the operation of the left and right shutters, 3002 and 3004.

In 3502, the CPU 3012 of the 3D glasses checks for a power on of the 3D glasses. In an exemplary embodiment, the 3D glasses 3000 may be powered on either by a user activating a power on switch, by an automatic wakeup sequence, and/or by the signal sensor 3014 sensing a valid sync signal. In the event of a power on of the 3D glasses 3000, the shutters, 3002 and 3004, of the 3D glasses may, for example, require a warm-up sequence. The liquid crystal cells of the shutters, 3002 and 3004, that do not have power for a period of time may be in an indefinite state.

If the CPU 3012 of the 3D glasses 3000 detects a power on of the 3D glasses in 3502, then the CPU applies alternating voltage signals to the left and right shutters, 3002 and 3004, respectively, in 3504. In an exemplary embodiment, the voltage applied to the left and right shutters, 3002 and 3004, is alternated between positive and negative peak values to avoid ionization problems in the liquid crystal cells of the shutter. In an exemplary embodiment, the voltage signals applied to the left and right shutters, 3002 and 3004, may be at least partially out of phase with one another. In an exemplary embodiment, one or both of the voltage signals applied to the left and right shutters, 3002 and 3004, may be alternated between a zero voltage and a peak voltage. In an exemplary embodiment, other forms of voltage signals may be applied to the left and right shutters, 3002 and 3004, such that the liquid crystal cells of the shutters are placed in a definite operational state. In an exemplary embodiment, the application of the voltage signals to the left and right shutters, 3002 and 3004, causes the shutters to open and close, either at the same time or at different times.

During the application of the voltage signals to the left and right shutters, 3002 and 3004, the CPU 3012 checks for a warm up time out in 3506. If the CPU 3012 detects a warm up time out in 3506, then the CPU will stop the application of the voltage signals to the left and right shutters, 3002 and 3004, in 3508.

In an exemplary embodiment, in 3504 and 3506, the CPU 3012 applies the voltage signals to the left and right shutters, 3002 and 3004, for a period of time sufficient to actuate the liquid crystal cells of the shutters. In an exemplary embodiment, the CPU 3012 applies the voltage signals to the left and right shutters, 3002 and 3004, for a period of two seconds. In an exemplary embodiment, the maximum magnitude of the voltage signals applied to the left and right shutters, 3002 and 3004, may be 15 volts. In an exemplary embodiment, the time out period in 3506 may be two seconds. In an exemplary embodiment, the maximum magnitude of the voltage signals applied to the left and right shutters, 3002 and 3004, may be greater or lesser than 15 volts, and the time out period may be longer or shorter. In an exemplary embodiment, during the method 3500, the CPU 3012 may open and close the left and right shutters, 3002 and 3004, at a different rate than would be used for viewing a movie. In an exemplary embodiment, in 3504, the voltage signals applied to the left and right shutters, 3002 and 3004, do not alternate and are applied constantly during the warm up time period and therefore the liquid crystal cells of the shutters may remain opaque for the entire warm up period. In an exemplary embodiment, the warm-up method 3500 may occur with or without the presence of a synchronization signal. Thus, the method 3500 provides a WARM UP mode of the operation for the 3D glasses 3000. In an exemplary embodiment, after implementing the warm up method 3500, the 3D glasses 3000 are placed in a NORMAL MODE, RUN MODE or CLEAR MODE of operation and may then implement the method 3300.

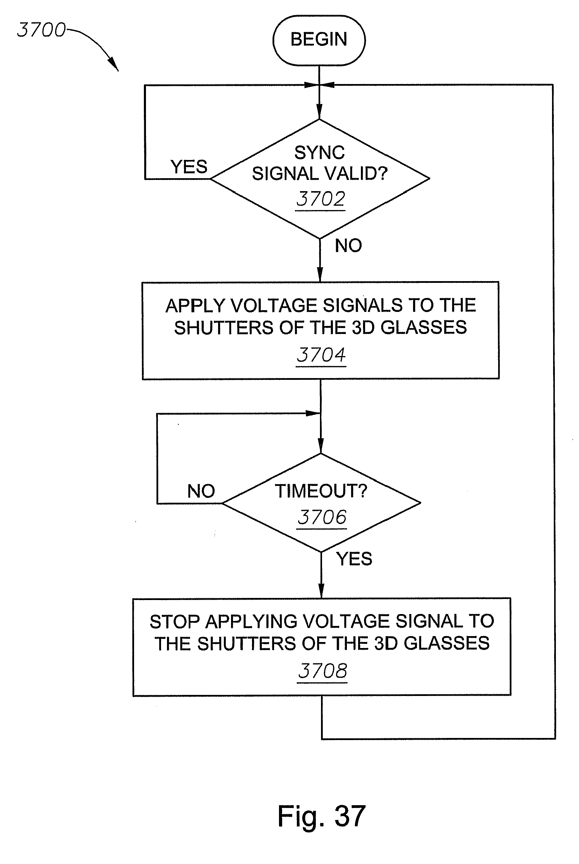

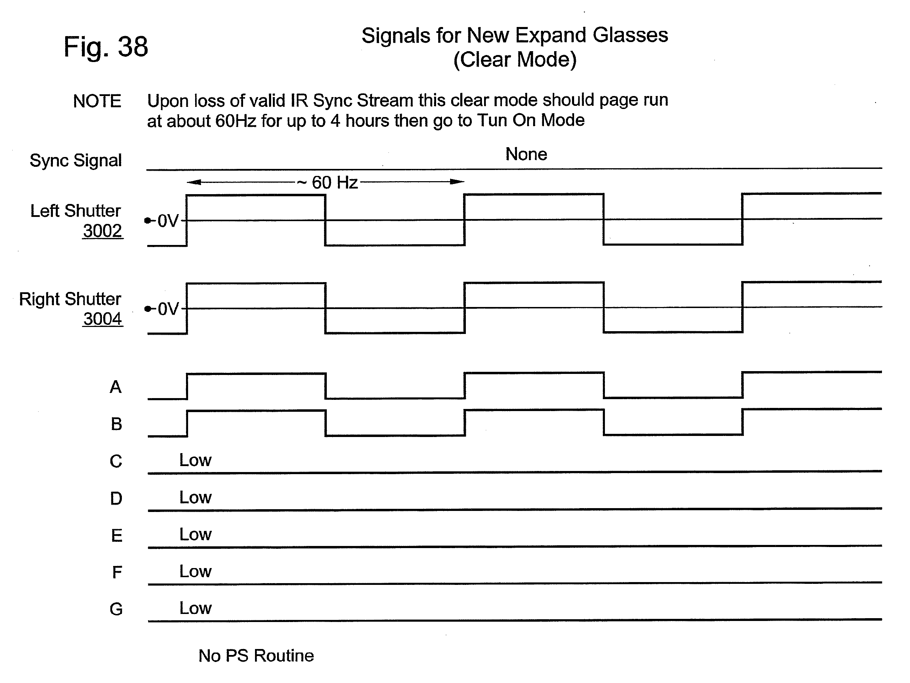

Referring now to Figs. 37 and 38, in an exemplary embodiment, during the operation of the 3D glasses 3000, the 3D glasses implement a method 3700 of operation in which the control signals A, B, C, D, E, F and G generated by the CPU 3012 are used to control the operation of the left and right shutter controllers, 3006 and 3008, and the common shutter controller 3010, to in turn control the operation of the left and right shutters, 3002 and 3004, as a function of the sync signal received by the signal sensor 3014.

In 3702, the CPU 3012 checks to see if the sync signal detected by the signal sensor 3014 is valid or invalid. If the CPU 3012 determines that the sync signal is invalid in 3702, then the CPU applies voltage signals to the left and right shutters, 3002 and 3004, of the 3D glasses 3000 in 3704. In an exemplary embodiment, the voltage applied to the left and right shutters, 3002 and 3004, in 3704, is alternated between positive and negative peak values to avoid ionization problems in the liquid crystal cells of the shutter. In an exemplary embodiment, the voltage applied to the left and right shutters, 3002 and 3004, in 3704, is alternated between positive and negative peak values to provide a square wave signal having a frequency of 60 Hz. In an exemplary embodiment, the square wave signal alternates between +3V and -3V. In an exemplary embodiment, one or both of the voltage signals applied to the left and right shutters, 3002 and 3004, in 3704, may be alternated between a zero voltage and a peak voltage. In an exemplary embodiment, other forms, including other frequencies, of voltage signals may be applied to the left and right shutters, 3002 and 3004, in 3704, such that the liquid crystal cells of the shutters remain open so that the user of the 3D glasses 3000 can see normally through the shutters. In an exemplary embodiment, the application of the voltage signals to the left and right shutters, 3002 and 3004, in 3704, causes the shutters to open.

During the application of the voltage signals to the left and right shutters, 3002 and 3004, in 3704, the CPU 3012 checks for a clearing time out in 3706. If the CPU 3012 detects a clearing time out in 3706, then the CPU 3012 will stop the application of the voltage signals to the shutters, 3002 and 3004, in 3708, which may then place the 3D glasses 3000 into an OFF MODE of operation. In an exemplary embodiment, the duration of the clearing time out may, for example, be up to about 4 hours in length.

Thus, in an exemplary embodiment, if the 3D glasses 3000 do not detect a valid synchronization signal, they may go to a clear mode of operation and implement the method 3700. In the clear mode of operation, in an exemplary embodiment, both shutters, 3002 and 3004, of the 3D glasses 3000 remain open so that the viewer can see normally through the shutters of the 3D glasses. In an exemplary embodiment, a constant voltage is applied, alternating positive and negative, to maintain the liquid crystal cells of the shutters, 3002 and 3004, of the 3D glasses 3000 in a clear state. The constant voltage could, for example, be 2 volts, but the constant voltage could be any other voltage suitable to maintain reasonably clear shutters. In an exemplary embodiment, the shutters, 3002 and 3004, of the 3D glasses 3000 may remain clear until the 3D glasses are able to validate an encryption signal. In an exemplary embodiment, the shutters, 3002 and 3004, of the 3D glasses 3000 may alternately open and close at a rate that allows the user of the 3D glasses to see normally.

Thus, the method 3700 provides a method of clearing the operation of the 3D glasses 3000 and thereby provide a CLEAR MODE of operation.

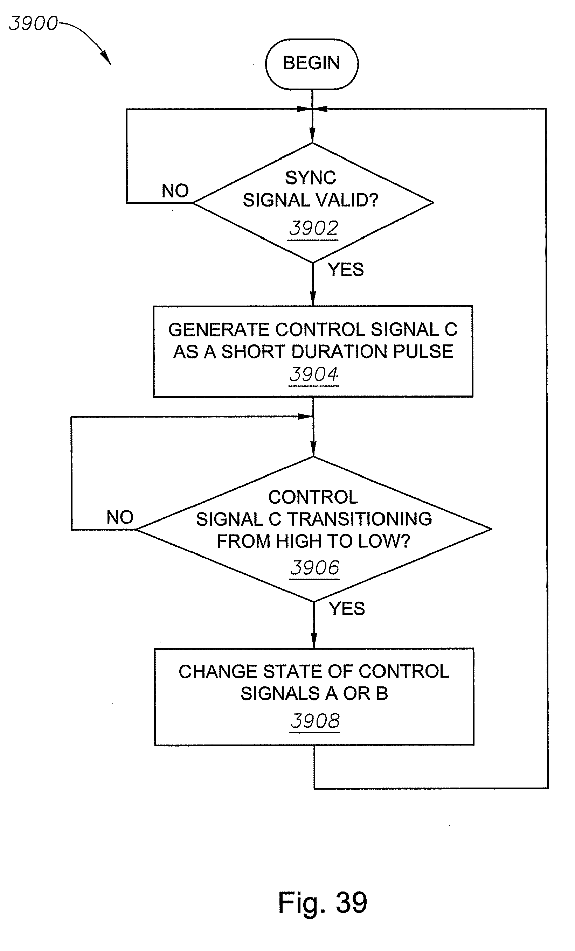

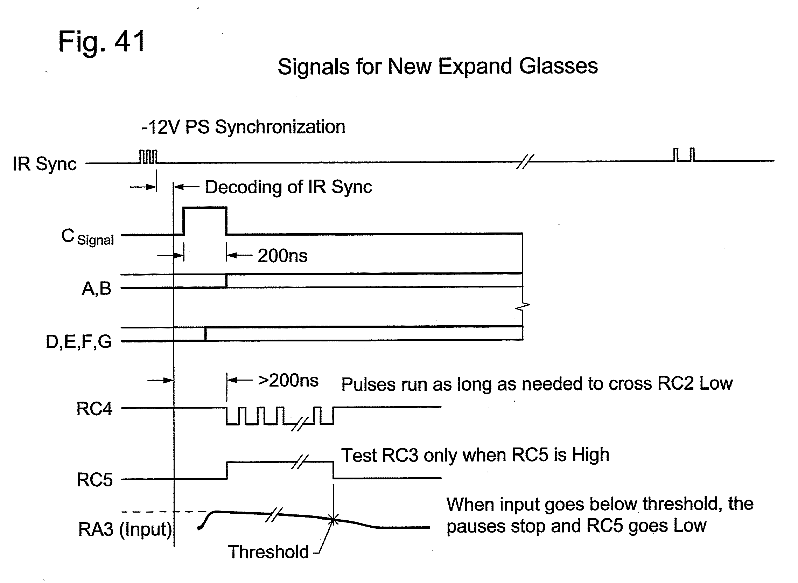

Referring now to Figs. 39 and 41, in an exemplary embodiment, during the operation of the 3D glasses 3000, the 3D glasses implement a method 3900 of operation in which the control signals A, B, C, D, E, F and G generated by the CPU 3012 are used to transfer charge between the shutters, 3002 and 3004. In 3902, the CPU 3012 determines if a valid synchronization signal has been detected by the signal sensor 3014. If the CPU 3012 determines that a valid synchronization signal has been detected by the signal sensor 3014, then the CPU generates the control signal C in 3904 in the form of a short duration pulse lasting, in an exemplary embodiment, about 200 µs. In an exemplary embodiment, during the method 3900, the transfer of charge between the shutters, 3002 and 3004, occurs during the short duration pulse of the control signal C, substantially as described above with reference to Figs. 33 and 34.

In 3906, the CPU 3012 determines if the control signal C has transitioned from high to low. If the CPU 3012 determines that the control signal C has transitioned from high to low, then the CPU changes the state of the control signals A or B in 3908 and then the 3D glasses 3000 may continue with normal operation of the 3D glasses, for example, as described and illustrated above with reference to Figs. 33 and 34.

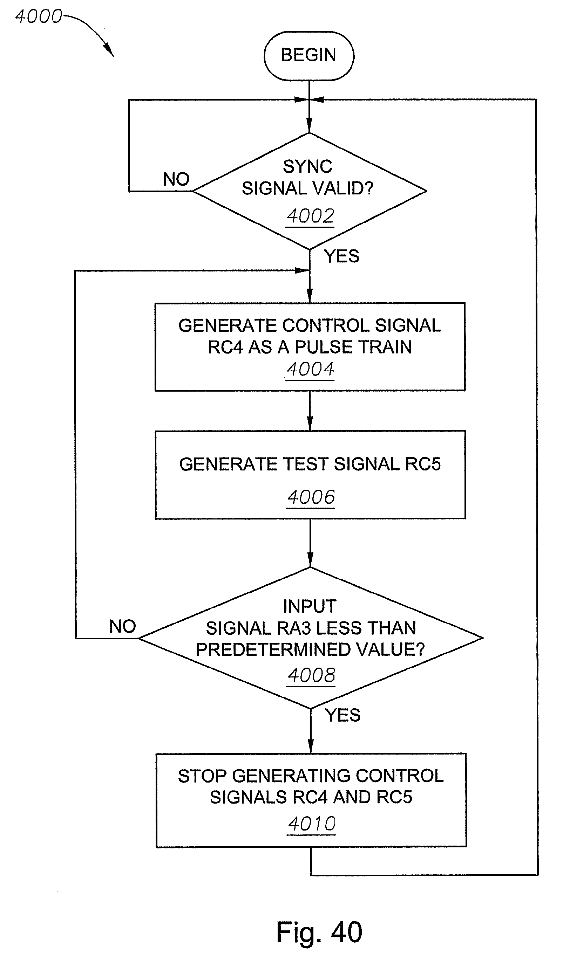

Referring now to Figs. 30a, 40 and 41, in an exemplary embodiment, during the operation of the 3D glasses 3000, the 3D glasses implement a method 4000 of operation in which the control signals RC4 and RC5 generated by the CPU 3012 are used to operate the charge pump 3016 during the normal or warm up modes of operation of the 3D glasses 3000, as described and illustrated above with reference to Figs. 32, 33, 34, 35 and 36. In 4002, the CPU 3012 determines if a valid synchronization signal has been detected by the signal sensor 3014. If the CPU 3012 determines that a valid synchronization signal has been detected by the signal sensor 3014, then the CPU generates the control signal RC4 in 4004 in the form of a series of short duration pulses.

In an exemplary embodiment, the pulses of the control signal RC4 control the operation of the transistor Q1 to thereby transfer charge to the capacitor C13 until the potential across the capacitor reaches a predetermined level. In particular, when the control signal RC4 switches to a low value, the transistor Q1 connects the inductor L1 to the battery 120. As a result, the inductor L1 stores energy from the battery 120. Then, when the control signal RC4 switches to a high value, the energy that was stored in the inductor L1 is transferred to the capacitor C13. Thus, the pulses of the control signal RC4 continually transfer charge to the capacitor C13 until the potential across the capacitor C13 reaches a predetermined level. In an exemplary embodiment, the control signal RC4 continues until the potential across the capacitor C13 reaches -12V.

In an exemplary embodiment, in 4006, the CPU 3012 generates a control signal RC5. As a result, an input signal RA3 is provided having a magnitude that decreases as the potential across the capacitor C13 increases. In particular, when the potential across the capacitor C13 approaches the predetermined value, the zener diode D7 starts to conduct current thereby reducing the magnitude of the input control signal RA3. In 4008, the CPU 3012 determines if the magnitude of the input control signal RA3 is less than a predetermined value. If the CPU 3012 determines that the magnitude of the input control signal RA3 is less than the predetermined value, then, in 4010, the CPU stops generating the control signals RC4 and RC5. As a result, the transfer of charge to the capacitor C13 stops.

In an exemplary embodiment, the method 4000 may be implemented after the method 3900 during operation of the 3D glasses 3000.

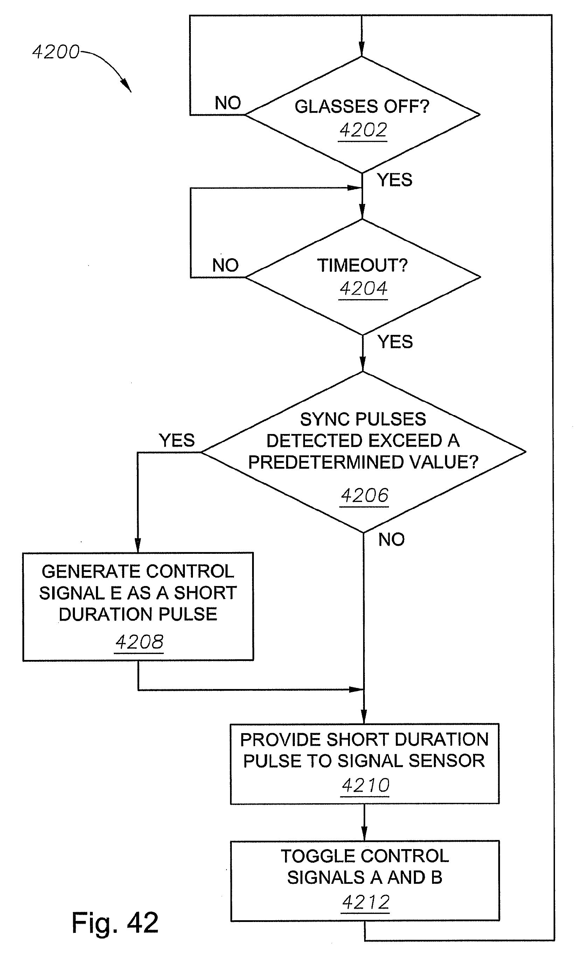

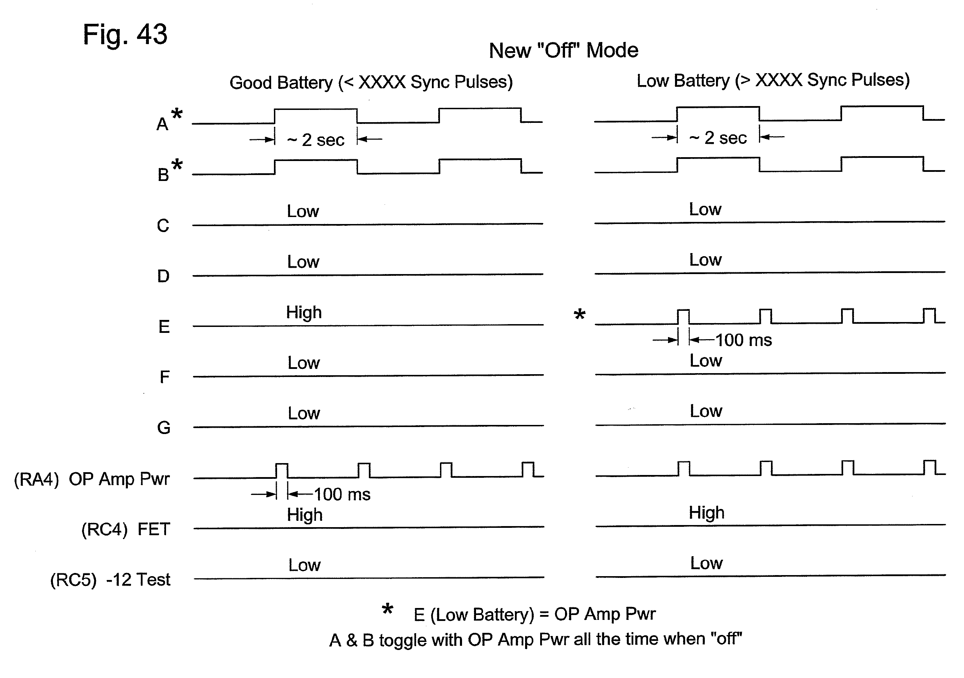

Referring now to Figs. 30a, 42 and 43, in an exemplary embodiment, during the operation of the 3D glasses 3000, the 3D glasses implement a method 4200 of operation in which the control signals A, B, C, D, E, F, G, RA4, RC4 and RC5 generated by the CPU 3012 are used to determine the operating status of the battery 120 when the 3D glasses 3000 have been switched to an off condition. In 4202, the CPU 3012 determines if the 3D glasses 3000 are off or on. If the CPU 3012 determines that the 3D glasses 3000 are off, then the CPU determines, in 4204, if a predetermined timeout period has elapsed in 4204. In an exemplary embodiment, the timeout period is 2 seconds in length.

If the CPU 3012 determines that the predetermined timeout period has elapsed, then the CPU determines, in 4206, if the number of synchronization pulses detected by the signal sensor 3014 within a predetermined prior time period exceeds a predetermined value. In an exemplary embodiment, in 4206, predetermined prior time period is a time period that has elapsed since the most recent replacement of the battery 120.

If the CPU 3012 determines that the number of synchronization pulses detected by the signal sensor 3014 within a predetermined prior time period does exceed a predetermined value, then the CPU, in 4208, generates control signal E as a short duration pulse, in 4210, provides the control signal RA4 as a short duration pulse to the signal sensor 3014, and, in 4212, toggles the operational state of the control signals A and B, respectively. In an exemplary embodiment, if the number of synchronization pulses detected by the signal sensor 3014 within a predetermined prior time period does exceed a predetermined value, then this may indicate that the remaining power in the battery 120 is low.

Alternatively, if the CPU 3012 determines that the number of synchronization pulses detected by the signal sensor 3014 within a predetermined prior time period does not exceed a predetermined value, then the CPU, in 4210, provides the control signal RA4 as a short duration pulse to the signal sensor 3014, and, in 4212, toggles the operational state of the control signals A and B, respectively. In an exemplary embodiment, if the number of synchronization pulses detected by the signal sensor 3014 within a predetermined prior time period does not exceed a predetermined value, then this may indicate that the remaining power in the battery 120 is not low.

In an exemplary embodiment, the combination of the control signals A and B toggling and the short duration pulse of the control signal E, in 4208 and 4212, causes the shutters, 3002 and 3004, of the 3D glasses 3000 to be closed, except during the short duration pulse of the control signal E. As a result, in an exemplary embodiment, the shutters, 3002 and 3004, provide a visual indication to the user of the 3D glasses 3000 that the power remaining within the battery 120 is low by flashing the shutters of the 3D glasses open for a short period of time. In an exemplary embodiment, providing the control signal RA4 as a short duration pulse to the signal sensor 3014, in 4210, permits the signal sensor to search for and detect synchronization signals during the duration of the pulse provided.

In an exemplary embodiment, the toggling of the control signals A and B, without also providing the short duration pulse of the control signal E, causes the shutters, 3002 and 3004, of the 3D glasses 3000 to remain closed. As a result, in an exemplary embodiment, the shutters, 3002 and 3004, provide a visual indication to the user of the 3D glasses 3000 that the power remaining within the battery 120 is not low by not flashing the shutters of the 3D glasses open for a short period of time.

In embodiments that lack a chronological clock, time may be measured in terms of sync pulses. The CPU 3012 may determine time remaining in the battery 120 as a factor of the number of sync pulses for which the battery may continue to operate and then provide a visual indication to the user of the 3D glasses 3000 by flashing the shutters, 3002 and 3004, open and closed.

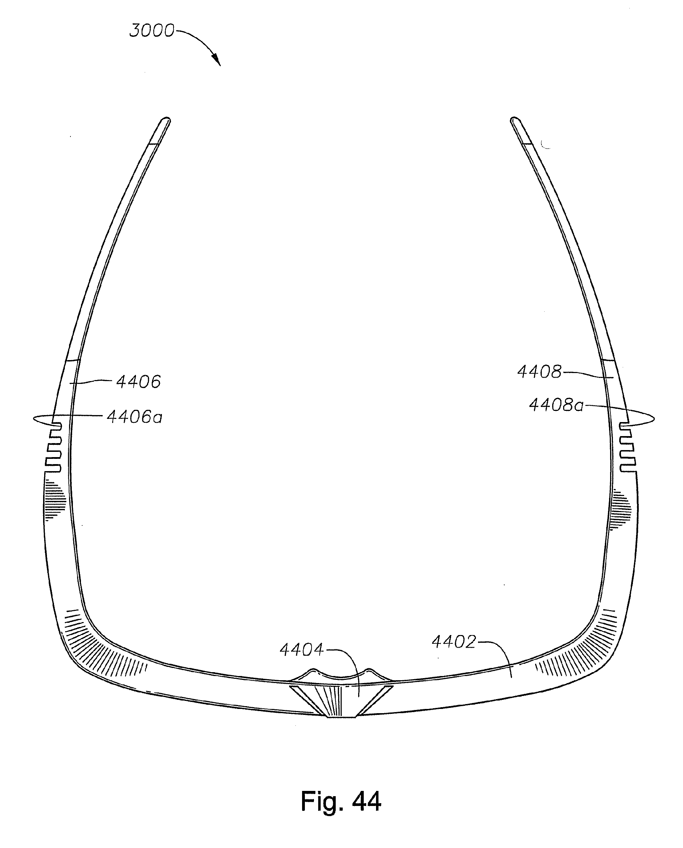

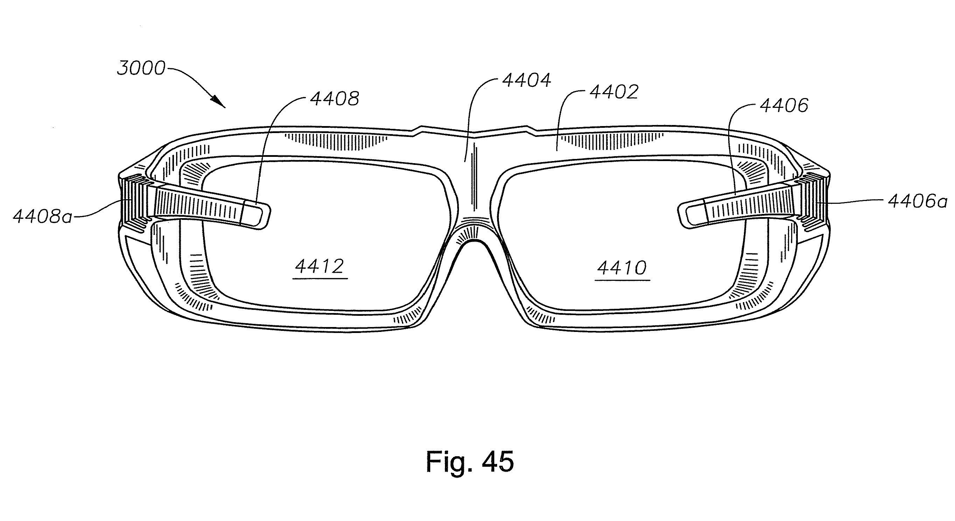

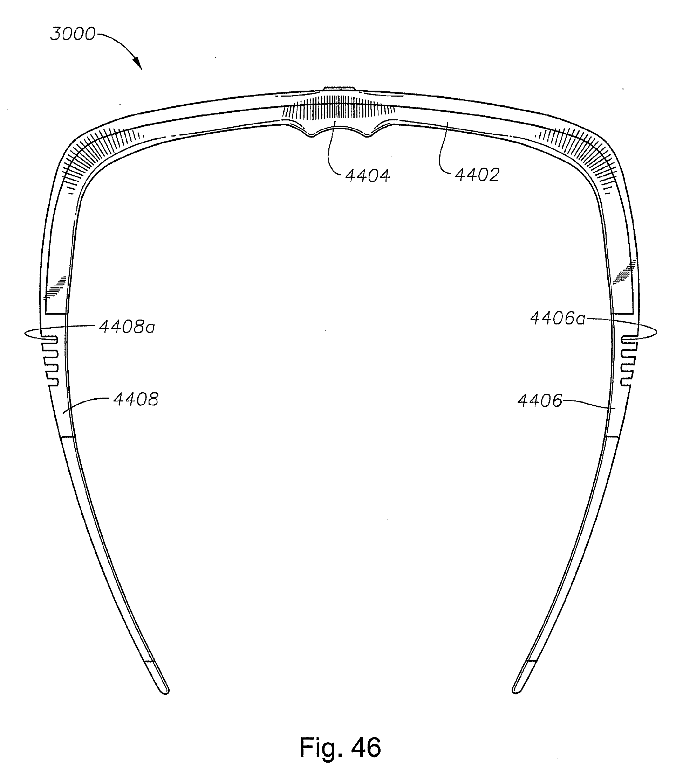

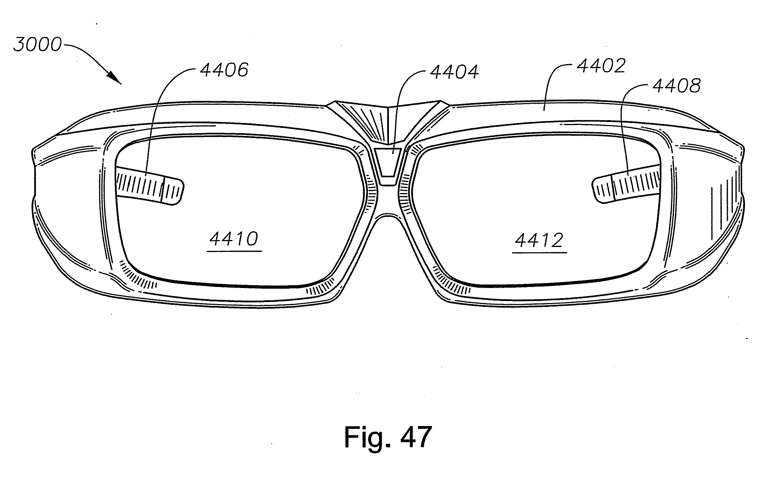

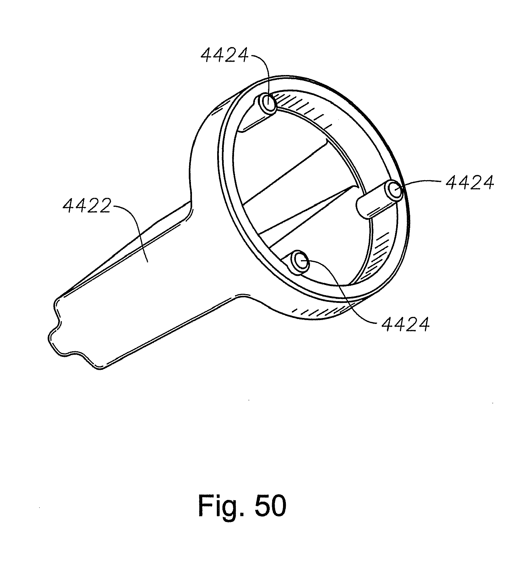

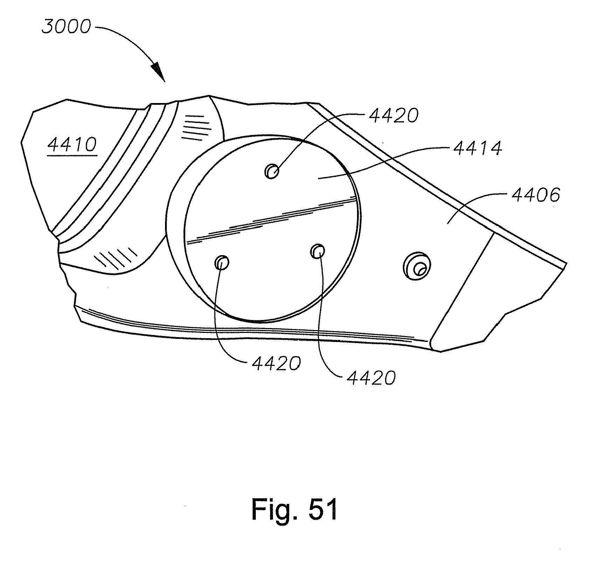

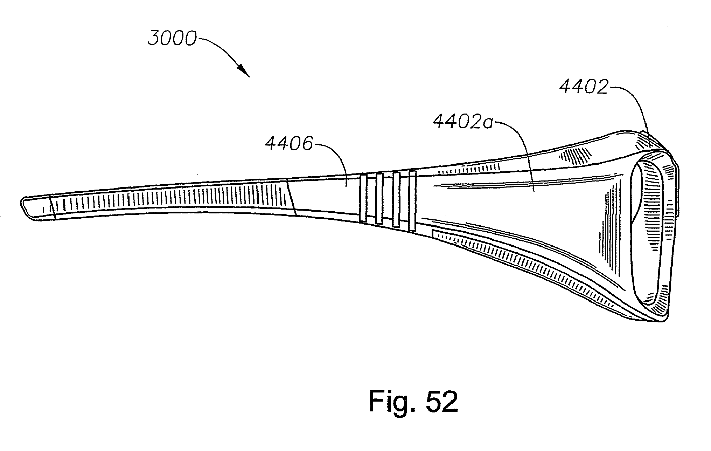

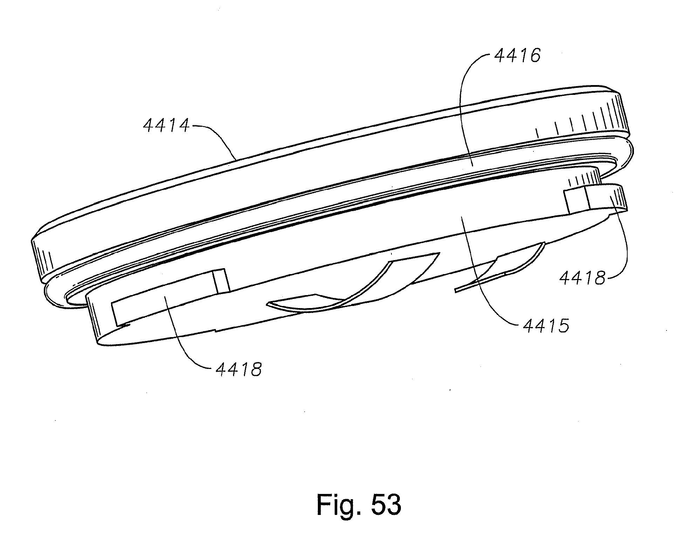

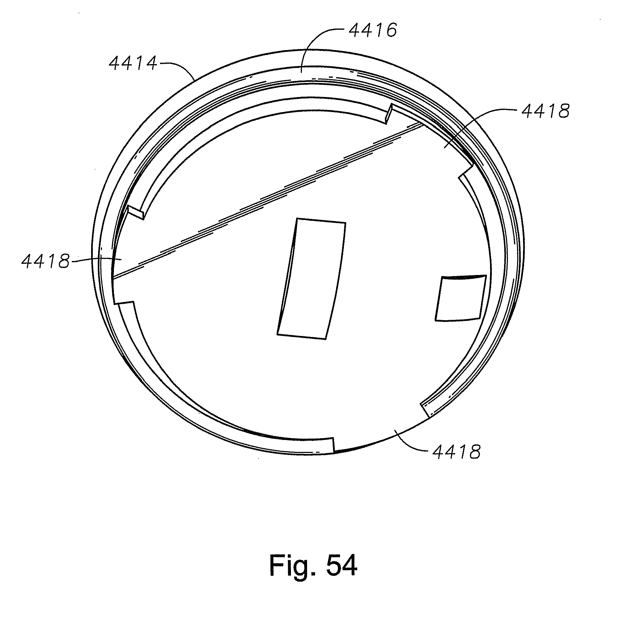

Referring now to Figures 44-55, in an exemplary embodiment, one or more of the 3D glasses 104, 1800 and 3000 include a frame front 4402, a bridge 4404, right temple 4406, and a left temple 4408. In an exemplary embodiment, the frame front 4402 houses the control circuitry and power supply for one or more of the 3D glasses 104, 1800 and 3000, as described above, and further defines right and left lens openings, 4410 and 4412, for holding the right and left ISS shutters described above. In some embodiments, the frame front 4402 wraps around to form a right wing 4402a and a left wing 4402b. In some embodiments, at least part of the control circuitry for the 3D glasses 104, 1800 and 3000 are housed in either or both wings 4402a and 4402b.

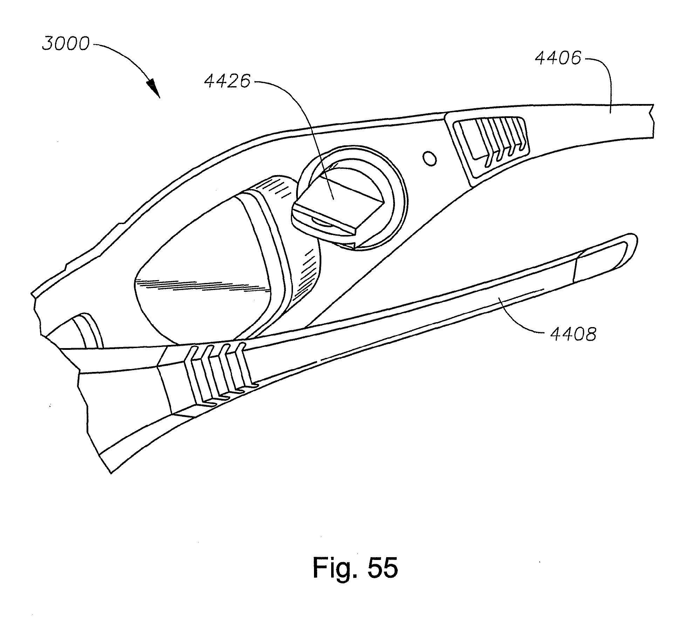

In an exemplary embodiment, the right and left temples, 4406 and 4408, extend from the frame front 4402 and include ridges, 4406a and 4408a, and each have a serpentine shape with the far ends of the temples being spaced closer together than at their respective connections to the frame front. In this manner, when a user wears the 3D glasses 104, 1800 and 3000, the ends of the temples, 4406 and 4408, hug and are held in place on the user's head. In some embodiments, the spring rate of the temples, 4406 and 4408, is enhanced by the double bend while the spacing and depth of the ridges, 4406a and 4408a, control the spring rate. As shown in Figure 55, some embodiments do not use a double bended shape but, rather, use a simple curved temple 4406 and 4408.

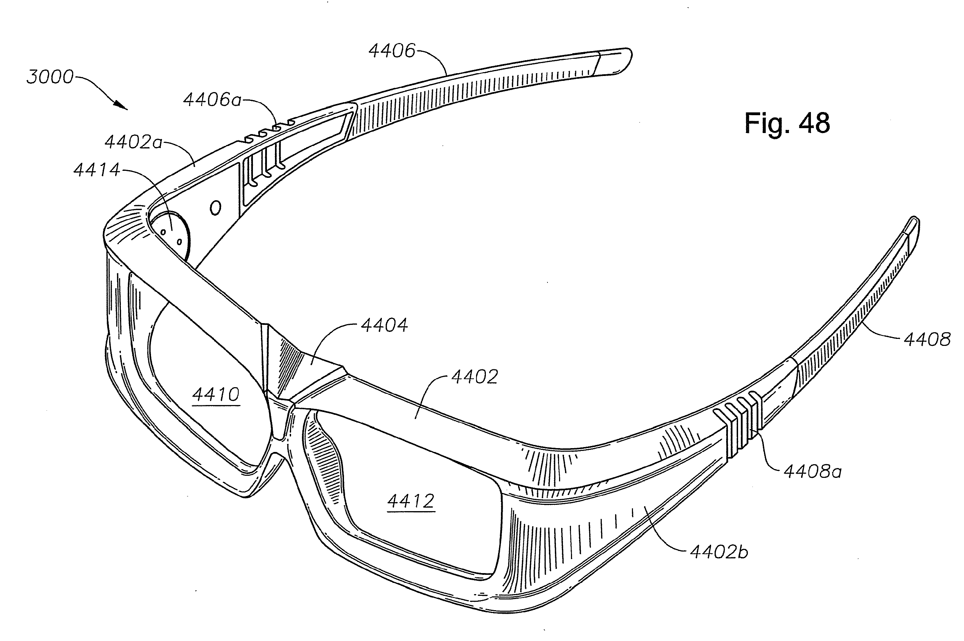

Referring now to Figures 48-55, in an exemplary embodiment, the control circuitry for one or more of the 3D glasses 104, 1800 and 3000 is housed in the frame front, which includes the right wing 4402a, and the battery is housed in the right wing 4402a. Furthermore, in an exemplary embodiment, access to the battery 120 of the 3D glasses 3000 is provided through an opening, on the interior side of the right wing 4402a, that is sealed off by a cover 4414 that includes an o-ring seal 4416 for mating with and sealingly engaging the right wing 4402a.

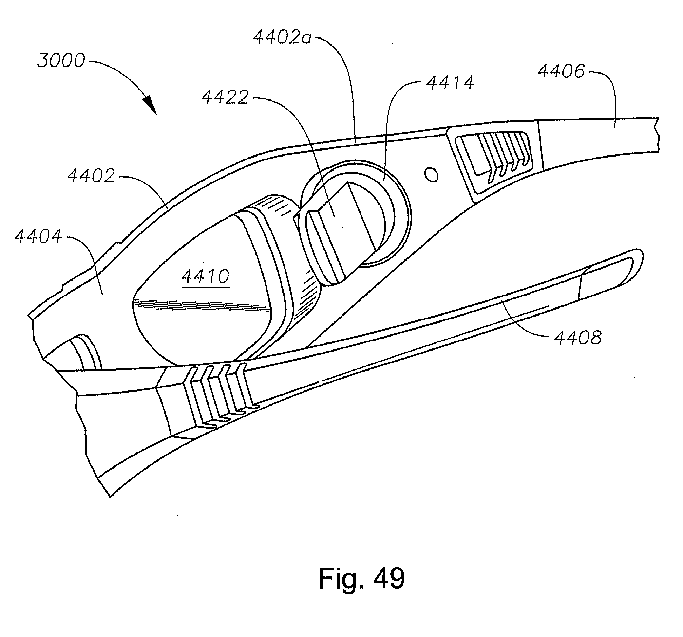

Referring to Figures 49-55, in some embodiments, the battery is located within a battery cover assembly formed by cover 4414 and cover interior 4415. Battery cover 4414 may be attached to battery cover interior 4415 by, for example, ultra-sonic welding. Contacts 4417 may stick out from cover interior 4415 to conduct electricity from the battery 120 to contacts located, for example, inside the right wing 4402a.

Cover interior 4415 may have circumferentially spaced apart radial keying elements 4418 on an interior portion of the cover. Cover 4414 may have circumferentially spaced apart dimples 4420 positioned on an exterior surface of the cover.

In an exemplary embodiment, as illustrated in Figures 49-51, the cover 4414 may be manipulated using a key 4422 that includes a plurality of projections 4424 for mating within and engaging the dimples 4420 of the cover. In this manner, the cover 4414 may be rotated relative to the right wing 4402a of the 3D glasses 104, 1800 and 3000 from a closed (or locked) position to an open (or unlocked) position. Thus, the control circuitry and battery of the 3D glasses 104, 1800 and 3000 may be sealed off from the environment by the engagement of the cover 4414 with the right wing 4402a of the 3D glasses 3000 using the key 4422. Referring to Figure 55, in another embodiment, key 4426 may be used.

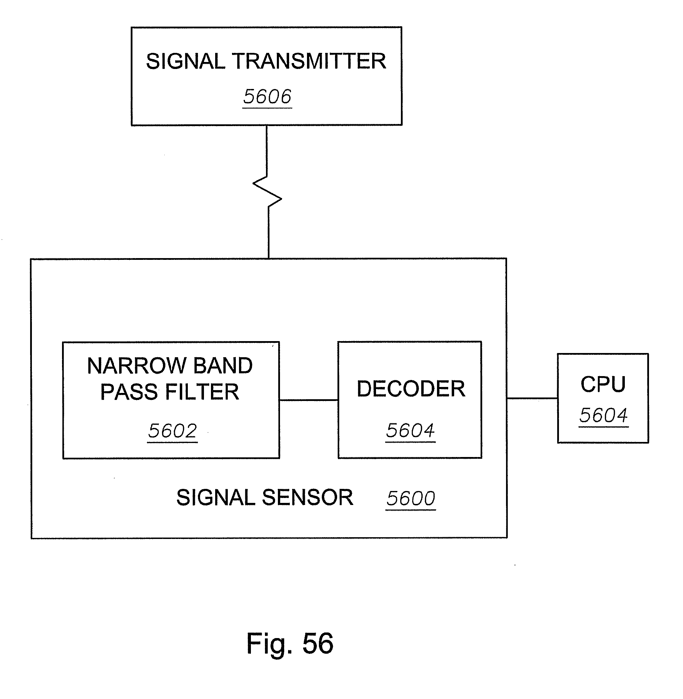

Referring now to Fig. 56, an exemplary embodiment of a signal sensor 5600 includes a narrow band pass filter 5602 that is operably coupled to a decoder 5604. The signal sensor 5600 in turn is operably coupled to a CPU 5604. The narrow band pass filter 5602 may be an analog and/or digital band pass filter that may have a pass band suitable for permitting a synchronous serial data signal to pass therethrough while filtering out and removing out of band noise.

In an exemplary embodiment, the CPU 5604 may, for example, be the CPU 114, the CPU 1810, or the CPU 3012, of the 3D glasses, 104, 1800, or 3000.

In an exemplary embodiment, during operation, the signal sensor 5600 receives a signal from a signal transmitter 5606. In an exemplary embodiment, the signal transmitter 5606 may, for example, be the signal transmitter 110.

In an exemplary embodiment, the signal 5700 transmitted by the signal transmitter 5606 to the signal sensor 5600 includes one or more data bits 5702 that are each preceded by a clock pulse 5704. In an exemplary embodiment, during operation of the signal sensor 5600, because each bit 5702 of data is preceded by a clock pulse 5704, the decoder 5604 of the signal sensor can readily decode long data bit words. Thus, the signal sensor 5600 is able to readily receive and decode synchronous serial data transmissions from the signal transmitter 5606. By contrast, long data bit words, that are asynchronous data transmissions, are typically difficult to transmit and decode in an efficient and/or error free fashion. Therefore, the signal sensor 5600 provides an improved system for receiving data transmissions. Further, the use of synchronous serial data transmission in the operation of the signal sensor 5600 ensures that long data bit words may be readily decoded.

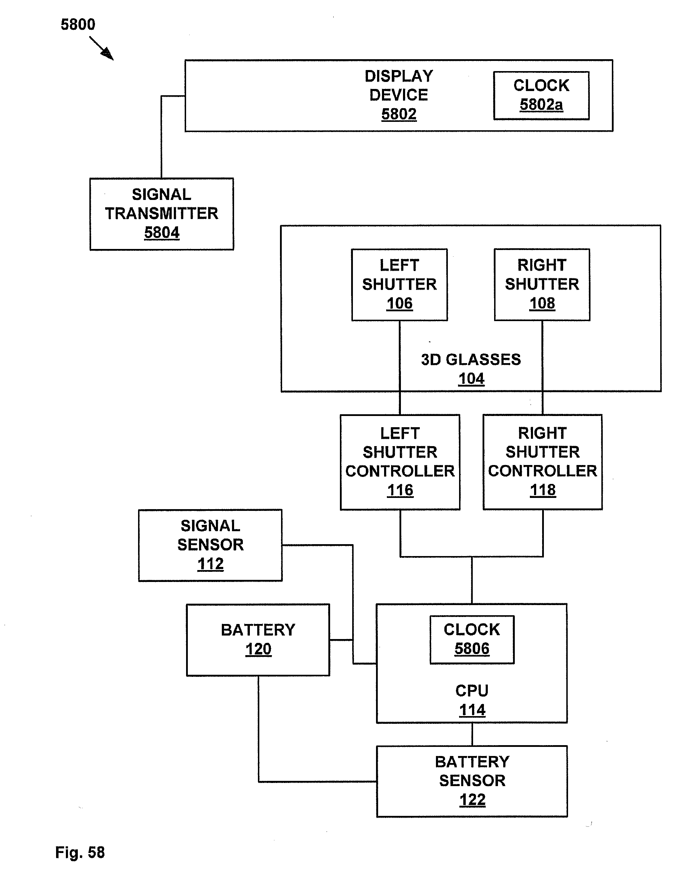

Referring to Fig. 58, an exemplary embodiment of a system 5800 for viewing 3D images is substantially identical to the system 100, except as noted below. In an exemplary embodiment, the system 5800 includes a display device 5802, having an internal clock 5802a, that is operably coupled to a signal transmitter 5804.

In an exemplary embodiment, the display device 5802 may, for example, be a television, movie screen, liquid crystal display, computer monitor, or other display device, adapted to display, for example, left and right images intended for viewing by the left and right eyes, respectively, of a user of the system 5800. In an exemplary embodiment, a signal transmitter 5804 is operably coupled to the display device 5802 that transmits signals to the signal sensor 112 of the 3D glasses 104, that includes an internal clock 5806, for controlling the operation of the 3D glasses. In an exemplary embodiment, the signal transmitter 5804 is adapted to transmit signals such as, for example, electromagnetic, infrared, acoustic, and/or radio frequency signals that may or may not be transmitted through an insulated conductor and/or through free space.

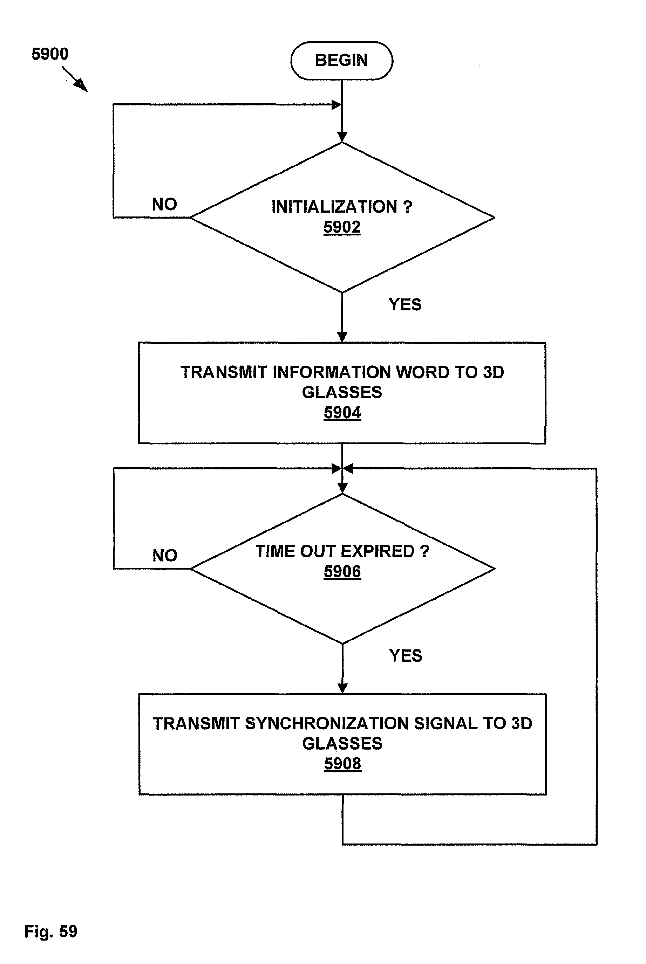

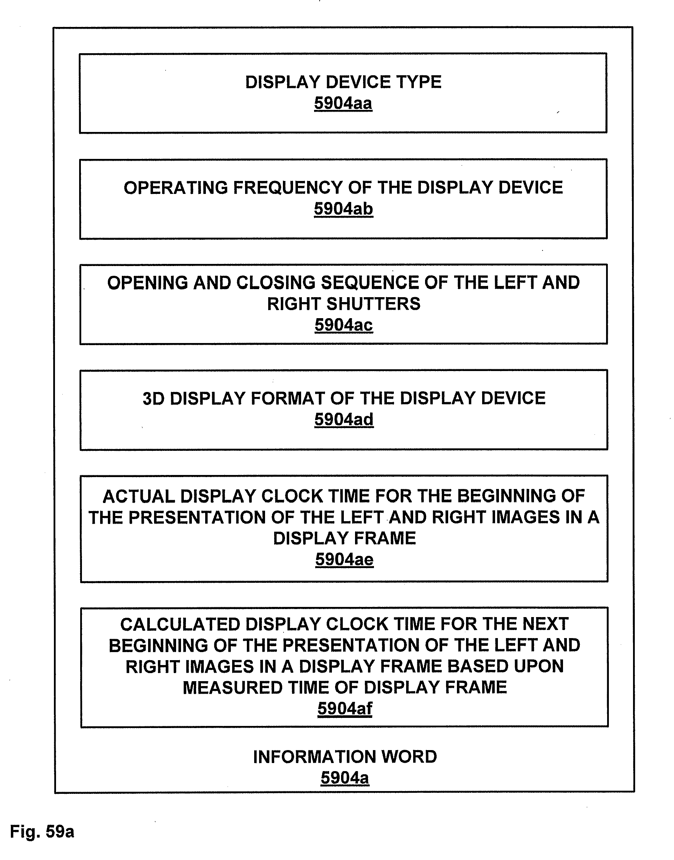

Referring to Fig. 59, in an exemplary embodiment, the system 5800 implements a method 5900 of operation in which, in 5902, the system determines if the operation of the 3D glasses 104 with the display device 5802 should be initialized. In an exemplary embodiment, the system 5800 may determine that the operation of the 3D glasses 104 with the display device 5802 should be initialized if, for example, the power supply for either device is cycled from off to on or if the user of the system selects an initialization of operation of the 3D glasses with the display device 5802.

If the system determines that the operation of the 3D glasses 104 with the display device 5802 should be initialized in 5902, then, in 5904, an information word is transmitted from the display device 5802 using the signal transmitter 5804 and received by the signal sensor 112. In an exemplary embodiment, as illustrated in Fig. 59a, the information word may include one or more of the following: 1) the type 5904aa of display device, 2) the operating frequency 5904ab of the display device, 3) the opening and closing sequence 5904ac of the left and right shutters, 106 and 108, 4) the 3D display format 5904ad that will be used by the display device 5802, 5) the actual display clock time 5904ae for the beginning of the presentation of the left and right images in a display frame, and 6) the calculated display clock time 5904af for the next beginning of the presentation of the left and right images in a display frame based upon the measured time duration of the display frame. In an exemplary embodiment, the information word is then used by the 3D glasses 104 to control the operation of the left and right shutters, 106 and 108, to permit the wearer of the 3D glasses to view 3D images by viewing the display device 5802. In an exemplary embodiment, the information word is also used initially to synchronize the clock 5802a of the display device 5802 with the clock 114a of the CPU 114 of the 3D glasses. In this manner, the opening and closing of the left and right shutters, 106 and 108, may be initially synchronized with the corresponding images intended for viewing through the respective shutters.

In an exemplary embodiment, the system 5800 then determines if a time out period has expired in 5906. If the time out period has expired, then, in 5908, the transmitter 5804 then transmits a synchronization signal to the signal sensor 112. In an exemplary embodiment, the synchronization signal includes a synchronization pulse, a time of transmission of the synchronization signal and a time delay of the transmission of the synchronization signal. In this manner, the synchronization signal is used to resynchronize the clock 5802a of the display device 5802 with the clock 114a of the CPU 114 of the 3D glasses. In this manner, the opening and closing of the left and right shutters, 106 and 108, may be resynchronized with the corresponding images intended for viewing through the respective shutters.

In an exemplary embodiment, if the time delay of the transmission of the synchronization signal is anything other than a zero value, the non-zero value of the time delay of the transmission of the synchronization signal may then be used by the CPU 114 of the 3D glasses 104 to correctly synchronize the clock 114a of the CPU with the clock 5802a of the display device 5802. In an exemplary embodiment, the time delay of the transmission of the synchronization signal may be a non-zero value if, for example, there was a time delay within the signal transmitter 5804 that affected the time of transmission of the synchronization signal to the signal sensor 112. In this manner, the method 5900 may permit effective synchronization of the clock 114a of the CPU with the clock 5802a of the display device 5802 in a radio frequency communication protocol such as Bluetooth.

In an exemplary embodiment, the system 5800 and/or method 5900 may include, omit, or substitute, one or more aspects of one or more of the exemplary embodiments.

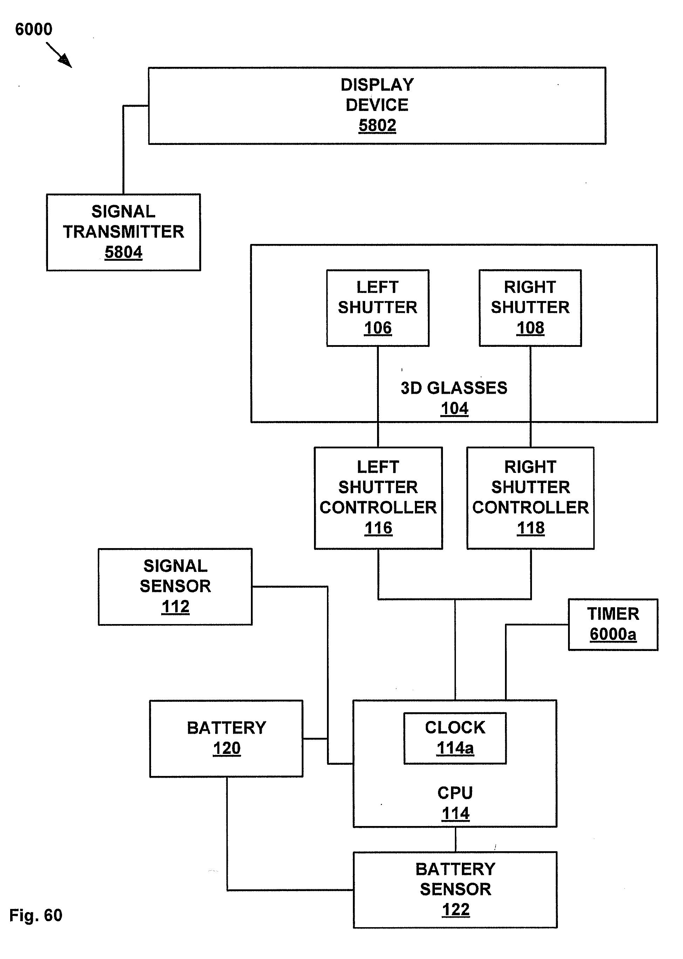

Referring to Fig. 60, an exemplary embodiment of a system 6000 for viewing 3D images is substantially identical to the system 5800, except as noted below. In an exemplary embodiment, the system 6000 includes a timer 6000a that is operably coupled to the CPU 114 of the 3D glasses 104.

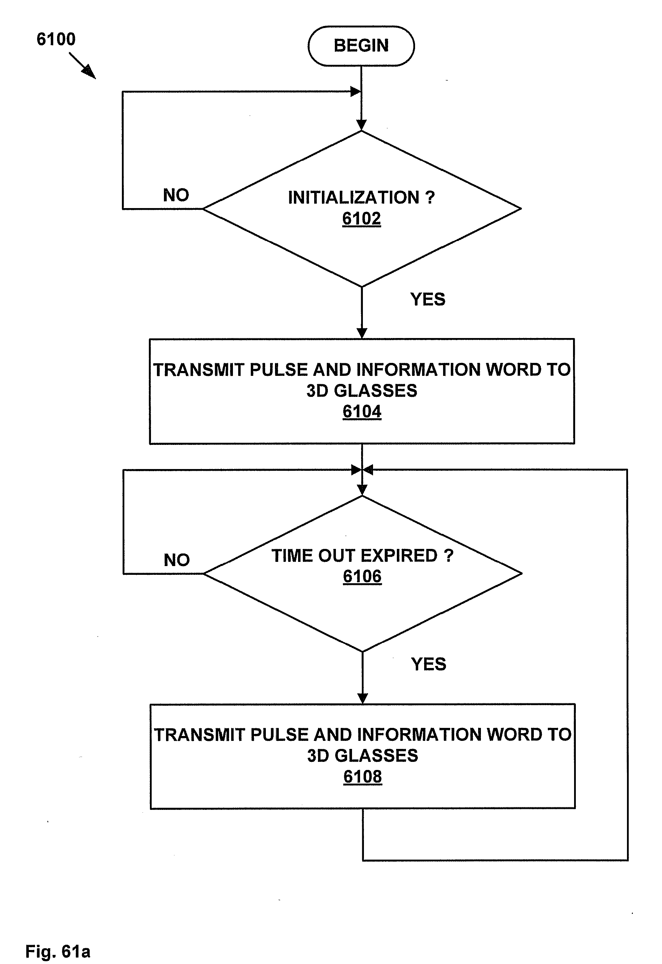

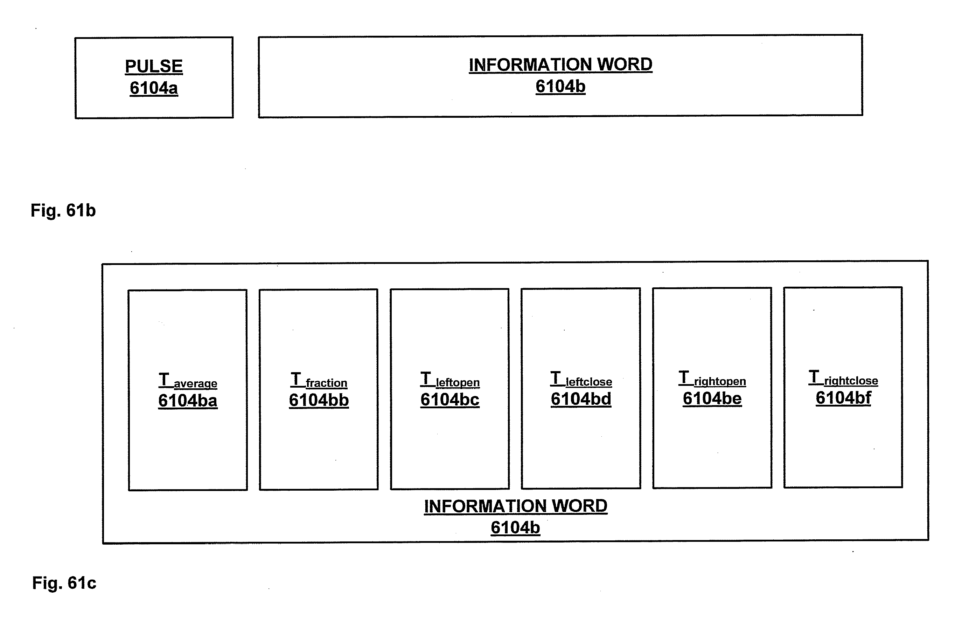

Referring now to Figs. 61a-61c, in an exemplary embodiment, the system 6000 implements a method 6100 in which, in 6102, the system determines if the operation of the 3D glasses 104 with the display device 5802 should be initialized. In an exemplary embodiment, the system 5800 may determine that the operation of the 3D glasses 104 with the display device 5802 should be initialized if, for example, the power supply for either device is cycled from off to on or if the user of the system selects an initialization of operation of the 3D glasses with the display device 5802.

If the system determines that the operation of the 3D glasses 104 with the display device 5802 should be initialized in 6102, then, in 6104, a pulse 6104a and an information word 6104b is transmitted from the display device 5802 using the signal transmitter 5804 and received by the signal sensor 112 of the 3D glasses 104. In an exemplary embodiment, the information word 6104b may include one or more of the following: 1) the average time between the start of display frames or T_{average} 6104ba, 2) the fractional remainder of the average time between the start of display frames calculation or T_{fraction} 6104bb, 3) the delay of the opening of the left shutter of the 3D glasses from the start of the display frame or T_{LeftOpen} 6104bc, 4) the delay of the closing of the left shutter of the 3D glasses from the start of the display frame or T_{LeftClose} 6104bd, 5) the delay of the opening of the left shutter of the 3D glasses from the start of the display frame or T_{RightOpen} 61 04be, and 6) the delay of the closing of the right shutter of the 3D glasses from the start of the display frame or T_{RightClose} 6104bf. In an exemplary embodiment, the information word 6104b is then used by the 3D glasses 104 to control the operation of the left and right shutters, 106 and 108, to permit the wearer of the 3D glasses to view 3D images by viewing the display device 5802. In an exemplary embodiment, the information word may also be used to synchronize the clock 5802a of the display device 5802 with the clock 114a of the CPU 114 of the 3D glasses. In this manner, the opening and closing of the left and right shutters, 106 and 108, may be initially synchronized with the corresponding images intended for viewing through the respective shutters.

In an exemplary embodiment, the system 6000 then determines if a time out period has expired in 6106. If the time out period has expired, then, in 6108, the transmitter 5804 may then transmit another pulse and information word to the signal sensor 112 of the 3D glasses 104.

In an exemplary embodiment, the system 6000 and/or method 6100 may include, omit, or substitute, one or more aspects of one or more of the exemplary embodiments.

In an exemplary embodiment, during operation of the system 6000, the system may implement a method 6200 of operation in which, in 6202, the 3D glasses 104 may detect the rising edge of the pulse 6104a transmitted by the signal transmitter 5804 of the display device 5802. If the 3D glasses 104 do not detect the rising edge of the pulse in 6202, and a time out occurs in 6204, then the 3D glasses are placed into a CLEAR MODE of operation in 6206 using, for example, one or more of the methods 1300, 2500 and/or 3700 described herein, and operation continues in 6202.

Alternatively, if the 3D glasses 104 detect the rising edge of the pulse in 6202, then the timer 6000a of the 3D glasses 104 is reset and started in 6208 in order to measure the elapsed time since the detection of the rising edge of the pulse which, in an exemplary embodiment, marks the beginning of the display frame. The 3D glasses 104 may then determine if the value of the average time between the start of display frames or T_{average} 6104ba transmitted by the display device 5802 to the 3D glasses is invalid in 6210. If the 3D glasses 104 determine that the value of the average time between the start of display frames or T_{average} 6104ba transmitted by the display device 5802 to the 3D glasses is invalid, then the 3D glasses are placed into a CLEAR MODE of operation in 6206 using, for example, one or more of the methods 1300, 2500 and/or 3700 described herein, and operation continues in 6202.

Alternatively, if the 3D glasses 104 do not determine that the value of the average time between the start of display frames or T_{average} 6104ba transmitted by the display device 5802 to the 3D glasses is invalid, then the 3D glasses 104 determine if the value of the average time between the start of display frames or T_{average} 6104ba is equal to a predetermined default value in 6214. If the 3D glasses 104 determine if the value of the average time between the start of display frames or T_{average} 6104ba is equal to a predetermined default value, then the 3D glasses are operated in accordance with a corresponding set of default parameters in 6216, and operation continues in 6202.

Alternatively, if the 3D glasses 104 do not determine that the value of the average time between the start of display frames or T_{average} 6104ba is equal to a predetermined default value, then, in 6218, the 3D glasses determine if the value of the elapsed time within the timer 6000a is equal to any one of the delay times, T_{LeftOpen} 6104bc, T_{LeftClose} 6104bd, T_{RightOpen} 6104be, and T_{RightClose} 6104bf, within the information word 6104b. If the 3D glasses 104 determine that the value of the elapsed time within the timer 6000a is equal to any one of the delay times, T_{LeftOpen} 6104bc, TL_{eftClose} 6104bd, T_{RightOpen} 6104be, and T_{RightClose} 6104bf, within the information word 6104b, then the left and right shutters, 106 and 108, of the 3D glasses are operated in accordance with the corresponding delay time in 6220.

In particular, in 6220, 1) if the elapsed time within the timer 6000a is equal to the delay time, T_{LeftOpen} 6104bc, then the left shutter 106 is opened, 2) if the elapsed time within the timer 6000a is equal to the delay time, TL_{eftClose} 6104bd, then the left shutter 106 is closed, 3) if the elapsed time within the timer 6000a is equal to the delay time, T_{RightOpen} 6104be, then the right shutter 108 is opened, and 4) if the elapsed time within the timer 6000a is equal to the delay time, T_{RightClosed} 6104bf, then the right shutter 108 is closed.

The 3D glasses 104 then determine, in 6222, if an operational cycle of the 3D glasses has been completed in 6222. In an exemplary embodiment, an operation cycle of the 3D glasses 104 is completed if the left and right shutters, 106 and 108, have both been opened and closed. If the 3D glasses 104 determine that an operational cycle of the 3D glasses has not been completed in 6222, then the operation of the 3D glasses continues in 6218. Alternatively, if the 3D glasses 104 determine that an operational cycle of the 3D glasses has been completed in 6222, then the operation of the 3D glasses continues in 6202.

In an exemplary embodiment, the system 6000 and/or method 6200 may include, omit, or substitute, one or more aspects of one or more of the exemplary embodiments.

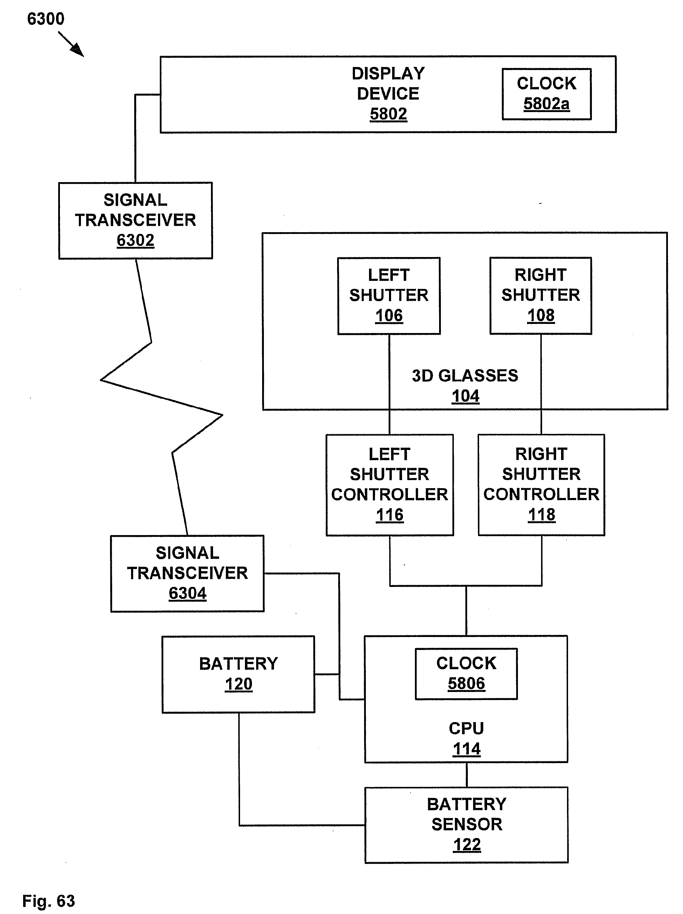

Referring to Fig. 63, an exemplary embodiment of a system 6300 for viewing 3D images is substantially identical to the system 5800, except as noted below. In an exemplary embodiment, the display device 5802 is operably coupled to a signal transceiver 6302 and the CPU 114 of the 3D glasses 104 is operably coupled to a signal transceiver 6304.

In an exemplary embodiment, the signal transceivers, 6302 and 6304, are adapted to transmit signals such as, for example, electromagnetic, infrared, acoustic, and/or radio frequency signals to and from one another that may or may not be transmitted through an insulated conductor and/or through free space.

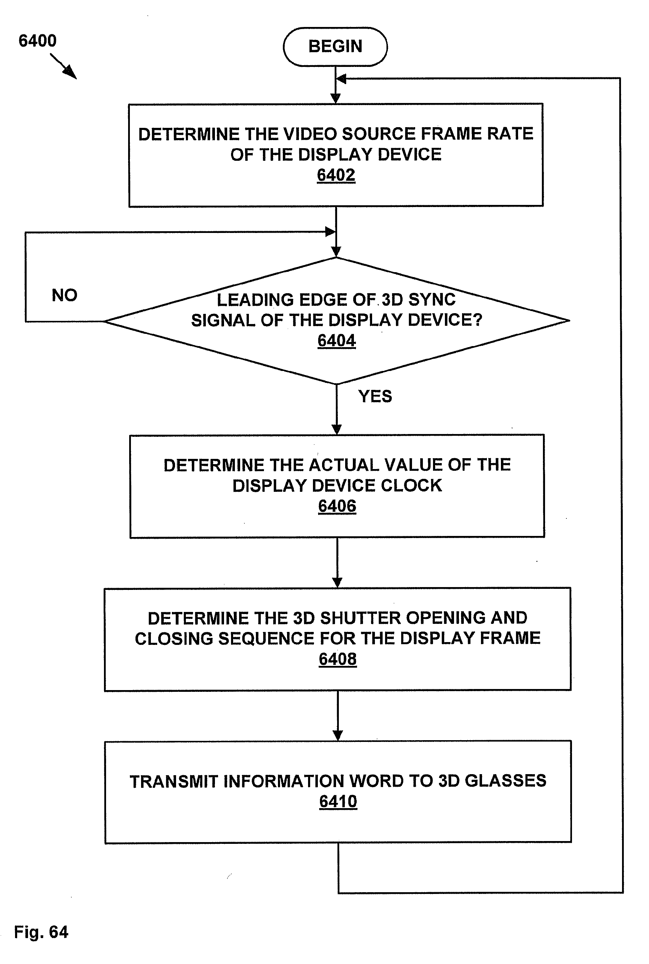

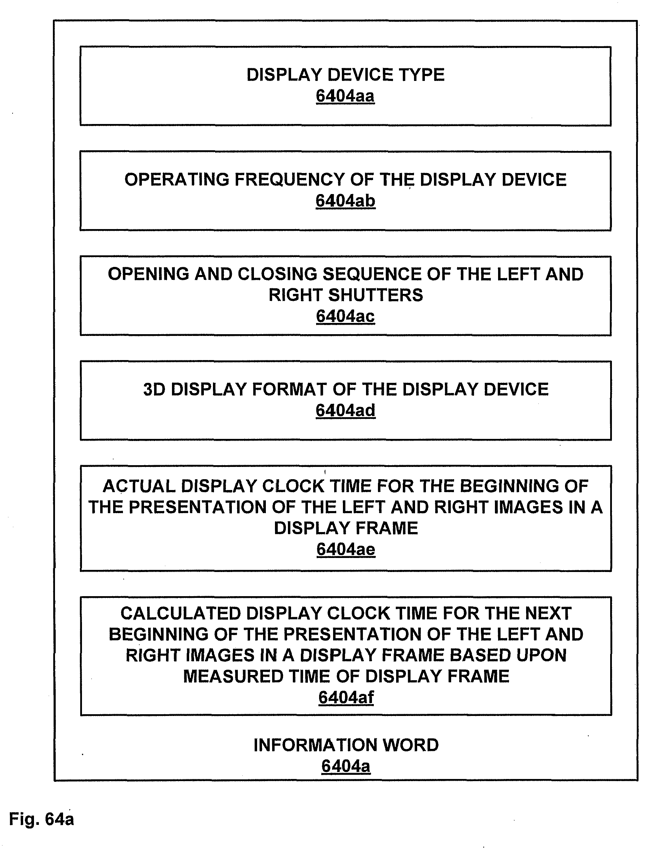

In an exemplary embodiment, as illustrated in Figs. 64 and 64a, the system 6300 implements a method 6400 of operation in which, in 6402, the display device 6302 determines the frame rate of the display device. In an exemplary embodiment, the frame rate of the display device 6302 is determined by measuring the elapsed time between the 3D synchronization pulses within the display device.

In 6404, the display device 6302 may then detect the leading edge of the 3D synchronization pulse of the display device. If the display device 6302 detects the leading edge of the 3D synchronization pulse of the display device, then, in 6406, the display device may determine the actual value of the clock 6302a of the display device.

The display device 6302 may then determine the 3D shutter opening and closing sequence that may be used by the 3D glasses 104 in 6408. The display device 6302 may then transmit an information word 641 0a to the 3D glasses 104 in 6410.

In an exemplary embodiment, the information word 6410a may include one or more of the following: 1) information 6404aa regarding the display device type, 2) information 6404ab regarding the operating frequency of the display device, 3) information 6404ac regarding the opening and closing sequence of the shutters of the 3D glasses, 4) information 6404ad regarding the 3D display format of the display device, 5) information 6404ae regarding the actual time value of the display device clock corresponding to the presentation of the left and right images in a display frame, and 6) information 6404af regarding the calculated value of the display clock time for the next beginning of the presentation of the left and right images in a display frame based upon the measured clock time of the display frame.

In an exemplary embodiment, the system 6300 and/or method 6400 may include, omit, or substitute, one or more aspects of one or more of the exemplary embodiments.

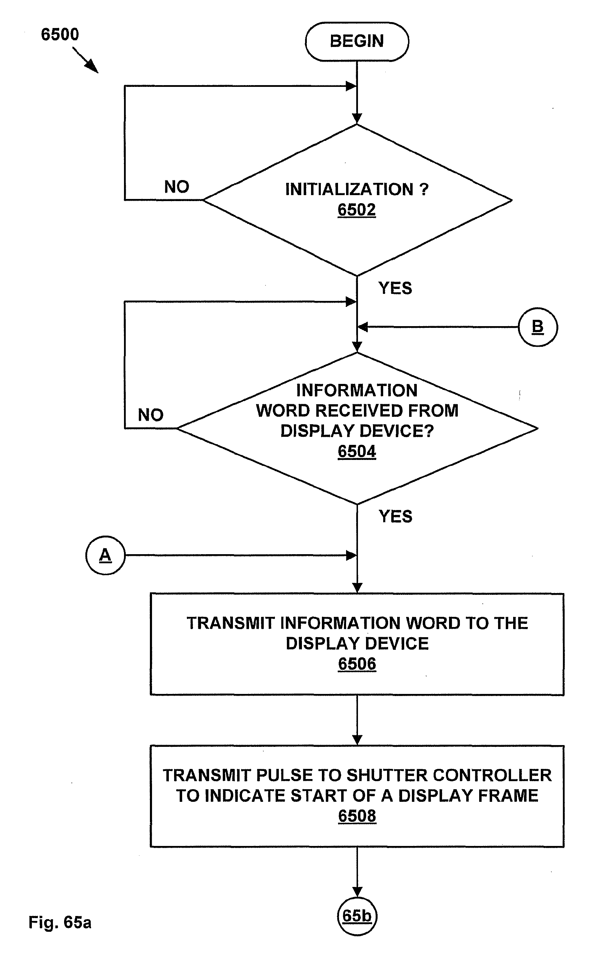

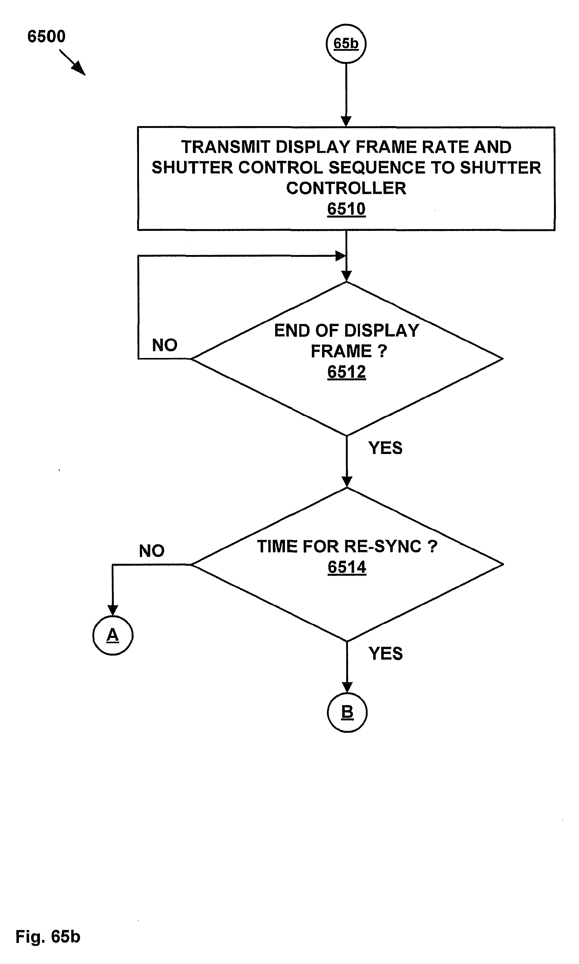

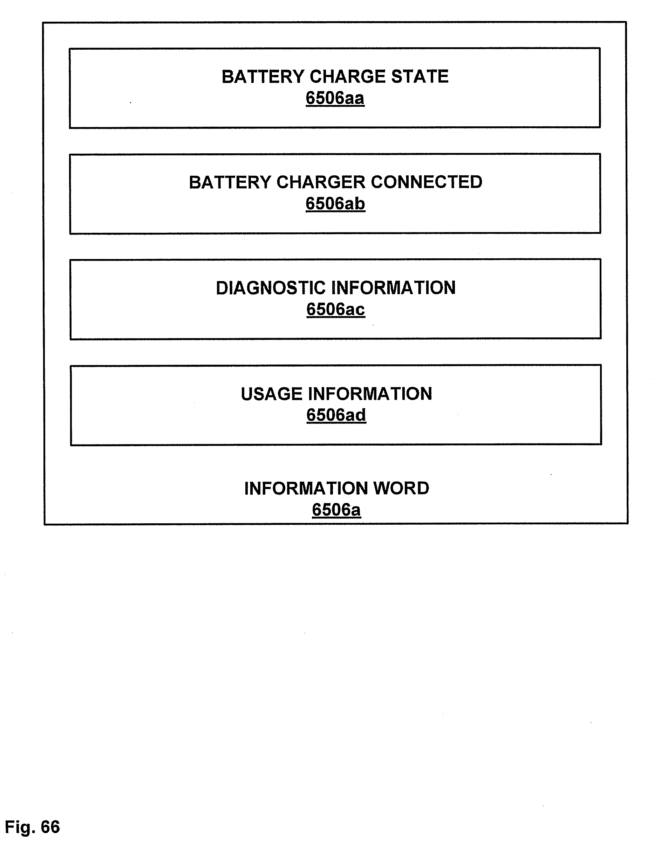

Referring now to Figs. 65a, 65b and 66, in an exemplary embodiment, during operation of the system 6300, the system implements a method 6500 of operation in which, in 6502, the system determines if the operation of the 3D glasses 104 with the display device 5802 should be initialized. In an exemplary embodiment, the system 6300 may determine that the operation of the 3D glasses 104 with the display device 5802 should be initialized if, for example, the power supply for either device is cycled from off to on or if the user of the system selects an initialization of operation of the 3D glasses with the display device 5802.

If the system 6300 determines that the operation of the 3D glasses 104 with the display device 5802 should be initialized in 6502, then, in 6504, the 3D glasses determine if the information word 6404a has been received from the display device 5802.

If the information word 6404a has been received from the display device, then, in 6506, the 3D glasses 104 may transmit an information word 6506a to the display device 5802. In an exemplary embodiment, the information word 6506a may include one or more of the following: 1) information 6506aa regarding the operating state of the battery of the 3D glasses, 2) information 6506ab regarding whether or not a battery charger is connected to the 3D glasses, 3) information 6506ac regarding diagnostic information about the 3D glasses, and 4) information 6506ad regarding usage of the 3D glasses.

After transmitting the information word 6506a to the display device 5802, in 6508, the 3D glasses 104 may then generate a pulse, or other signal or flag, to indicate the start of a display frame on the display device 5802 has begun. In an exemplary embodiment, in 6508, the pulse is transmitted to, and/or otherwise processed by, the CPU 114 and/or the shutter controllers, 116 and 118, of the 3D glasses 104 in order to initiate and control the operation of the shutters, 106 and 108, during the display of the display frame on the display device 5802. In 6510, the display frame rate 6404ab and the shutter control sequence 6404ac, received by the 3D glasses 104 from the display device 5802, may then be transmitted to, and/or processed by, the CPU 114 and/or the shutter controllers, 116 and 118, of the 3D glasses in order to open and close the left and right shutters, 106 and 108, in synchronization with the display of the corresponding left and right images on the display device 5802.

The 3D glasses 104 may then detect the end of the display frame in 6512. If the 3D glasses 104 detect the end of the display frame, then, in 6514, the 3D glasses may determine if the operation of the 3D glasses should be re-synchronized with that of the display device 5802. If the 3D glasses 104 determine that the operation of the 3D glasses should be re-synchronized with the operation of the display device 5802, then, operation continues in 6504. Alternatively, if the 3D glasses 104 determine that the operation of the 3D glasses should not be re-synchronized with the operation of the display device 5802, then, operation continues in 6506.

In an exemplary embodiment, the system 6300 and/or method 6500 may include, omit, or substitute, one or more aspects of one or more of the exemplary embodiments.

In an exemplary embodiment, one or more of the exemplary embodiments may implement one or more aspects of the following advanced 3D frame synchronization protocol:

**Advanced 3D Frame Synchronization Protocol**

| **Date** | **Revision** | **Changes** |
|---|---|---|
| 4/2/2010 | 1.0 | Initial Release |
| | | |
| | | |
| | | |

### 1.0 Scope

This document specifies XpanD's Advanced Frame Synchronization Protocol (AFSP) for transmitting clock synchronization, frame synchronization, frame sequencing and configuration information between video sources and XpanD's 3D stereoscopic (3D) viewing products. The AFSP is applicable to multiple transmission mediums including, but not limited to infrared (IR) light, visible light, and radio frequency (RF).

### 1.1 Objectives

Define a methodology for accurate transmission of 3D frame synchronization independent of the transmission medium.

Define a methodology for communicating frame rates, frame sequences, and other configuration data independent of the transmission medium.

Define a methodology for controlling shutter operation in an environment where continuous transmission of frame discontinuous frame sync environment.

### 1.2 References

VESA Standard Connector and Signal Standards for Stereoscopic Display Hardware, v1.0

### 1.3 Overview

Historically, XpanD's 3D glasses have been used primarily for viewing stereoscopic images generated by analog sources such as CRT monitors and movie projectors with relatively low vertical refresh rates. XpanD's current method of communicating frame synchronization information to the glasses is a sequence of either three or two (3/2) 20µs IR pulses are transmitted at every rising or falling edges of the VESA 3D synchronization square and subsequently controlled the opening and closing of the 3D glasses shutters.

Video display technologies are continuous evolving. The current 3/2 IR pulse method lacks sufficient shutter control flexibility to meet the requirement of the higher refresh monitors with complex pixel drawing methods.

Further, new video games are also being developed which provide participants the option of viewing the same scene from alternate points of view (POV). These multiple POV games require specialized video display interfaces and viewing devices such as XpanD's glasses. The current 3/2 IR pulse method does not provide any media specific control of the shutter operation. Thus, a new method is needed to provide greater control and flexibility of the shutter timing as video and media technology continues to evolve. This specification details the independent control of the shutters based upon data and timing information received from a video image host device. Sufficient flexibility is allowed to enable independent configuration of multiple glasses to support advanced video media such at multiple POV enabled games.

### 2.0 Advance Frame Synchronization Protocol

Regardless of the transmission medium between the video source and glasses, the video source host shall transmit the following to the receiver located in the glasses: AFSP Data and AFSP Strobe.
• AFSP Data
o The data shall be a single data frame consisting of five fields totaling 88 bits. o Data shall be transferred from the receiver to the Shutter Control Logic via any suitable interface including, but not limited to, I²C, SPI, 3-Wire, parallel ports, internal busses, etc.

| Field | # of Bytes | Values | Description |
|---|---|---|---|
| T_{average} | 2 | 0 - 65527 µs | Average time between VESA rising edges. |
| T_{fraction} | 1 | 0 - 256 | Fractional remainder of T_{avg} calculation. |
| T_{LeftOpen} | 2 | 0 - 65535 µs | Left shutter opening delay |
| T_{LeftClose} | 2 | 0 - 65535 µs | Left shutter closing delay |
| T_{RightOpen} | 2 | 0 - 65535 µs | Right shutter opening delay |
| T_{RightClose} | 2 | 0-65535 µs | Right shutter closing delay |

A portion of the T_{average} range is reserved for additional configuration data as may be required for future applications.

| Field | Values | Description |
|---|---|---|
| T_{average} | 65535 | Glasses Clear Mode |
| | 65528 - 65534 | Reserved |

• AFSP Strobe
o The video source host shall transmit sufficient information to synchronize the Shutter Control Logic with the VESA rising edge.
o Synchronization methodology is medium dependant and described in their respective specifications.
o Synchronization shall not drift >1 % in discontinuous transmission mediums, e.g. Bluetooth^{®}.
o The AFSP Strobe shall be a positive going 20µs pulse.

### 3.0 Shutter Control Logic

Regardless of the medium, the Shutter Control Logic (SCL) shall use the AFSP Data and Strobe as follows:
- Upon detection of the rising edge of the AFSP Strobe the SCL shall reset & start a hardware or software timer which increments with sufficient resolution to maintain timing accuracy, typically 1µs.
- When the timer matches the AFSP data value, the SCL shall independently open or close the respective shutter.
- If a T_{average} of 65535 is detected, the SCL shall place the shutter is a 'clear mode' until a valid T_{average} is subsequently received.
- If the AFSP Strobe is not received within 60ms, SCL shall place the shutter is a 'clear mode' until strobes are subsequently detected.
- If a T_{average} is received within the range of 65528 - 65534 inclusively, the SCL shall control the shutters as described in the mediums specification.

In an exemplary embodiment, one or more of the exemplary embodiments may implement one or more aspects of the following advanced frame synchronization with Bluetooth protocol:

**Advance Frame Synchronization with Bluetooth**

| **Date** | **Revision** | **Changes** |
|---|---|---|
| 4/2/2010 | 1.0 | Initial Release |
| | | |
| | | |
| | | |

### 1.0 Scope

This document specifies the implementation of XpanD's Advanced Frame Synchronization Protocol (AFSP) for transmitting clock synchronization, frame synchronization, frame sequencing and configuration information between video sources and XpanD's 3D stereoscopic viewing products using a Bluetooth^{®} (BT) RF link.

### 1.1 Objectives

Define a methodology for accurate transmission of 3D frame synchronization via a BT RF link. Define a methodology for communicating frame rates, frame sequences, and other configuration data from independent of the transmission medium.

Define a methodology for controlling shutter operation in an environment where continuous transmission of frame discontinuous frame sync environment.

Define a production test methodology which allows for test times < 4 seconds.

### 1.2 References

Bluetooth^{®} Core Specification v2.1 + EDR, v3.0+HS, or v4.0

Bluetooth^{®} Human Interface Device (HID) Profile Specification v1.0

Bluetooth^{®} Device ID Profile Specification v1.3

VESA Standard Connector and Signal Standards for Stereoscopic Display Hardware, v1.0 XpanD Advanced 3D Frame Synchronization Protocol, v1.0

### 1.3 Overview

Historically, 3D frame synchronization between video sources and stereoscopic viewing devices used infrared (IR) light pulses to accurately transmit the VESA 3D signal. With the advent of advanced radio frequency (RF) technologies such as Bluetooth^{®} (BT), the accurate transmission of the synchronization with minimal latency and jitter is significantly more difficult to accomplish. Currently, BT is the dominant technology used in consumer electronics. BT will be used to illustrate XpanD's Advanced Frame Synchronization Protocol using a BT 'virtual cable' as defined in the BT Human Interface Device specification.

The BT HID specification describes a methodology to create a 'virtual cable' between a host, e.g. video source, and a client, e.g. 3D glasses. Through this 'virtual cable', data shall be transmitted which provide accurate frame synchronization, shutter timing, and configuration information. Low power consumption is paramount in 3D glasses. IR synchronization was particularly advantageous as frame synchronization pulses were transmitted upon each 3D frame change. As RF semiconductor devices, including BT, consume significant power, continuous transmission of synchronization signals is not possible with current available batteries. By utilizing the accurate timing and clock synchronization inherent in the BT core specifications, discontinuous frame synchronization information can be sent without significant frame skewing.

In the production environment, rapid testing of board level and finished goods is crucial to manufacturing throughput. Unlike IR synchronization techniques, RF technologies such as BT present significant barriers to rapid testing due to their complex communications protocols.

Further, digital television (DTV) manufacturers are developing 3D technologies to support media delivered by ESPN and DirecTV. Some DTV manufacturers have integrated Bluetooth^{®} technology for remote controls and wireless stereo headsets. These manufacturers desire to use BT to communicate the DTV's 3D frame synchronization signal to BT enabled 3D glasses.

As complex RF technologies such as BT consume significantly greater, continuous transmission of synchronization signals is incompatible with the desired battery life goals of XpanD's products. To minimize glasses power consumption, a BT device would have to enter a very low power, i.e. sleep state, for a period significantly longer that the VESA 3D frame sync edges.

Thus, a new method of transmitting the discontinuous frame synchronization information can be sent without significant frame skewing.

### 1.4 System Block Diagram

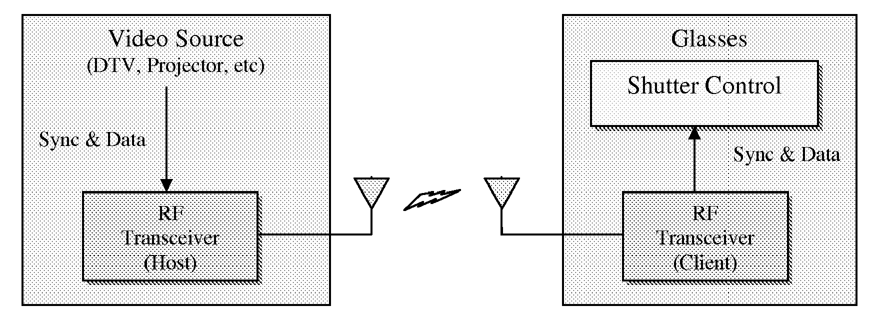

### 1.4 Video Frame Sync Timing

Stereoscopic or other image manipulation technologies (DualView) typically indicate when the left or right frames are presented on the screen by means of a square wave digital output (VESA3D), the period of which is the total time to display both the left and right images.

### 2.0 Advance Frame Synchronization Protocol Operation using Bluetooth

The AFSP consists of two primary components: the video source's microprocessor controlled transceiver (Host) and the 3D Glasses' microprocessor (client) transceiver.

Inherent in the BT technology is a highly accurate BT clock which is synchronized between the host and the client. Taking advantage of this synchronization provides the bases for using BT technology to be able to accurately provide 3D synchronization timing to multiple paired BT clients even though the host can only communicate with one at a time.

This accurate 3D synchronization if accomplished by the BT host sending each BT client the BT clock the following information:
1. Bluetooth Clock Time when the rising edge of the VESA3D square wave occurred.
2. Bluetooth Clock Offset when the next rising edge will occur based upon measuring the VESA3D period.

Thus, since all Bluetooth client's BT clocks are synchronized with the BT host, each client will be able to accurately predict the frame synchronization required for stereoscopic viewing.

### 2.1 Host Operation

### 2.1.1 Frame Rate Detection.

The BT Host shall determine the video source frame rate frequency by measuring the period between 3D sync pulses provided by the source or other digital information provided directly to the BT host by the video source microprocessor.

The frame rate frequency shall be determined within +/- 1% of the actual frame rate by averaging multiple samples.

### 2.1.2 Bluetooth Clock Synchronization

The BT host shall detect the leading edge of the 3D synchronization signal provided by the video source and capture the BT clock count as soon as possible. Typically, this is done with a hardware interrupt for increased accuracy, but can also be accomplished by polling with decreased accuracy.

### 2.1.3 Shutter Control Translation

The BT module shall receive and interpret the video source's required shutter opening and closing sequences and translate the data into timing offsets as shown in the referenced XpanD Advanced Frame Synchronization Protocol.

### 2.1.4 Host/Client Synchronization

The BT host shall transmit the XpanD Advanced Frame Synchronization Protocol data to the BT client whenever the frame rate changes by more than 1%.

The BT host shall transmit the BT Clock time

### 2.2 Client Operation

### 2.2.1 BT Data Exchange

The BT client shall receive the frame rate data described above from the BT host. Optionally, the BT client may transmit additional information back to the host such as battery charge state, battery charger connected, diagnostic information, usage information, etc.

### 2.2.2 Frame Strobe

Using the BT clock synchronization time and frame rate data, the BT client shall generate a positive going digital pulse, typically 20us in duration, which indicated the beginning of a video frame sequence (left and right).

### 2.2.3 Frame Data

The BT client transmit the frame rate and shutter control timing as required by the XpanD Advanced Frame Synchronization Protocol to the shutter control system as described in the AFSP specification.

### 2.2.4 BT Clock Re-synchronization

The BT host and client shall re-synchronize the BT clock at sufficient interval to preclude objectionable phase shifting of the BT clock due to crystal tolerances. Typically this would be every 250 - 500ms.

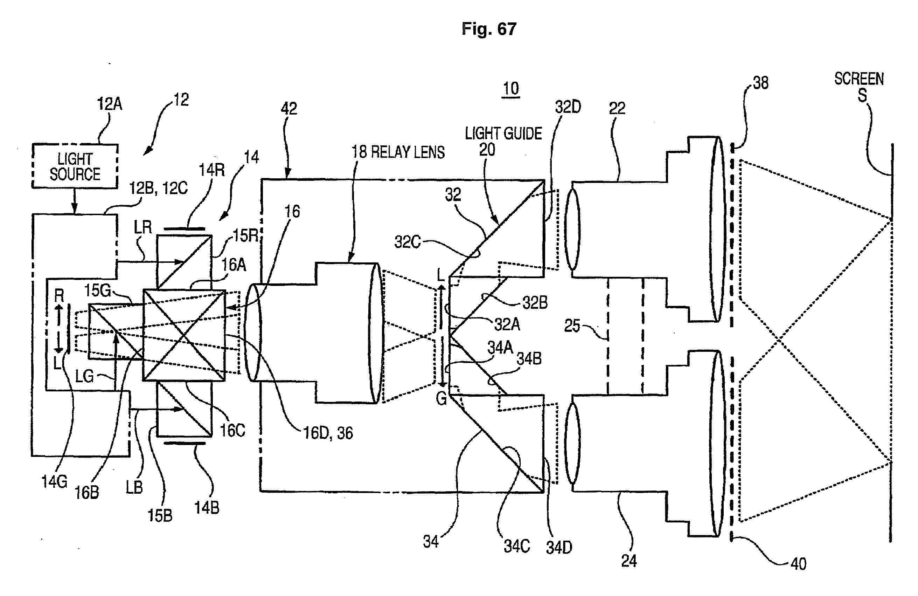

Referring now to Figs. 67-71c, exemplary embodiments of stereographic image projectors will now be described.

FIG. 67 is a plan view showing the configuration of a stereoscopic image projector 10 of the present embodiment.

The stereoscopic image projector 10 includes an illuminator 12, an image generator 14, an image combiner 16, a relay lens 18, a light guide 20, a left-eye image projection lens 22, a right-eye image projection lens 24, and first to third polarization control filters 36, 38, 40.

The broken lines in FIG. 67 represent light rays.

The illuminator 12 guides three light beams having different wavelengths to the image generator 14.

In the present embodiment, the illuminator 12 includes a light source 12A, an illumination optical unit 12B, and a separator 12C.

The light source 12A includes a lamp that emits white light.

Examples of the lamp include a high-pressure mercury lamp that emits white light and a variety of other known lamps.

The illumination optical unit 12B collimates the white light emitted from the lamp, aligns the polarization states of the white light into a predetermined one, and guides the collimated, polarized light to the separator 12C.

The illumination optical unit 12B includes a UV-IR cut filter, a fly-eye lens, a PS converter, and a condenser lens that are disposed downstream of the light source 12A. The white light from the light source 12A passes through the above components, is converted into predetermined polarized, collimated light, and is incident on the separator 12C.

The separator 12C separates the light (white light) guided through the illumination optical unit 12B into three light beams having different wavelengths, that is, a red (R) light beam LR, a green (G) light beam LG, and a blue (B) light beam LB, and guides them to the image generator 14.

The separator 12C includes, for example, two dichroic mirrors, a plurality of reflection mirrors, and a plurality of lenses. The separator 12C can have any of a variety of known configurations of related art.

In the image generator 14, spatial modulators modulate the three light beams LR, LG, and LB having different wavelengths to generate three left-eye wavelength-specific images and three right-eye wavelength-specific images having different wavelengths.

In the present embodiment, the image generator 14 includes first to third reflective liquid crystal panels 14R, 14G, 14B, which serve as first to third spatial modulators, and first to third polarizing beam splitters 15R, 15G, 15B.

The first to third reflective liquid crystal panels 14R, 14G, 14B, which display respective color (red, green, and blue) image information, receive applied color image signals according to the incident light, modulate the incident light by rotating the polarization direction thereof in accordance with the image signals, and output the modulated light beams.

Each of the first to third spatial modulators is not limited to a reflective liquid crystal panel, but can be a transmissive liquid crystal panel, a DMD (Digital Micro mirror Device) using a large number of tiny reflection mirrors, or any of a variety of other known spatial modulators.

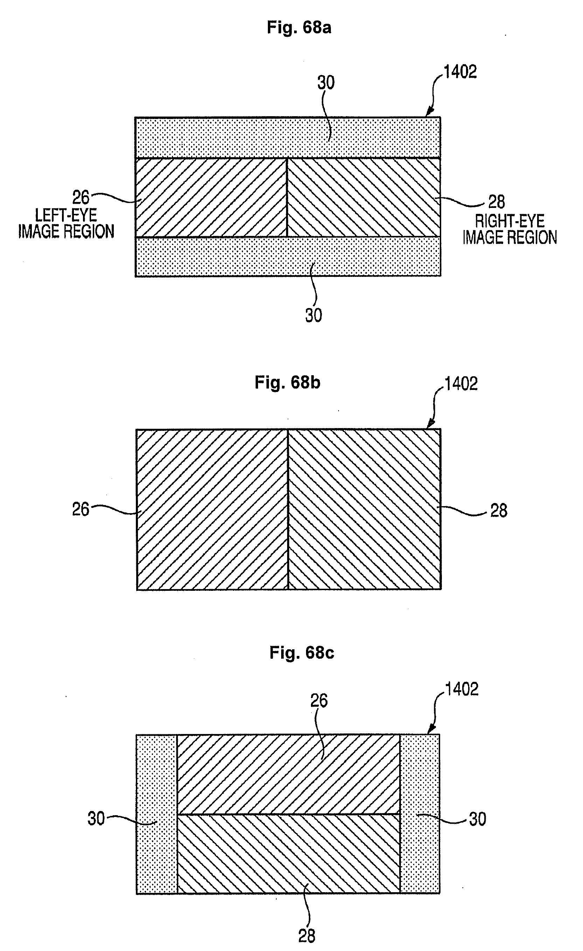

FIGS. 68A to 68C explain a display screen 1402 of each of the reflective liquid crystal panels 14R, 14G, and 14B.

Each of the reflective liquid crystal panels 14R, 14G, and 14B has the rectangular display screen 1402 of the same shape and size. In the present embodiment, the display screen 1402 has a display region including 4096 horizontal pixels by 2160 vertical pixels.

As shown in FIG. 68, a vertically central portion of the display screen 1402 is divided at the horizontal center into left and right portions, a left-eye image region 26 and a right-eye image region 28.

In this case, the display regions 26 and 28 are shaped into horizontally elongated rectangles of the same shape and size, and the remaining region other than the left-eye image region 26 and the right-eye image region 28 forms non-display regions 30 in which no image is displayed.

Each of the reflective liquid crystal panels 14R, 14G, and 14B, when the image signals are applied thereto, displays a left-eye image in the left-eye image region 26 and a right-eye image in the right-eye image region 28.

Alternatively, as shown in FIG. 68B, the display screen 1402 is divided at the horizontal center into left and right portions, a left-eye image region 26 and a right-eye image region 28.

In this case, the image regions 26 and 28 are shaped into substantially square forms of the same shape and size, and no non-display area 30 is formed.

Alternatively, as shown in FIG. 68C, a horizontally central portion of the display screen 1402 may be divided at the vertical center into upper and lower portions, a left-eye image region 26 and a right-eye image region 28. In this case, the image regions 26 and 28 are shaped into horizontally elongated rectangles of the same shape and size, and the remaining region other than the display regions 26 and 28 forms non-display regions 30 in which no image is displayed.

The first polarizing beam splitter 15R reflects the light beam LR to let it be incident on the first reflective liquid crystal panel 14R, and transmits the light beam LR spatially modulated by the first reflective liquid crystal panel 14R to let the light beam LR be incident on the image combiner 16.

That is, the first polarizing beam splitter 15R allows a left-eye wavelength-specific image and a right-eye wavelength-specific image formed of the red light beam LR to be incident on the image combiner 16.

The second polarizing beam splitter 15G reflects the light beam LG to let it be incident on the second reflective liquid crystal panel 14G, and transmits the light beam LG spatially modulated by the second reflective liquid crystal panel 14G to let the light beam LG be incident on the image combiner 16.

That is, the second polarizing beam splitter 15G allows a left-eye wavelength-specific image and a right-eye wavelength-specific image formed of the green light beam LG to be incident on the image combiner 16.

The third polarizing beam splitter 15B reflects the light beam LB to let it be incident on the third reflective liquid crystal panel 14B, and transmits the light beam LB spatially modulated by the third reflective liquid crystal panel 14B to let the light beam LB be incident on the image combiner 16.

That is, the third polarizing beam splitter 15B allows a left-eye wavelength-specific image and a right-eye wavelength-specific image formed of the blue light beams LB to be incident on the image combiner 16.

The image combiner 16 combines the three left-eye wavelength-specific images into a single left-eye combined image and the three right-eye wavelength-specific images into a single right-eye combined image.

That is, the image combiner 16 combines the color light beams that have been modulated by the first to third reflective liquid crystal panels 14R, 14G, 14B and have passed through the first to third polarizing beam splitters 15R, 15G, 15B.

In the present embodiment, the image combiner 16 is a light combining prism.

The image combiner 16 has first to third entrance surfaces 16A, 16B, 16C on which the color light beams having passed through the first to third polarizing beam splitters 15R, 15G, 15B are incident, and an exit surface 16D through which a combined image exits.

The image combiner 16 can be any of a variety of known suitable optical members instead of a light combining prism.

The relay lens 18 receives the left-eye combined image and the right-eye combined image having exited through the image combiner 16 and focuses a real image of the left-eye combined image and a real image of the right-eye combined image that are separated from each other.

In other words, the relay lens 18 receives the left-eye combined image, which is the combined single image formed of the left-eye wavelength-specific images, and the right-eye combined image, which is the combined single image formed of the right-eye wavelength-specific images, incident on the entrance surface of the relay lens 18, and outputs a focused real image of the left-eye combined image and a focused real image of the right-eye combined image separated from each other through the exit surface of the relay lens 18.

In the present embodiment, the real image of the left-eye combined image and the real image of the right-eye combined image having exited through the relay lens 18 are twice as large as the left-eye combined image and the right-eye combined image having exited through the image combiner 16. The magnification of the relay lens 18 may alternatively be unity or smaller.

The light guide 20 separately guides the focused real image of the left-eye combined image and the focused real image of the right-eye combined image having exited through the relay lens 18.

In the present embodiment, the light guide 20 includes first and second prisms 32,34.

The first prism 32 has an entrance surface 32A on which the real image of the left-eye combined image is incident, a first reflection surface 32B that reflects and deflects the real image of the left-eye combined image incident through the entrance surface 32A by approximately 90 degrees with respect to the optical axis of the relay lens 18, a second reflection surface 32C that deflects the real image of the left-eye combined image reflected off the first reflection surface 32B by approximately 90 degrees toward the direction parallel to the optical axis of the relay lens 18, and an exit surface 32D through which the real image of the left-eye combined image reflected off the second reflection surface 32C exits in the direction parallel to the optical axis of the relay lens 18.

The second prism 34 has an entrance surface 34A on which the real image of the right-eye combined image is incident, a first reflection surface 34B that reflects and deflects the real image of the right-eye combined image incident through the entrance surface 34A by approximately 90 degrees with respect to the optical axis of the relay lens 18, a second reflection surface 34C that deflects the real image of the right-eye combined image reflected off the first reflection surface 34B by approximately 90 degrees toward the direction parallel to the optical axis of the relay lens 18, and an exit surface 34D through which the real image of the right-eye combined image reflected off the second reflection surface 34C exits in the direction parallel to the optical axis of the relay lens 18.

In other words, the light guide 20 faces the exit surface of the relay lens 18 and separately guides the real image of the left-eye combined image and the real image of the right-eye combined image in the direction away from the exit surface of the relay lens 18.

The optical path formed in the first prism 32 and the optical path formed in the second prism 34 extend in the same plane and are spaced apart from each other in the direction perpendicular to the optical axis of the relay lens 18. The exit surface 32D of the first prism 32 and the exit surface 34D of the second prism 34 are therefore spaced apart from each other in the direction perpendicular to the optical axis of the relay lens 18.

In other words, the light guide 20 is configured to guide the focused real image of the left-eye combined image and the focused real image of the right-eye combined image having exited through the relay lens 18 to locations spaced apart from each other in the direction perpendicular to the optical axis of the relay lens 18.

In the present embodiment, the relay lens 18 and the light guide 20 are held by an attachment member (not shown) and form an adaptor 42 for a stereoscopic image projector.

The adaptor 42 for a stereoscopic image projector is removably attached to the stereoscopic image projector 10.

The left-eye image projection lens 22 projects the real image of the left-eye combined image guided through the light guide 20 on a screen S so that a left-eye image is focused.

The right-eye image projection lens 24 projects the real image of the right-eye combined image guided through the light guide 20 on the screen S so that a right-eye image is focused.

A lens shift mechanism 25 is further provided. The lens shift mechanism 25 adjusts the distance between the left-eye image projection lens 22 and the right-eye image projection lens 24 in the direction perpendicular to the optical axes of the left-eye image projection lens 22 and the right-eye image projection lens 24 while keeping the optical axes parallel to each other.

Using the lens shift mechanism 25 to adjust the distance between the left-eye image projection lens 22 and the right-eye image projection lens 24 allows the left-eye image and the right-eye image projected on the screen S to be superimposed irrespective of the distance from the left-eye image projection lens 22 and the right-eye image projection lens 24 to the screen S.

The first polarization control filter 36 is provided on the exit surface 16D of the image combiner 16, and converts the polarization of the light that forms the combined images having exited through the exit surface 16D from circular polarization to linear polarization.

An example of the first polarization control filter 36 may be a quarter-wave plate.

That is, the light having exited through the exit surface 16D of the image combiner 16 is circularly polarized.

When circularly polarized light passes through the first and second prisms 32, 34, which form the light guide 20, the state of the circularly polarized light is disturbed because each of the first and second prisms 32, 34 serve as a Fresnel rhomb wave plate.

When the thus disturbed circularly polarized light is converted into linearly polarized light by the polarization control filters provided downstream of the light guide 20, intended linearly polarized light may not be obtained, which may disadvantageously lower brightness of the images focused on the screen S.

To address the problem, in the present embodiment, the first polarization control filter 36 is provided to output linearly polarized light, which is then incident on the first and second prisms 32, 34, which form the light guide 20. The above inconvenience is thus eliminated.

It is noted that the first polarization control filter 36 may be disposed in any position as long as it is located between the exit surface 16D of the image combiner 16 and the entrance surfaces 32A, 34A of the light guide 20.

The second polarization control filter 38 is disposed downstream of the exit surface of the left-eye image projection lens 22, and converts the linearly polarized light that forms the real image of the left-eye combined image having exited through the left-eye image projection lens 22 into first linearly polarized light (polarized in one of the vertical and horizontal direction, for example).

The third polarization control filter 40 is disposed downstream of the exit surface of the right-eye image projection lens 24, and converts the linearly polarized light that forms the real image of the right-eye combined image having exited through the right-eye image projection lens 24 into second linearly polarized light (polarized in the other one of the vertical and horizontal direction, for example).

The second and third polarization control filters 38, 40 may be disposed upstream of the entrance surfaces of the projection lenses 22 and 24, respectively.

The left-eye image and the right-eye image superimposed and displayed on the screen S are visually recognized as a stereoscopic image when viewed through stereoscopic vision glasses.

The stereoscopic vision glasses include a left-eye filter and a right-eye filter.

The left-eye filter transmits the light that forms the left-eye image focused on the screen S, and includes a polarization control filter that transmits the first linearly polarized light in the present embodiment.

The right-eye filter transmits the light that forms the right-eye image focused on the screen S, and includes a polarization control filter that transmits the second linearly polarized light in the present embodiment.

The second and third polarization control filters 38, 40 may be replaced with wavelength selection filters having different transmission characteristics so that the wavelength distribution of the light that forms the left-eye image and the wavelength distribution of the light that forms the right-eye image, which are superimposed and displayed on the screen S, differ from each other.

In this case, a wavelength selection filter that transmits the light that forms the left-eye image may be used as the left-eye filter of the stereoscopic vision glasses, and a wavelength selection filter that transmits the light that forms the right-eye image may be used as the right-eye filter of the stereoscopic vision glasses.

As described above, according to the present embodiment, using the relay lens 18 allows the real image of the left-eye combined image and the real image of the right-eye combined image to be separated and then guided through the light guide 20 to the left and right projection lenses 22, 24. The configuration can therefore prevent reduction in brightness of the left-eye and right-eye images and is advantageous in improving the image quality.

The present embodiment will be described in detail in comparison with a comparative example.

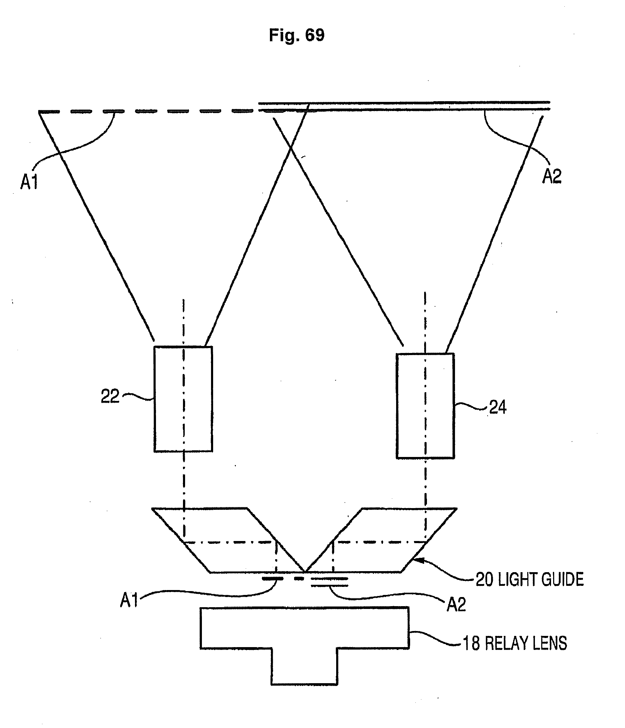

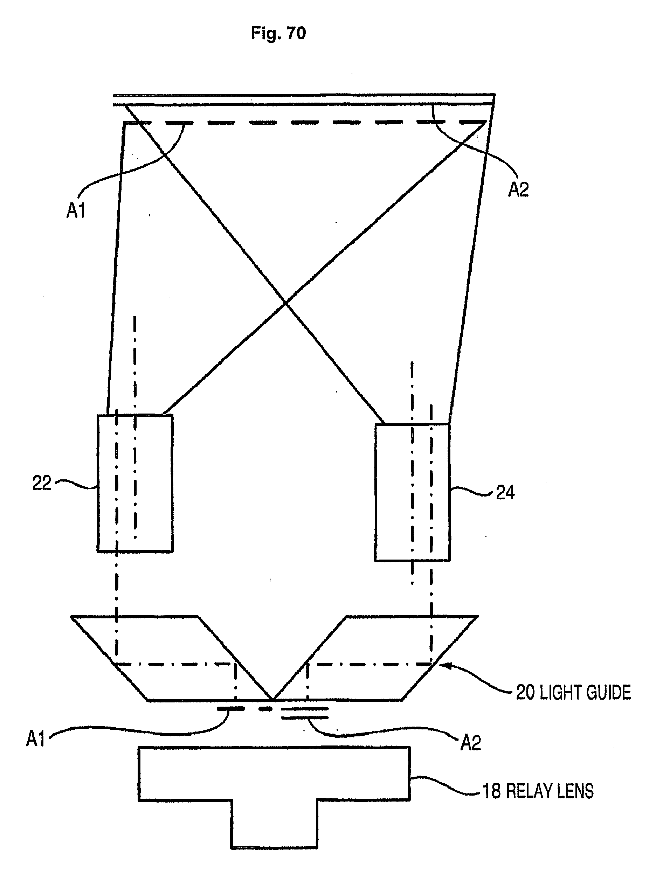

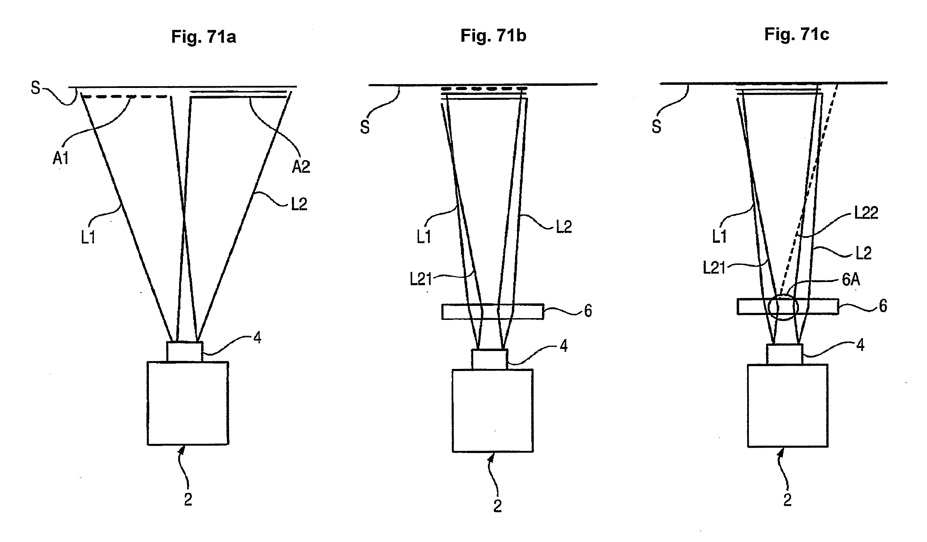

FIGS. 69 and 70 explain the operation of the stereoscopic image projector 10 of the present embodiment, and FIGS. 71A, 71B, and 71C explain the operation of a stereoscopic image projector 2 of the comparative example.

As shown in FIG. 71A, the stereoscopic image projector 2 including the illuminator 12, the image generator 14, and the image combiner 16 of the present embodiment is configured to output a left-eye image A1 and a right-eye image A2 through a single projection lens 4.

As shown in FIG. 71B, a separating/combining mechanism 6 is provided. The separating/combining mechanism 6 separates the left-eye image and the right-eye image having exited through the projection lens 4 and superimposes them on the screen S.

The separating/combining mechanism 6 is formed by combining a plurality of prisms or combining a plurality of mirrors.

As shown in FIG. 71C, in the comparative example, part of light L1 that forms the left-eye image A1 and part of light L2 that forms the right-eye image A2 are superimposed in an image separator 6A of the separating/combining mechanism 6. The superimposed light may not be used in the image separation operation.

For example, among the light rays of the light L2 that forms the right-eye image A2, a light ray L21 that should form the left end of the right-eye image A2 is superimposed on the light L1 that forms the left-eye image. The separator 6A of the separating/combining mechanism 6 therefore handles the light ray L21 and the light L1 that forms the left-eye image A1 in the same manner. As a result, the light ray L21 is disadvantageously guided to a point outside the right end of the right-eye image A2, as indicated by a broken line L22.

Accordingly, the light ray L21 that should originally be guided to the left end of the right-eye image A2 is lost, resulting in reduction in brightness of the left end portion of the right-eye image A2 and degradation in image quality because part of information that forms the image is lost.

In contrast, in the present embodiment, using the relay lens 18 allows the real image A1 of the left-eye combined image and the real image A2 of the right-eye combined image to be separated and then guided through the light guide 20 to the left and right projection lenses 22, 24, as shown in FIGS. 69 and 70. As a result, none of the light that forms the images will be lost. The configuration can therefore not only prevent reduction in brightness of the left-eye image A1 and the right-eye image A2 focused on the screen S, but also is advantageous in ensuring the image quality.

In particular, in the present embodiment, the lens shift mechanism 25 (FIG. 67) is used to adjust the distance between the left-eye image projection lens 22 and the right-eye image projection lens 24 in the direction perpendicular to the optical axes of the left-eye image projection lens 22 and the right-eye image projection lens 24 while keeping the optical axes parallel to each other, as shown in FIG. 70.

Therefore, since the angular relationship of the optical axes of the left-eye image projection lens 22 and the right-eye image projection lens 24 with the screen S does not change, the left-eye image A1 and the right-eye image A2 focused on the screen S do not suffer from trapezoidal distortion, and hence the left-eye image A1 and the right-eye image A2 can be accurately superimposed on each other, which is advantageous in providing a stereoscopic image with good image quality.

In the present embodiment, since the first and second prisms 32, 34 are used as the light guide 20, there will be, in an exact sense, a linearly extending small gap formed at the boundary between the entrance surface 32A of the first prism 32 and the entrance surface 34A of the second prism 34.

The light incident on the portion that corresponds to the gap may not be used to form an image.

It is therefore advantageous in preventing reduction in image quality not to form the image of the portion that corresponds to the gap in each of the first to third spatial modulators, that is, not to use the portion that corresponds to the gap in each of the spatial modulators.

Each of the first and second prisms 32, 34 as the light guide 20 may, of course, be replaced with combined mirrors.

Using combined mirrors, however, results in providing a first entrance mirror on which the real image of the left-eye combined image having exited through the relay lens 18 is incident and a second entrance mirror on which the real image of the right-eye combined image is incident.

Since each of the mirrors needs a certain thickness, the gap formed between the first and second entrance mirrors is larger than the gap formed when the first and second prisms 32, 34 are used, and hence the area of the unusable region in each of the first to third spatial modulators increases.

Using the first and second prisms 32, 34 as the light guide 20 is therefore more advantageous in improving the image quality.

The embodiments of Figs. 67-71C present application contains subject matter related to that disclosed in US 2009/0309959, filed on June 16, 2009 and Japanese Priority Patent Application JP 2008-157579 filed in the Japan Patent Office on Jun. 17, 2008, the entire contents of which are hereby incorporated by reference.

As described above with reference to Figs. 67-71c, one projector may be used for the right image and the other for the left image. Polarizing elements are placed in front of the lenses and orientated so that the two images are either polarized orthogonally linearly or circularly clockwise and counterclockwise.

As described above with reference to Figs. 67-71c, the exemplary embodiments provide a three target liquid crystal on silicon ("LCOS") projector meaning that there are three image targets one for each primary color. Since it is a liquid crystal based system, the light leaving the projector is linearly polarized. Unfortunately, when the light from the projection bulb is split into the three primary colors, it is done in such a way that the green light ends up being polarized in a direction orthogonal to the red and blue primaries. This can be problematic and wave plate used to rotate the green light so that the polarization direction of all three primaries are the same.

In an exemplary embodiment, the projectors of the exemplary embodiments of Figs. 67-71C are 2K x 4K projector but they may not be fast enough to display alternative left and right images, for example, as may be provided by a conventional digital light processing ("DLP") projectors work. As a result, projector manufacturers such as, for example, Sony created a system that held two of these very large and heavy projection units in a single fixture so that they can be aligned so that their images may be superimposed and one projector was used for the left image and one projector for the right image. This is very expensive and cumbersome. The DLP projectors only have 1 K x 2K resolution. Since the Sony LCOS projection system has so much extra resolution they developed a technique that allows the left image to be formed on the upper half of the target and the right image on the lower half. Thus, they have a dual lens system in which one lens projects the upper image and the second lens projects the lower image.

One solution to the limitations associated with the exemplary embodiments of Figs. 67-71c and the Sony LCOS projectors is to use a wave plate that will allow alignment of the green light with the red and blue primaries. Alternatively, or in addition thereto, retarders may be placed in front of the lenses of the projectors to convert the linearly polarized light into circularly polarized light. As a result, the red and blue primaries from one lens will be polarized clockwise and the green primary will be polarized counterclockwise and visa versa for the other lens of the other projector. The result will be that the viewer will see the red and blue portions of left image together with the green portion of the right image with one eye and the other way around for the other eye.

One further solution would be that since the left and right images occupy different regions of each of the three color targets, it is possible to swap the locations of the left and right images when they are electronically written to the targets to be displayed. As a result, when everything is superimposed on the viewing screen, the result will be that the left image will have one polarization and the right the other.

A liquid crystal shutter has a liquid crystal that rotates by applying an electrical voltage to the liquid crystal and then the liquid crystal achieves a light transmission rate of at least twenty-five percent in less than one millisecond. When the liquid crystal rotates to a point having maximum light transmission, a device stops the rotation of the liquid crystal at the point of maximum light transmission and then holds the liquid crystal at the point of maximum light transmission for a period of time. A computer program installed on a machine readable medium may be used to facilitate any of these embodiments.

A system presents a three dimensional video image by using a pair of liquid crystal shutter glasses that have a first and a second liquid crystal shutter, and a control circuit adapted to open the first liquid crystal shutter. The first liquid crystal shutter can open to a point of maximum light transmission in less than one millisecond, at which time the control circuit may apply a catch voltage to hold the first liquid crystal shutter at the point of maximum light transmission for a first period of time and then close the first liquid crystal shutter. Next, the control circuit opens the second liquid crystal shutter, wherein the second liquid crystal shutter opens to a point of maximum light transmission in less than one millisecond, and then applies a catch voltage to hold the second liquid crystal shutter at the point of maximum light transmission for a second period of time, and then close the second liquid crystal shutter. The first period of time corresponds to the presentation of an image for a first eye of a viewer and the second period of time corresponds to the presentation of an image for a second eye of a viewer. A computer program installed on a machine readable medium may be used to facilitate any of the embodiments described herein.

In an exemplary embodiment, the control circuit is adapted to use a synchronization signal to determine the first and second period of time. In an exemplary embodiment, the catch voltage is two volts.

In an exemplary embodiment, the point of maximum light transmission transmits more than thirty two percent of light.

In an exemplary embodiment, an emitter provides a synchronization signal and the synchronization signal causes the control circuit to open one of the liquid crystal shutters. In an exemplary embodiment, the synchronization signal comprises an encrypted signal. In an exemplary embodiment, the control circuit of the three dimensional glasses will only operate after validating an encrypted signal.

In an exemplary embodiment, the control circuit has a battery sensor and may be adapted to provide an indication of a low battery condition. The indication of a low battery condition may be a liquid crystal shutter that is closed for a period of time and then open for a period of time.

In an exemplary embodiment, the control circuit is adapted to detect a synchronization signal and begin operating the liquid crystal shutters after detecting the synchronization signal.

In an exemplary embodiment, the encrypted signal will only operate a pair of liquid crystal glasses having a control circuit adapted to receive the encrypted signal.

In an exemplary embodiment, a test signal operates the liquid crystal shutters at a rate that is visible to a person wearing the pair of liquid crystal shutter glasses.

In an exemplary embodiment, a pair of glasses has a first lens that has a first liquid crystal shutter and a second lens that has a second liquid crystal shutter. Both liquid crystal shutters have a liquid crystal that can open in less than one millisecond and a control circuit that alternately opens the first and second liquid crystal shutters. When the liquid crystal shutter opens, the liquid crystal orientation is held at a point of maximum light transmission until the control circuit closes the shutter.

In an exemplary embodiment, a catch voltage holds the liquid crystal at the point of maximum light transmission. The point of maximum light transmission may transmit more than thirty two percent of light.

In an exemplary embodiment, an emitter that provides a synchronization signal and the synchronization signal causes the control circuit to open one of the liquid crystal shutters. In some embodiments, the synchronization signal includes an encrypted signal. In an exemplary embodiment, the control circuit will only operate after validating the encrypted signal. In an exemplary embodiment, the control circuit includes a battery sensor and may be adapted to provide an indication of a low battery condition. The indication of a low battery condition could be a liquid crystal shutter that is closed for a period of time and then open for a period of time. In an exemplary embodiment, the control circuit is adapted to detect a synchronization signal and begin operating the liquid crystal shutters after it detects the synchronization signal.

The encrypted signal may only operate a pair of liquid crystal glasses that has a control circuit adapted to receive the encrypted signal.

In an exemplary embodiment, a test signal operates the liquid crystal shutters at a rate that is visible to a person wearing the pair of liquid crystal shutter glasses.

In an exemplary embodiment, a three dimensional video image is presented to a viewer by using liquid crystal shutter eyeglasses, opening the first liquid crystal shutter in less than one millisecond, holding the first liquid crystal shutter at a point of maximum light transmission for a first period of time, closing the first liquid crystal shutter, then opening the second liquid crystal shutter in less than one millisecond, and then holding the second liquid crystal shutter at a point of maximum light transmission for a second period of time. The first period of time corresponds to the presentation of an image for a first eye of a viewer and the second period of time corresponds to the presentation of an image for a second eye of a viewer.

In an exemplary embodiment, the liquid crystal shutter is held at the point of maximum light transmission by a catch voltage. The catch voltage could be two volts. In an exemplary embodiment, the point of maximum light transmission transmits more than thirty two percent of light.

In an exemplary embodiment, an emitter provides a synchronization signal that causes the control circuit to open one of the liquid crystal shutters. In some embodiments, the synchronization signal comprises an encrypted signal.

In an exemplary embodiment, the control circuit will only operate after validating the encrypted signal.

In an exemplary embodiment, a battery sensor monitors the amount of power in the battery. In an exemplary embodiment, the control circuit is adapted to provide an indication of a low battery condition. The indication of a low battery condition may be a liquid crystal shutter that is closed for a period of time and then open for a period of time.

In an exemplary embodiment, the control circuit is adapted to detect a synchronization signal and begin operating the liquid crystal shutters after detecting the synchronization signal. In an exemplary embodiment, the encrypted signal will only operate a pair of liquid crystal glasses that has a control circuit adapted to receive the encrypted signal.

In an exemplary embodiment, a test signal operates the liquid crystal shutters at a rate that is visible to a person wearing the pair of liquid crystal shutter glasses.

In an exemplary embodiment, a system for providing three dimensional video images may include a pair of glasses that has a first lens having a first liquid crystal shutter and a second lens having a second liquid crystal shutter. The liquid crystal shutters may have a liquid crystal and an may be opened in less than one millisecond. A control circuit may alternately open the first and second liquid crystal shutters, and hold the liquid crystal orientation at a point of maximum light transmission until the control circuit closes the shutter. Furthermore, the system may have a low battery indicator that includes a battery, a sensor capable of determining an amount of power remaining in the battery, a controller adapted to determine whether the amount of power remaining in the battery is sufficient for the pair of glasses to operate longer than a predetermined time, and an indicator to signal a viewer if the glasses will not operate longer than the predetermined time. In an exemplary embodiment, the low battery indicator is opening and closing the left and right liquid crystal shutters at a predetermined rate. In an exemplary embodiment, the predetermined amount of time is longer than three hours. In an exemplary embodiment, the low battery indicator may operate for at least three days after determining that the amount of power remaining in the battery is not sufficient for the pair of glasses to operate longer than the predetermined amount of time. In an exemplary embodiment, the controller may determine the amount of power remaining in the battery by measuring time by the number of synchronization pulses remaining in the battery.

In an exemplary embodiment for providing a three dimensional video image, the image is provided by having a pair of three dimensional viewing glasses that includes a first liquid crystal shutter and a second liquid crystal shutter, opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, holding the second liquid crystal shutter at a point of maximum light transmission for a second period of time. The first period of time corresponds to the presentation of an image for a first eye of the viewer and the second period of time corresponds to the presentation of an image for the second eye of the viewer. In this exemplary embodiment, the three dimensional viewing glasses sense the amount of power remaining in the battery, determine whether the amount of power remaining in the battery is sufficient for the pair of glasses to operate longer than a predetermined time, and then indicate a low-battery signal to a viewer if the glasses will not operate longer than the predetermined time. The indicator may be opening and closing the lenses at a predetermined rate. The predetermined amount of time for the battery to last could be more than three hours. In an exemplary embodiment, the low battery indicator operates for at least three days after determining the amount of power remaining in the battery is not sufficient for the pair of glasses to operate longer than the predetermined amount of time. In an exemplary embodiment, the controller determines the amount of power remaining in the battery by measuring time by the number of synchronization pulses that the battery can last for.

In an exemplary embodiment, for providing three dimensional video images, the system includes a pair of glasses comprising a first lens having a first liquid crystal shutter and a second lens having a second liquid crystal shutter, the liquid crystal shutters having a liquid crystal and an opening time of less than one millisecond. A control circuit may alternately open the first and second liquid crystal shutters, and the liquid crystal orientation is held at a point of maximum light transmission until the control circuit closes the shutter. Furthermore, a synchronization device that includes a signal transmitter that sends a signal corresponding to an image presented for a first eye, a signal receiver sensing the signal, and a control circuit adapted to open the first shutter during a period of time in which the image is presented for the first eye. In an exemplary embodiment, the signal is an infrared light.

In an exemplary embodiment, the signal transmitter projects the signal toward a reflector, the signal is reflected by the reflector, and the signal receiver detects the reflected signal. In some embodiments, the reflector is a movie theater screen. In an exemplary embodiment, the signal transmitter receives a timing signal from an image projector such as the movie projector. In an exemplary embodiment, the signal is a radio frequency signal. In an exemplary embodiment, the signal is a series of pulses at a predetermined interval. In an exemplary embodiment, where the signal is a series of pulses at a predetermined interval, the first predetermined number of pulses opens the first liquid crystal shutter and a second predetermined number of pulses opens the second liquid crystal shutter.

In an exemplary embodiment for providing a three dimensional video image, the method of providing the image includes: having a pair of three dimensional viewing glasses comprising a first liquid crystal shutter and a second liquid crystal shutter, opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, holding the second liquid crystal shutter at a point of maximum light transmission for a second period of time. The first period of time corresponds to the presentation of an image for the left eye of a viewer and the second period of time corresponds to the presentation of an image for the right eye of a viewer. The signal transmitter can transmit a signal corresponding to the image presented for a left eye, and, sensing the signal the three dimensional view glasses can use the signal to determine when to open the first liquid crystal shutter. In an exemplary embodiment, the signal is an infrared light. In an exemplary embodiment, the signal transmitter projects the signal toward a reflector which reflects the signal toward the three dimensional viewing glasses, and the signal receiver in the glasses detects the reflected signal. In an exemplary embodiment, the reflector is a movie theater screen.

In an exemplary embodiment, the signal transmitter receives a timing signal from an image projector. In an exemplary embodiment, the signal is a radio frequency signal. In an exemplary embodiment, the signal could be a series of pulses at a predetermined interval. A first predetermined number of pulses could open the first liquid crystal shutter and a second predetermined number of pulses could open the second liquid crystal shutter.

In an exemplary embodiment of a system for providing three dimensional video images, a pair of glasses has a first lens having a first liquid crystal shutter and a second lens having a second liquid crystal shutter, the liquid crystal shutters having a liquid crystal and an opening time of less than one millisecond. A control circuit alternately opens the first and second liquid crystal shutters, and the liquid crystal orientation is held at a point of maximum light transmission until the control circuit closes the shutter. In an exemplary embodiment, a synchronization system comprising a reflection device located in front of the pair of glasses, and a signal transmitter sending a signal towards the reflection device. The signal corresponds to an image presented for a first eye of a viewer. A signal receiver senses the signal reflected from the reflection device, and then a control circuit opens the first shutter during a period of time in which the image is presented for the first eye.

In an exemplary embodiment, the signal is an infrared light. In an exemplary embodiment, the reflector is a movie theater screen. In an exemplary embodiment, the signal transmitter receives a timing signal from an image projector. The signal may a series of pulses at a predetermined interval. In an exemplary embodiment, the signal is a series of pulses at a predetermined interval and the first predetermined number of pulses opens the first liquid crystal shutter and the second predetermined number of pulses opens the second liquid crystal shutter.

In an exemplary embodiment for providing a three dimensional video image, the image can be provided by having a pair of three dimensional viewing glasses comprising a first liquid crystal shutter and a second liquid crystal shutter, opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, and then holding the second liquid crystal shutter at a point of maximum light transmission for a second period of time. The first period of time corresponds to the presentation of an image for a first eye of a viewer and the second period of time corresponds to the presentation of an image for a second eye of a viewer. In an exemplary embodiment, the transmitter transmits an infrared signal corresponding to the image presented for a first eye. The three dimensional viewing glasses sense the infrared signal, and then use the infrared signal to trigger the opening of the first liquid crystal shutter. In an exemplary embodiment, the signal is an infrared light. In an exemplary embodiment, the reflector is a movie theater screen. In an exemplary embodiment, the signal transmitter receives a timing signal from an image projector. The timing signal could be a series of pulses at a predetermined interval. In some embodiments, a first predetermined number of pulses opens the first liquid crystal shutter and a second predetermined number of pulses opens the second liquid crystal shutter.

In an exemplary embodiment, a system for providing three dimensional video images includes a pair of glasses that have a first lens having a first liquid crystal shutter and a second lens having a second liquid crystal shutter, the liquid crystal shutters having a liquid crystal and an opening time of less than one millisecond. The system could also have a control circuit that alternately opens the first and second liquid crystal shutters, and hold the liquid crystal orientation at a point of maximum light transmission until the control circuit closes the shutter. The system may also have a test system comprising a signal transmitter, a signal receiver, and a test system control circuit adapted to open and close the first and second shutters at a rate that is visible to a viewer. In an exemplary embodiment, the signal transmitter does not receive a timing signal from a projector. In an exemplary embodiment, the signal transmitter emits an infrared signal. The infrared signal could be a series of pulses. In another exemplary embodiment, the signal transmitter emits an radio frequency signal. The radio frequency signal could be a series of pulses.

In an exemplary embodiment of a method for providing a three dimensional video image, the method could include having a pair of three dimensional viewing glasses comprising a first liquid crystal shutter and a second liquid crystal shutter, opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, and holding the second liquid crystal shutter at a point of maximum light transmission for a second period of time. In an exemplary embodiment, the first period of time corresponds to the presentation of an image for a first eye of a viewer and the second period of time corresponds to the presentation of an image for a second eye of a viewer. In an exemplary embodiment, a transmitter could transmit a test signal towards the three dimensional viewing glasses, which then receive the test signal with a sensor on the three dimensional glasses, and then use a control circuit to open and close the first and second liquid crystal shutters as a result of the test signal, wherein the liquid crystal shutters open and close at a rate that is observable to a viewer wearing the glasses.

In an exemplary embodiment the signal transmitter does not receive a timing signal from a projector. In an exemplary embodiment, the signal transmitter emits an infrared signal, which could be a series of pulses. In an exemplary embodiment, the signal transmitter emits an radio frequency signal. In an exemplary embodiment, the radio frequency signal is a series of pulses.

An exemplary embodiment of a system for providing three dimensional video images could include a pair of glasses comprising a first lens that has a first liquid crystal shutter and a second lens that has a second liquid crystal shutter, the liquid crystal shutters having a liquid crystal and an opening time of less than one millisecond. The system could also have a control circuit that alternately opens the first and second liquid crystal shutters, holds the liquid crystal orientation at a point of maximum light transmission and then close the shutter. In an exemplary embodiment, an auto-on system comprising a signal transmitter, a signal receiver, and wherein the control circuit is adapted to activate the signal receiver at a first predetermined time interval, determine if the signal receiver is receiving a signal from the signal transmitter, deactivate the signal receiver if the signal receiver does not receive the signal from the signal transmitter within a second period of time, and alternately open the first and second shutters at an interval corresponding to the signal if the signal receiver does receive the signal from the signal transmitter.

In an exemplary embodiment, the first period of time is at least two seconds and the second period of time could be no more than 100 milliseconds. In an exemplary embodiment, the liquid crystal shutters remain open until the signal receiver receives a signal from the signal transmitter.

In an exemplary embodiment, a method for providing a three dimensional video image could include having a pair of three dimensional viewing glasses comprising a first liquid crystal shutter and a second liquid crystal shutter, opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, and holding the second liquid crystal shutter at a point of maximum light transmission for a second period of time. In an exemplary embodiment, the first period of time corresponds to the presentation of an image for a first eye of a viewer and the second period of time corresponds to the presentation of an image for a second eye of a viewer. In an exemplary embodiment, the method could include activating a signal receiver at a first predetermined time interval, determining if the signal receiver is receiving a signal from the signal transmitter, deactivating the signal receiver if the signal receiver does not receive the signal from the signal transmitter within a second period of time, and opening and closing the first and second shutters at an interval corresponding to the signal if the signal receiver does receive the signal from the signal transmitter. In an exemplary embodiment, the first period of time is at least two seconds. In an exemplary embodiment, the second period of time is no more than 100 milliseconds. In an exemplary embodiment, the liquid crystal shutters remain open until the signal receiver receives a signal from the signal transmitter.

In an exemplary embodiment, a system for providing three dimensional video images could include a pair of glasses comprising a first lens having a first liquid crystal shutter and a second lens having a second liquid crystal shutter, the liquid crystal shutters having a liquid crystal and an opening time of less than one millisecond. It could also have a control circuit that can alternately open the first and second liquid crystal shutters, and hold the liquid crystal orientation at a point of maximum light transmission until the control circuit closes the shutter. In an exemplary embodiment, the control circuit is adapted to hold the first liquid crystal shutter and the second liquid crystal shutter open. In an exemplary embodiment, the control circuit holds the lenses open until the control circuit detects a synchronization signal. In an exemplary embodiment, the voltage applied to the liquid crystal shutters alternates between positive and negative.

In one embodiment of a device for providing a three dimensional video image, a pair of three dimensional viewing glasses comprising a first liquid crystal shutter and a second liquid crystal shutter, wherein the first liquid crystal shutter can open in less than one millisecond, wherein the second liquid crystal shutter can open in less than one millisecond, open and close the first and second liquid crystal shutters at a rate that makes the liquid crystal shutters appear to be clear lenses. In one embodiment, the control circuit holds the lenses open until the control circuit detects a synchronization signal. In one embodiment, the liquid crystal shutters alternates between positive and negative.

In an exemplary embodiment, a system for providing three dimensional video images could include a pair of glasses comprising a first lens having a first liquid crystal shutter and a second lens having a second liquid crystal shutter, the liquid crystal shutters having a liquid crystal and an opening time of less than one millisecond. It could also include a control circuit that alternately opens the first and second liquid crystal shutters and hold the liquid crystal at a point of maximum light transmission until the control circuit closes the shutter. In an exemplary embodiment, an emitter could provide a synchronization signal where a portion of the synchronization signal is encrypted. A sensor operably connected to the control circuit could be adapted to receive the synchronization signal, and the first and second liquid crystal shutters could open and close in a pattern corresponding to the synchronization signal only after receiving an encrypted signal.

In an exemplary embodiment, the synchronization signal is a series of pulses at a predetermined interval. In an exemplary embodiment, the synchronization signal is a series of pulses at a predetermined interval and a first predetermined number of pulses opens the first liquid crystal shutter and a second predetermined number of pulses opens the second liquid crystal shutter. In an exemplary embodiment, a portion of the series of pulses is encrypted. In an exemplary embodiment, the series of pulses includes a predetermined number of pulses that are not encrypted followed by a predetermined number of pulses that are encrypted. In an exemplary embodiment, the first and second liquid crystal shutters open and close in a pattern corresponding to the synchronization signal only after receiving two consecutive encrypted signals.

In an exemplary embodiment of a method for providing a three dimensional video image, the method could include having a pair of three dimensional viewing glasses comprising a first liquid crystal shutter and a second liquid crystal shutter, opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, and holding the second liquid crystal shutter at a point of maximum light transmission for a second period of time. In an exemplary embodiment, the first period of time corresponds to the presentation of an image for a first eye of a viewer and the second period of time corresponds to the presentation of an image for a second eye of a viewer. In an exemplary embodiment, an emitter provides a synchronization signal wherein a portion of the synchronization signal is encrypted. In an exemplary embodiment, a sensor is operably connected to the control circuit and adapted to receive the synchronization signal, and the first and second liquid crystal shutters open and close in a pattern corresponding to the synchronization signal only after receiving an encrypted signal.

In an exemplary embodiment, the synchronization signal is a series of pulses at a predetermined interval. In an exemplary embodiment, the synchronization signal is a series of pulses at a predetermined interval and wherein a first predetermined number of pulses opens the first liquid crystal shutter and wherein a second predetermined number of pulses opens the second liquid crystal shutter. In an exemplary embodiment, a portion of the series of pulses is encrypted. In an exemplary embodiment, the series of pulses includes a predetermined number of pulses that are not encrypted followed by a predetermined number of pulses that are encrypted. In an exemplary embodiment, the first and second liquid crystal shutters open and close in a pattern corresponding to the synchronization signal only after receiving two consecutive encrypted signals.

A method for rapidly opening a liquid crystal shutter for use in 3D glasses has been described that includes causing the liquid crystal to rotate to an open position, the liquid crystal achieving a light transmission rate of at least twenty-five percent in less than one millisecond, waiting until the liquid crystal rotates to a point having maximum light transmission; stopping the rotation of the liquid crystal at the point of maximum light transmission; and holding the liquid crystal at the point of maximum light transmission for a period of time. In an exemplary embodiment, the system includes a pair of liquid crystal shutters having corresponding first and a second liquid crystal shutters, and a control circuit adapted to open the first liquid crystal shutter, wherein the first liquid crystal shutter opens to a point of maximum light transmission in less than one millisecond, apply a catch voltage to hold the first liquid crystal shutter at the point of maximum light transmission for a first period of time, then close the first liquid crystal shutter, open the second liquid crystal shutter, wherein the second liquid crystal shutter opens to a point of maximum light transmission in less than one millisecond, apply a catch voltage to hold the second liquid crystal shutter at the point of maximum light transmission for a first period of time, and then close the second liquid crystal shutter; wherein the first period of time corresponds to the presentation of an image for a first eye of the user and the second period of time corresponds to the presentation of an image for a second eye of the user. In an exemplary embodiment, the control circuit is adapted to use a synchronization signal to determine the first and second period of time. In an exemplary embodiment, the catch voltage is two volts. In an exemplary embodiment, the point of maximum light transmission transmits more than thirty two percent of light. In an exemplary embodiment, the system further includes an emitter that provides a synchronization signal and wherein the synchronization signal causes the control circuit to open one of the liquid crystal shutters. In an exemplary embodiment, the synchronization signal includes an encrypted signal. In an exemplary embodiment, the control circuit will only operate after validating the encrypted signal. In an exemplary embodiment, the system further includes a battery sensor. In an exemplary embodiment, the control circuit is adapted to provide an indication of a low battery condition. In an exemplary embodiment, the indication of a low battery condition comprises a liquid crystal shutter that is closed for a period of time and then open for a period of time. In an exemplary embodiment, the control circuit is adapted to detect a synchronization signal and begin operating the liquid crystal shutters after detecting the synchronization signal. In an exemplary embodiment, the encrypted signal will only operate a pair of liquid crystal glasses having a control circuit adapted to receive the encrypted signal. In an exemplary embodiment, the system further includes a test signal wherein the test signal operates the liquid crystal shutters at a rate that is visible to the user wearing the pair of liquid crystal shutter glasses.

A system for providing three dimensional video images has been described that includes a pair of glasses including a first lens having a first liquid crystal shutter and a second lens having a second liquid crystal shutter, the liquid crystal shutters each having a liquid crystal and an opening time of less than one millisecond, and a control circuit that alternately opens the first and second liquid crystal shutters, wherein the liquid crystal orientation is held at a point of maximum light transmission until the control circuit closes the shutter. In an exemplary embodiment, a catch voltage holds the liquid crystal at the point of maximum light transmission. In an exemplary embodiment, the point of maximum light transmission transmits more than thirty two percent of light. In an exemplary embodiment, the system further includes an emitter that provides a synchronization signal and wherein the synchronization signal causes the control circuit to open one of the liquid crystal shutters. In an exemplary embodiment, the synchronization signal includes an encrypted signal. In an exemplary embodiment, the control circuit will only operate after validating the encrypted signal. In an exemplary embodiment, the system further includes a battery sensor. In an exemplary embodiment, the control circuit is adapted to provide an indication of a low battery condition. In an exemplary embodiment, the indication of a low battery condition includes a liquid crystal shutter that is closed for a period of time and then open for a period of time. In an exemplary embodiment, the control circuit is adapted to detect a synchronization signal and begin operating the liquid crystal shutters after detecting the synchronization signal. In an exemplary embodiment, the encrypted signal will only operate a pair of liquid crystal glasses having a control circuit adapted to receive the encrypted signal. In an exemplary embodiment, the system further includes a test signal wherein the test signal operates the liquid crystal shutters at a rate that is visible to a person wearing the pair of liquid crystal shutter glasses.

A method for providing a three dimensional video image has been described that includes opening a first liquid crystal shutter in less than one millisecond, holding the first liquid crystal shutter at a point of maximum light transmission for a first period of time, closing the first liquid crystal shutter and then opening a second liquid crystal shutter in less than one millisecond, and holding the second liquid crystal shutter at a point of maximum light transmission for a second period of time, wherein the first period of time corresponds to the presentation of an image for a first eye of a viewer and the second period of time corresponds to the presentation of an image for a second eye of the viewer. In an exemplary embodiment, the method further includes holding the liquid crystal shutter at the point of maximum light transmission by a catch voltage. In an exemplary embodiment, the catch voltage is two volts. In an exemplary embodiment, the point of maximum light transmission transmits more than thirty two percent of light. In an exemplary embodiment, the method further includes emitting a synchronization signal for controlling an operation of the liquid crystal shutters. In an exemplary embodiment, the synchronization signal includes an encrypted signal. In an exemplary embodiment, the synchronization signal will only control the operation of the liquid crystal shutters control circuit after being validating the encrypted signal. In an exemplary embodiment, the method further includes sensing a power level of a battery. In an exemplary embodiment, the method further includes providing an indication of the power level of the battery. In an exemplary embodiment, the indication of a low battery power level includes a liquid crystal shutter that is closed for a period of time and then open for a period of time. In an exemplary embodiment, the method further includes detecting a synchronization signal and then operating the liquid crystal shutters after detecting the synchronization signal. In an exemplary embodiment, the method further includes only operating the liquid crystal shutters after receiving an encrypted signal specially designated for the liquid crystal shutters. In an exemplary embodiment, the method further includes providing a test signal that operates the liquid crystal shutters at a rate that is visible to the viewer.

A computer program installed on a machine readable medium in a housing for 3D glasses for providing a three dimensional video image to a user of the 3D glasses has been described that includes causing a liquid crystal to rotate by applying an electrical voltage to the liquid crystal, the liquid crystal achieving a light transmission rate of at least twenty-five percent in less than one millisecond; waiting until the liquid crystal rotates to a point having maximum light transmission; stopping the rotation of the liquid crystal at the point of maximum light transmission; and holding the liquid crystal at the point of maximum light transmission for a period of time.

A computer program installed on a machine readable medium for providing a three dimensional video image to a user of the 3D glasses has been described that includes opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, and holding the second liquid crystal shutter at a point of maximum light transmission for a second period of time, wherein the first period of time corresponds to the presentation of an image for a first eye of the user and the second period of time corresponds to the presentation of an image for a second eye of the user. In an exemplary embodiment, the liquid crystal shutter is held at the point of maximum light transmission by a catch voltage. In an exemplary embodiment, the catch voltage is two volts. In an exemplary embodiment, the point of maximum light transmission transmits more than thirty two percent of light. In an exemplary embodiment, the computer program further includes providing a synchronization signal that controls an operation of the liquid crystal shutters. In an exemplary embodiment, the synchronization signal comprises an encrypted signal. In an exemplary embodiment, the computer program further includes operating the liquid crystal shutters only after validating the encrypted signal. In an exemplary embodiment, the computer program further includes sensing a power level of a battery. In an exemplary embodiment, the computer program includes providing an indication of a low battery condition. In an exemplary embodiment, the computer program further includes providing an indication of a low battery condition by closing a liquid crystal shutter for a period of time and then opening the liquid crystal shutter for a period of time. In an exemplary embodiment, the computer program further includes detecting a synchronization signal and then operating the liquid crystal shutters after detecting the synchronization signal. In an exemplary embodiment, the computer program further includes only operating the liquid crystal shutters after receiving an encrypted signal specifically designated from controlling the liquid crystal shutters. In an exemplary embodiment, the computer program further includes providing a test signal that opens and closes the liquid crystal shutters at a rate that is visible to the user.

A system for rapidly opening a liquid crystal shutter has been described that includes means for causing a liquid crystal to rotate by applying an electrical voltage to the liquid crystal, the liquid crystal achieving a light transmission rate of at least twenty-five percent in less than one millisecond; means for waiting until the liquid crystal rotates to a point having maximum light transmission; means for stopping the rotation of the liquid crystal at the point of maximum light transmission; and means for holding the liquid crystal at the point of maximum light transmission for a period of time.

A system for providing a three dimensional video image has been described that includes means for opening the first liquid crystal shutter in less than one millisecond, means for holding the first liquid crystal shutter at a point of maximum light transmission for a first period of time, means for closing the first liquid crystal shutter and then opening the second liquid crystal shutter in less than one millisecond, and means for holding the second liquid crystal shutter at a point of maximum light transmission for a second period of time, and wherein the first period of time corresponds to the presentation of an image for a first eye of a viewer and the second period of time corresponds to the presentation of an image for a second eye of the viewer. In an exemplary embodiment, at least one of the first and second liquid crystal shutter is held at the point of maximum light transmission by a catch voltage. In an exemplary embodiment, the catch voltage is two volts. In an exemplary embodiment, the point of maximum light transmission transmits more than thirty two percent of light. In an exemplary embodiment, the system further includes means for providing a synchronization signal and wherein the synchronization signal causes one of the liquid crystal shutters to open. In an exemplary embodiment, the synchronization signal comprises an encrypted signal. In an exemplary embodiment, the system further includes means for only operating the liquid crystal shutters after validating the encrypted signal. In an exemplary embodiment, the system further includes means for sensing an operating condition of a battery. In an exemplary embodiment, the system further includes means for providing an indication of a low battery condition. In an exemplary embodiment, the means for providing an indication of a low battery condition includes means for closing a liquid crystal shutter for a period of time and then opening the liquid crystal shutter for a period of time. In an exemplary embodiment, the system further includes means for detecting a synchronization signal and means for operating the liquid crystal shutters after detecting the synchronization signal. In an exemplary embodiment, the system further includes means for only operating the liquid crystal shutters after receiving an encrypted signal specially designated for operating the liquid crystal shutters. In an exemplary embodiment, the system further includes means for operating the liquid crystal shutters at a rate that is visible to the viewer.

A method for rapidly opening a liquid crystal shutter for use in 3D glasses has been described that includes causing the liquid crystal to rotate to an open position, waiting until the liquid crystal rotates to a point having maximum light transmission; stopping the rotation of the liquid crystal at the point of maximum light transmission; and holding the liquid crystal at the point of maximum light transmission for a period of time; wherein the liquid crystal comprises an optically thick liquid crystal.

A method for providing a three dimensional video image has been described that includes transmitting an encrypted synchronization signal, receiving the encrypted synchronization signal at a remote location, after validating the received encrypted synchronization signal, opening a first liquid crystal shutter in less than one millisecond, holding the first liquid crystal shutter at a point of maximum light transmission for a first period of time, closing the first liquid crystal shutter and then opening a second liquid crystal shutter in less than one millisecond, holding the second liquid crystal shutter at a point of maximum light transmission for a second period of time, providing battery power for opening and closing the liquid crystal shutters; sensing a power level of the battery power, and providing an indication of the sensed power level of the battery power by opening and closing the liquid crystal shutters at a rate that is visible to a viewer, wherein the first period of time corresponds to the presentation of an image for a first eye of the viewer and the second period of time corresponds to the presentation of an image for a second eye of the viewer, and wherein the liquid crystal shutters are held at the point of maximum light transmission by a catch voltage.

A system for providing three dimensional video images has been described that includes a pair of glasses comprising a first lens having a first liquid crystal shutter and a second lens having a second liquid crystal shutter, the liquid crystal shutters having a liquid crystal and an opening time of less than one millisecond, a control circuit that alternately opens the first and second liquid crystal shutters, wherein the liquid crystal orientation is held at a point of maximum light transmission until the control circuit closes the shutter, and a low battery indicator that includes a battery operably coupled to the control circuit, a sensor capable of determining an amount of power remaining in the battery, a controller adapted to determine whether the amount of power remaining in the battery is sufficient for the pair of glasses to operate longer than a predetermined time, and an indicator to signal a viewer if the glasses will not operate longer than the predetermined time. In an exemplary embodiment, the indicator includes opening and closing the left and right liquid crystal shutters at a predetermined rate. In an exemplary embodiment, the predetermined amount of time is longer than three hours. In an exemplary embodiment, the low battery indicator operates for at least three days after determining the amount of power remaining in the battery is not sufficient for the pair of glasses to operate longer than the predetermined amount of time. In an exemplary embodiment, the controller adapted to determine the amount of power remaining in the battery measures time by a number of synchronization pulses.

A method for providing a three dimensional video image has been described that includes having a pair of three dimensional viewing glasses comprising a first liquid crystal shutter and a second liquid crystal shutter, opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, holding the second liquid crystal shutter at a point of maximum light transmission for a second period of time, wherein the first period of time corresponds to the presentation of an image for a first eye of a viewer and the second period of time corresponds to the presentation of an image for a second eye of the viewer, sensing an amount of power remaining in a battery, determining whether the amount of power remaining in the battery is sufficient for the pair of three dimensional viewing glasses to operate longer than a predetermined time, and indicating a low-battery signal to a viewer if the three dimensional viewing glasses will not operate longer than the predetermined time. In an exemplary embodiment, indicating a low-battery signal to a viewer if the three dimensional viewing glasses will not operate longer than the predetermined time includes opening and closing the first and second liquid crystal shutters at a predetermined rate. In an exemplary embodiment, the predetermined amount of time is longer than three hours. In an exemplary embodiment, indicating a low-battery signal to a viewer if the three dimensional viewing glasses will not operate longer than the predetermined time includes indicating a low-battery signal to a viewer if the three dimensional viewing glasses for at least three days after determining the amount of power remaining in the battery is not sufficient for the pair of three dimensional viewing glasses to operate longer than the predetermined amount of time. In an exemplary embodiment, the method further includes determining the amount of power remaining in the battery comprises measuring a number of synchronization pulses transmitted to the three dimensional viewing glasses.

A computer program installed on a machine readable medium for providing a three dimensional video image using a pair of three dimensional viewing glasses including a first liquid crystal shutter and a second liquid crystal shutter has been described that includes opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, holding the second liquid crystal shutter at a point of maximum light transmission for a second period of time, wherein the first period of time corresponds to the presentation of an image for a first eye of a viewer and the second period of time corresponds to the presentation of an image for a second eye of the viewer, sensing an amount of power remaining in a battery, determining whether the amount of power remaining in the battery is sufficient for the pair of three dimensional viewing glasses to operate longer than a predetermined time, and indicating a low-battery signal to a viewer if the three dimensional viewing glasses will not operate longer than the predetermined time. In an exemplary embodiment, the computer program includes indicating a low-battery signal to a viewer if the three dimensional viewing glasses will not operate longer than the predetermined time comprises opening and closing the first and second liquid crystal shutters at a predetermined rate. In an exemplary embodiment, the predetermined amount of time is longer than three hours. In an exemplary embodiment, the computer program includes indicating a low-battery signal to a viewer if the three dimensional viewing glasses will not operate longer than the predetermined time comprises indicating a low-battery signal to a viewer if the three dimensional viewing glasses will not operate longer than the predetermined time for at least three days after determining the amount of power remaining in the battery is not sufficient for the pair of three dimensional viewing glasses to operate longer than the predetermined amount of time. In an exemplary embodiment, the computer program further includes determining the amount of power remaining in the battery by measuring a number of synchronization pulses transmitted to the three dimensional viewing glasses.

A system for providing a three dimensional video image has been described that includes means for having a pair of three dimensional viewing glasses comprising a first liquid crystal shutter and a second liquid crystal shutter, means for opening the first liquid crystal shutter in less than one millisecond, means for holding the first liquid crystal shutter at a point of maximum light transmission for a first period of time, means for closing the first liquid crystal shutter and then opening the second liquid crystal shutter in less than one millisecond, means for holding the second liquid crystal shutter at a point of maximum light transmission for a second period of time, wherein the first period of time corresponds to the presentation of an image for a first eye of a viewer and the second period of time corresponds to the presentation of an image for a second eye of the viewer, means for sensing an amount of power remaining in a battery, means for determining whether the amount of power remaining in the battery is sufficient for the pair of three dimensional viewing glasses to operate longer than a predetermined time, and means for indicating a low-battery signal to a viewer if the three dimensional viewing glasses will not operate longer than the predetermined time. In an exemplary embodiment, the low-battery signal comprises means for opening and closing the first and second liquid crystal shutters at a predetermined rate. In an exemplary embodiment, the predetermined amount of time is longer than three hours. In an exemplary embodiment, the system further includes means for indicating a low battery power for at least three days after determining the amount of power remaining in the battery is not sufficient for the pair of three dimensional viewing glasses to operate longer than the predetermined amount of time. In an exemplary embodiment, the system further includes means for determining the amount of power remaining in the battery by measuring time by a number of synchronization pulses.

A system for providing three dimensional video images has been described that includes a pair of three dimensional viewing glasses comprising a first lens having a first liquid crystal shutter and a second lens having a second liquid crystal shutter, a control circuit for controlling the operation of the first and second liquid crystal shutters, a battery operably coupled to the control circuit, and a signal sensor operably coupled to the control circuit, wherein the control circuit is adapted to determine whether the amount of power remaining in the battery is sufficient for the pair of three dimensional viewing glasses to operate longer than a predetermined time as a function of a number of external signals detected by the signal sensor and operate the first and second liquid crystal shutters to provide a visual indication of the amount of power remaining in the battery. In an exemplary embodiment, the visual indication comprises opening and closing the first and second liquid crystal shutters at a predetermined rate.

A method for providing a three dimensional video image has been described that includes having a pair of three dimensional viewing glasses comprising a first liquid crystal shutter and a second liquid crystal shutter, sensing an amount of power remaining in a battery by determining a number of external signals transmitted to the three dimensional viewing glasses, determining whether the amount of power remaining in the battery is sufficient for the pair of three dimensional viewing glasses to operate longer than a predetermined time, and indicating a low-battery signal to a viewer if the three dimensional viewing glasses will not operate longer than the predetermined time. In an exemplary embodiment, the low-battery signal includes opening and closing the first and second liquid crystal shutters at a predetermined rate.

A computer program stored in a memory device for use in operating a pair of three dimensional viewing glasses comprising a first liquid crystal shutter and a second liquid crystal shutter providing a three dimensional video image has been described that includes sensing an amount of power remaining in a battery of the three dimensional viewing glasses by determining a number of external signals transmitted to the three dimensional viewing glasses, determining whether the amount of power remaining in the battery is sufficient for the pair of three dimensional viewing glasses to operate longer than a predetermined time, and indicating a low-battery signal to a viewer if the three dimensional viewing glasses will not operate longer than the predetermined time. In an exemplary embodiment, the low-battery signal comprises opening and closing the first and second liquid crystal shutters at a predetermined rate.

A method for providing a three dimensional video image has been described that includes having a pair of three dimensional viewing glasses including a first liquid crystal shutter and a second liquid crystal shutter has been described that includes opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, holding the second liquid crystal shutter at a point of maximum light transmission for a second period of time, wherein the first period of time corresponds to the presentation of an image for a first eye of a viewer and the second period of time corresponds to the presentation of an image for a second eye of the viewer, sensing an amount of power remaining in a battery, determining whether the amount of power remaining in the battery is sufficient for the pair of three dimensional viewing glasses to operate longer than a predetermined time, and indicating a low-battery signal to a viewer if the three dimensional viewing glasses will not operate longer than the predetermined time; wherein indicating a low-battery signal to a viewer if the three dimensional viewing glasses will not operate longer than the predetermined time includes opening and closing the first and second liquid crystal shutters at a predetermined rate, and wherein determining the amount of power remaining in the battery comprises measuring a number of synchronization pulses transmitted to the three dimensional viewing glasses.

A system for providing three dimensional video images has been described that includes a pair of glasses comprising a first lens having a first liquid crystal shutter and a second lens having a second liquid crystal shutter, the liquid crystal shutters each having a liquid crystal and an opening time of less than one millisecond, a control circuit that alternately opens the first and second liquid crystal shutters, wherein the liquid crystal orientation is held at a point of maximum light transmission until the control circuit closes the shutter, and a synchronization device operably coupled to the control circuit, including a signal receiver for sensing a synchronization signal corresponding to an image presented to a user of the glasses, and a control circuit adapted to open the first liquid crystal shutter or the second liquid crystal shutter during a period of time in which the image is presented as a function of the synchronization signal transmitted. In an exemplary embodiment, the synchronization signal includes an infrared light. In an exemplary embodiment, the system further includes a signal transmitter, wherein the signal transmitter projects the synchronization signal toward a reflector, wherein the synchronization signal is reflected by the reflector, and wherein the signal receiver detects the reflected synchronization signal. In an exemplary embodiment, the reflector comprises a movie theater screen. In an exemplary embodiment, the signal transmitter receives a timing signal from an image projector. In an exemplary embodiment, the synchronization signal includes a radio frequency signal. In an exemplary embodiment, the synchronization signal includes a series of pulses at a predetermined interval. In an exemplary embodiment, the synchronization signal includes a series of pulses at a predetermined interval, wherein a first predetermined number of pulses opens the first liquid crystal shutter, and wherein a second predetermined number of pulses opens the second liquid crystal shutter. In an exemplary embodiment, the synchronization signal is encrypted. In an exemplary embodiment, the synchronization signal comprises a series of pulses and configuration data for the control circuit. In an exemplary embodiment, at least one of the series of pulses and the configuration data are encrypted. In an exemplary embodiment, the synchronization signal includes at least one data bit preceded by at least one clock pulse. In an exemplary embodiment, the synchronization signal includes a synchronous serial data signal. In an exemplary embodiment, the synchronization signal is sensed between the presentation of images for the first and second liquid crystal shutters.

A method for providing a three dimensional video image has been described that includes having a pair of three dimensional viewing glasses comprising a first liquid crystal shutter and a second liquid crystal shutter, opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, holding the second liquid crystal shutter at a point of maximum light transmission for a second period of time, wherein the first period of time corresponds to the presentation of an image for a first eye of a viewer and the second period of time corresponds to the presentation of an image for a second eye of the viewer, transmitting a synchronization signal corresponding to the image presented to the viewer, sensing the synchronization signal, and using the synchronization signal to determine when to open the first liquid crystal shutter or the second liquid crystal shutter. In an exemplary embodiment, the synchronization signal includes an infrared light. In an exemplary embodiment, the method further includes projecting the synchronization signal toward a reflector, reflecting the synchronization signal off of the reflector, and detecting the reflected synchronization signal. In an exemplary embodiment, the method further includes reflecting the synchronization signal off of a movie theater screen. In an exemplary embodiment, the method further includes receiving a timing signal from an image projector. In an exemplary embodiment, the synchronization signal includes a radio frequency signal. In an exemplary embodiment, the synchronization signal includes a series of pulses at a predetermined interval. In an exemplary embodiment, the synchronization signal includes a series of pulses at a predetermined interval, wherein a first predetermined number of pulses opens the first liquid crystal shutter, and wherein a second predetermined number of pulses opens the second liquid crystal shutter. In an exemplary embodiment, the method further includes encrypting the synchronization signal. In an exemplary embodiment, the synchronization signal includes a series of pulses and configuration data for the control circuit. In an exemplary embodiment, the method further includes encrypting at least one of the series of pulses and the configuration data. In an exemplary embodiment, the synchronization signal includes at least one data bit preceded by at least one clock pulse. In an exemplary embodiment, the synchronization signal includes a synchronous serial data signal. In an exemplary embodiment, the synchronization signal is sensed between the presentation of images for the first and second liquid crystal shutters.

A system for providing three dimensional video images has been described that includes a pair of glasses comprising a first lens having a first liquid crystal shutter and a second lens having a second liquid crystal shutter, the liquid crystal shutters having a liquid crystal and an opening time of less than one millisecond, a control circuit that alternately opens the first and second liquid crystal shutters, wherein the liquid crystal orientation is held at a point of maximum light transmission until the control circuit closes the shutter, and a synchronization system including: a reflection device located in front of the pair of glasses, a signal transmitter sending a synchronization signal towards the reflection device, the synchronization signal corresponding to an image presented to a user of the glasses, a signal receiver sensing the synchronization signal reflected from the reflection device, and a control circuit adapted to open the first shutter or the second shutter during a period of time in which the image is presented. In an exemplary embodiment, the synchronization signal includes an infrared light. In an exemplary embodiment, the reflector includes a movie theater screen. In an exemplary embodiment, the signal transmitter receives a timing signal from an image projector. In an exemplary embodiment, the synchronization signal includes a series of pulses at a predetermined interval. In an exemplary embodiment, the synchronization signal includes a series of pulses at a predetermined interval, wherein a first predetermined number of pulses opens the first liquid crystal shutter, and wherein a second predetermined number of pulses opens the second liquid crystal shutter. In an exemplary embodiment, the synchronization signal is encrypted. In an exemplary embodiment, the synchronization signal includes a series of pulses and configuration data for the control circuit. In an exemplary embodiment, at least one of the series of pulses and the configuration data are encrypted. In an exemplary embodiment, the synchronization signal includes at least one data bit preceded by at least one clock pulse. In an exemplary embodiment, the synchronization signal includes a synchronous serial data signal. In an exemplary embodiment, the synchronization signal is sensed between the presentation of images for the first and second liquid crystal shutters.

A computer program installed on a machine readable medium for providing a three dimensional video image, using a pair of three dimensional viewing glasses comprising a first liquid crystal shutter and a second liquid crystal shutter, has been described that includes opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, holding the second liquid crystal shutter at a point of maximum light transmission for a second period of time, wherein the first period of time corresponds to the presentation of an image for a first eye of a viewer and the second period of time corresponds to the presentation of an image for a second eye of the viewer, sensing a synchronization signal corresponding to an image presented to the viewer, and using the sensed synchronization signal to determine when to open the first or the second liquid crystal shutter. In an exemplary embodiment, the synchronization signal includes an infrared light. In an exemplary embodiment, the computer program further includes projecting the synchronization signal toward a reflector, reflecting the synchronization signal off of the reflector, and detecting the reflected synchronization signal. In an exemplary embodiment, the reflector includes a movie theater screen. In an exemplary embodiment, the computer program further includes receiving a timing signal from an image projector. In an exemplary embodiment, the synchronization signal includes a radio frequency signal. In an exemplary embodiment, the synchronization signal includes a series of pulses at a predetermined interval. In an exemplary embodiment, the synchronization signal includes a series of pulses at a predetermined interval, wherein a first predetermined number of pulses opens the first liquid crystal shutter, and wherein a second predetermined number of pulses opens the second liquid crystal shutter. In an exemplary embodiment, the computer program further includes encrypting the synchronization signal. In an exemplary embodiment, the synchronization signal includes a series of pulses and configuration data for the control circuit. In an exemplary embodiment, the computer program further includes encrypting at least one of the series of pulses and the configuration data. In an exemplary embodiment, the synchronization signal includes at least one data bit preceded by at least one clock pulse. In an exemplary embodiment, the synchronization signal includes a synchronous serial data signal. In an exemplary embodiment, the computer program further includes sensing the synchronization signal between the presentation of images for the first and second liquid crystal shutters.

A system for providing a three dimensional video image has been described that includes means for having a pair of three dimensional viewing glasses comprising a first liquid crystal shutter and a second liquid crystal shutter, means for opening the first liquid crystal shutter in less than one millisecond, means for holding the first liquid crystal shutter at a point of maximum light transmission for a first period of time, means for closing the first liquid crystal shutter and then opening the second liquid crystal shutter in less than one millisecond, means for holding the second liquid crystal shutter at a point of maximum light transmission for a second period of time, wherein the first period of time corresponds to the presentation of an image for a first eye of a viewer and the second period of time corresponds to the presentation of an image for a second eye of the viewer, means for sensing a synchronization signal corresponding to the image presented to the viewer, and means for using the sensed synchronization signal to determine when to open the first or the second liquid crystal shutter. In an exemplary embodiment, the synchronization signal includes an infrared light. In an exemplary embodiment, the system further includes means for transmitting the synchronization signal toward a reflector. In an exemplary embodiment, the reflector includes a movie theater screen. In an exemplary embodiment, the means for transmitting includes means for receiving a timing signal from an image projector. In an exemplary embodiment, the synchronization signal includes a radio frequency signal. In an exemplary embodiment, the synchronization signal includes a series of pulses at a predetermined interval. In an exemplary embodiment, the synchronization signal includes a series of pulses at a predetermined interval and wherein a first predetermined number of pulses opens the first liquid crystal shutter and wherein a second predetermined number of pulses opens the second liquid crystal shutter. In an exemplary embodiment, the system further includes means for encrypting the synchronization signal. In an exemplary embodiment, the synchronization signal includes a series of pulses and configuration data for the control circuit. In an exemplary embodiment, the system further includes means for encrypting at least one of the series of pulses and the configuration data. In an exemplary embodiment, the synchronization signal includes at least one data bit preceded by at least one clock pulse. In an exemplary embodiment, the synchronization signal includes a synchronous serial data signal. In an exemplary embodiment, the system further includes means for sensing the synchronization signal between the presentation of images for the first and second liquid crystal shutters.

A method for providing a three dimensional video image has been described that includes having a pair of three dimensional viewing glasses comprising a first liquid crystal shutter and a second liquid crystal shutter, opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, holding the second liquid crystal shutter at a point of maximum light transmission for a second period of time, wherein the first period of time corresponds to the presentation of an image for a first eye of a viewer and the second period of time corresponds to the presentation of an image for a second eye of the viewer, projecting an encrypted synchronization signal toward a reflector, reflecting the encrypted synchronization signal off of the reflector, detecting the reflected encrypted synchronization signal, decrypting the detected encrypted synchronization signal, and using the detected synchronization signal to determine when to open the first liquid crystal shutter or the second liquid crystal shutter, wherein the synchronization signal comprises an infrared light, wherein the synchronization signal comprises a series of pulses and configuration data, wherein a first predetermined series of pulses opens the first liquid crystal shutter, wherein a second predetermined series of pulses opens the second liquid crystal shutter, wherein the synchronization signal comprises at least one data bit preceded by at least one clock pulse, wherein the synchronization signal comprise a synchronous serial data signal, and wherein the synchronization signal is detected between the presentation of images for the first and second liquid crystal shutters.

A system for providing three dimensional video images has been described that includes a pair of glasses comprising a first lens having a first liquid crystal shutter and a second lens having a second liquid crystal shutter, the liquid crystal shutters having a liquid crystal and an opening time of less than one millisecond, a control circuit that alternately opens the first and second liquid crystal shutters, and wherein an orientation of at least one of the liquid crystal shutters is held at a point of maximum light transmission until the control circuit closes the liquid crystal shutter, and a test system comprising a signal transmitter, a signal receiver, and a test system control circuit adapted to open and close the first and second liquid crystal shutters at a rate that is visible to a viewer. In an exemplary embodiment, the signal transmitter does not receive a timing signal from a projector. In an exemplary embodiment, the signal transmitter emits an infrared signal. In an exemplary embodiment, the infrared signal comprises a series of pulses. In an exemplary embodiment, the signal transmitter emits an radio frequency signal. In an exemplary embodiment, the radio frequency signal comprises a series of pulses.

A method for providing a three dimensional video image has been described that includes having a pair of three dimensional viewing glasses comprising a first liquid crystal shutter and a second liquid crystal shutter, opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, holding the second liquid crystal shutter at a point of maximum light transmission for a second period of time, wherein the first period of time corresponds to the presentation of an image for a first eye of a viewer and the second period of time corresponds to the presentation of an image for a second eye of a viewer, transmitting a test signal towards the three dimensional viewing glasses, receiving the test signal with a sensor on the three dimensional glasses, and using a control circuit to open and close the first and second liquid crystal shutters as a result of the received test signal, wherein the liquid crystal shutters open and close at a rate that is observable to a viewer wearing the glasses. In an exemplary embodiment, the signal transmitter does not receive a timing signal from a projector. In an exemplary embodiment, the signal transmitter emits an infrared signal. In an exemplary embodiment, the infrared signal comprises a series of pulses. In an exemplary embodiment, the signal transmitter emits an radio frequency signal. In an exemplary embodiment, the radio frequency signal includes a series of pulses.

A computer program installed on a machine readable medium for providing a three dimensional video image using a pair of three dimensional viewing glasses including a first liquid crystal shutter and a second liquid crystal shutter, the computer program has been described that includes opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, holding the second liquid crystal shutter at a point of maximum light transmission for a second period of time, wherein the first period of time corresponds to the presentation of an image for a first eye of a viewer and the second period of time corresponds to the presentation of an image for a second eye of a viewer, transmitting a test signal towards the three dimensional viewing glasses, receiving the test signal with a sensor on the three dimensional glasses, and using a control circuit to open and close the first and second liquid crystal shutters as a result of the received test signal, wherein the liquid crystal shutters open and close at a rate that is observable to a viewer wearing the glasses. In an exemplary embodiment, the signal transmitter does not receive a timing signal from a projector. In an exemplary embodiment, the signal transmitter emits an infrared signal. In an exemplary embodiment, the infrared signal includes a series of pulses. In an exemplary embodiment, the signal transmitter emits an radio frequency signal. In an exemplary embodiment, the radio frequency signal comprises a series of pulses.

A system for providing a three dimensional video image has been described that includes a means for having a pair of three dimensional viewing glasses comprising a first liquid crystal shutter and a second liquid crystal shutter, means for opening the first liquid crystal shutter in less than one millisecond, means for holding the first liquid crystal shutter at a point of maximum light transmission for a first period of time, means for closing the first liquid crystal shutter and then opening the second liquid crystal shutter in less than one millisecond, means for holding the second liquid crystal shutter at a point of maximum light transmission for a second period of time, wherein the first period of time corresponds to the presentation of an image for a first eye of a viewer and the second period of time corresponds to the presentation of an image for a second eye of a viewer, means for transmitting a test signal towards the three dimensional viewing glasses, means for receiving the test signal with a sensor on the three dimensional glasses, and means for using a control circuit to open and close the first and second liquid crystal shutters as a result of the test signal, wherein the liquid crystal shutters open and close at a rate that is observable to a viewer wearing the glasses. In an exemplary embodiment, the means for transmitting does not receive a timing signal from a projector. In an exemplary embodiment, the means for transmitting emits an infrared signal. In an exemplary embodiment, the infrared signal includes a series of pulses. In an exemplary embodiment, the means for transmitting emits an radio frequency signal. In an exemplary embodiment, the radio frequency signal includes a series of pulses.

A method for providing a three dimensional video image has been described that includes having a pair of three dimensional viewing glasses comprising a first liquid crystal shutter and a second liquid crystal shutter, opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, holding the second liquid crystal shutter at a point of maximum light transmission for a second period of time, wherein the first period of time corresponds to the presentation of an image for a first eye of a viewer and the second period of time corresponds to the presentation of an image for a second eye of a viewer, transmitting an infrared test signal towards the three dimensional viewing glasses, receiving the infrared test signal with a sensor on the three dimensional glasses, and using a control circuit to open and close the first and second liquid crystal shutters as a result of the received infrared test signal, wherein the liquid crystal shutters open and close at a rate that is observable to a viewer wearing the glasses, wherein the signal transmitter does not receive a timing signal from a projector, wherein the infrared signal comprises a series of pulses, wherein the infrared signal comprises one or more data bits that are each preceded by at least one clock pulse, and wherein the infrared signal comprises a synchronous serial data signal.

A system for providing three dimensional video images has been described that includes a pair of glasses comprising a first lens having a first liquid crystal shutter and a second lens having a second liquid crystal shutter, the liquid crystal shutters each having a liquid crystal and an opening time of less than one millisecond, a control circuit that alternately opens the first and second liquid crystal shutters, wherein the liquid crystal orientation is held at a point of maximum light transmission until the control circuit closes the shutter, and signal receiver operably coupled to the control circuit, wherein the control circuit is adapted to activate the signal receiver at a first predetermined time interval, determine if the signal receiver is receiving a valid signal, deactivate the signal receiver if the signal receiver does not receive the valid signal within a second predetermined time interval, and alternately open and close the first and second shutters at an interval corresponding to the valid signal if the signal receiver does receive the valid signal. In an exemplary embodiment, the first period of time includes at least two seconds. In an exemplary embodiment, the second period of time includes no more than 100 milliseconds. In an exemplary embodiment, both of the liquid crystal shutters remain either open or closed until the signal receiver receives the valid signal.

A method for providing a three dimensional video image has been described that includes having a pair of three dimensional viewing glasses comprising a first liquid crystal shutter and a second liquid crystal shutter, opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, holding the second liquid crystal shutter at a point of maximum light transmission for a second period of time, wherein the first period of time corresponds to the presentation of an image for a first eye of a viewer and the second period of time corresponds to the presentation of an image for a second eye of a viewer, activating a signal receiver at a first predetermined time interval, determining if the signal receiver is receiving a valid signal from a signal transmitter, deactivating the signal receiver if the signal receiver does not receive the valid signal from the signal transmitter within a second period of time, and opening and closing the first and second shutters at an interval corresponding to the valid signal if the signal receiver does receive the valid signal from the signal transmitter. In an exemplary embodiment, the first period of time includes at least two seconds. In an exemplary embodiment, the second period of time includes no more than 100 milliseconds. In an exemplary embodiment, both of the liquid crystal shutters remain either open or closed until the signal receiver receives a valid signal from the signal transmitter.

A system for providing three dimensional video images has been described that includes a pair of glasses comprising a first lens having a first liquid crystal shutter and a second lens having a second liquid crystal shutter, the liquid crystal shutters having a liquid crystal and an opening time of less than one millisecond, a control circuit that can alternately open the first and second liquid crystal shutters, wherein the liquid crystal orientation is held at a point of maximum light transmission until the control circuit closes the shutter, and wherein the control circuit is adapted to hold both the first liquid crystal shutter and the second liquid crystal shutter open. In an exemplary embodiment, the control circuit holds the first liquid crystal shutter and the second liquid crystal shutter open until the control circuit detects a synchronization signal. In an exemplary embodiment, a voltage applied to the first and second liquid crystal shutters alternates between positive and negative.

A method for providing a three dimensional video image has been described that includes having a pair of three dimensional viewing glasses comprising a first liquid crystal shutter and a second liquid crystal shutter, wherein the first liquid crystal shutter can open in less than one millisecond, wherein the second liquid crystal shutter can open in less than one millisecond, and opening and closing the first and second liquid crystal shutters at a rate that makes the first and second liquid crystal shutters appear to be clear lenses to a user. In an exemplary embodiment, the method further includes opening and closing the first and second liquid crystal shutters at a rate that makes the liquid crystal shutters appear to be clear lenses to the user until detecting a valid synchronization signal. In an exemplary embodiment, the method further includes applying a voltage to the first and second liquid crystal shutters that alternates between positive and negative until detecting a valid synchronization signal.

A computer program installed on a machine readable medium for providing a three dimensional video image, for use in a pair of three dimensional viewing glasses comprising a first liquid crystal shutter and a second liquid crystal shutter, has been described that includes opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, holding the second liquid crystal shutter at a point of maximum light transmission for a second period of time, wherein the first period of time corresponds to the presentation of an image for a first eye of a viewer and the second period of time corresponds to the presentation of an image for a second eye of a viewer, activating a signal receiver at a first predetermined time interval, determining if the signal receiver is receiving a valid signal from the signal transmitter, deactivating the signal receiver if the signal receiver does not receive the valid signal from the signal transmitter within a second period of time, and opening and closing the first and second shutters at an interval corresponding to the valid signal if the signal receiver does receive the valid signal from the signal transmitter. In an exemplary embodiment, the first period of time comprises at least two seconds. In an exemplary embodiment, the second period of time comprises no more than 100 milliseconds. In an exemplary embodiment, the first and second liquid crystal shutters remain open until the signal receiver receives the valid signal from the signal transmitter.

A computer program installed on a machine readable medium for providing a three dimensional video image, for use in a pair of three dimensional viewing glasses comprising a first liquid crystal shutter and a second liquid crystal shutter, wherein the first liquid crystal shutter can open in less than one millisecond, and wherein the second liquid crystal shutter can open in less than one millisecond, and has been described that includes opening and closing the first and second liquid crystal shutters at a rate that makes the liquid crystal shutters appear to be clear lenses. In an exemplary embodiment, the computer program further includes holding the first and second liquid crystal shutters open until detecting a valid synchronization signal. In an exemplary embodiment, the computer program further includes applying a voltage to the first and second liquid crystal shutters that alternates between positive and negative until detecting a valid synchronization signal.

A system for providing a three dimensional video image has been described that includes means for providing a pair of three dimensional viewing glasses comprising a first liquid crystal shutter and a second liquid crystal shutter, means for opening the first liquid crystal shutter in less than one millisecond, means for holding the first liquid crystal shutter at a point of maximum light transmission for a first period of time, means for closing the first liquid crystal shutter and then opening the second liquid crystal shutter in less than one millisecond, means for holding the second liquid crystal shutter at a point of maximum light transmission for a second period of time, wherein the first period of time corresponds to the presentation of an image for a first eye of a viewer and the second period of time corresponds to the presentation of an image for a second eye of a viewer, means for activating a signal receiver at a first predetermined time interval, means for determining if the signal receiver is receiving a valid signal from the signal transmitter, means for deactivating the signal receiver if the signal receiver does not receive the valid signal from the signal transmitter within a second period of time, and means for opening and closing the first and second shutters at an interval corresponding to the valid signal if the signal receiver does receive the valid signal from the signal transmitter. In an exemplary embodiment, the first period of time includes at least two seconds. In an exemplary embodiment, the second period of time includes no more than 100 milliseconds. In an exemplary embodiment, the first and second liquid crystal shutters remain open until the signal receiver receives a valid signal from the signal transmitter.

A system for providing three dimensional video images has been described that includes a pair of glasses including a first lens having a first liquid crystal shutter and a second lens having a second liquid crystal shutter, the liquid crystal shutters having a liquid crystal and an opening time of less than one millisecond, and a control circuit that alternately opens the first and second liquid crystal shutters, wherein the liquid crystal orientation is held at a point of maximum light transmission until the control circuit closes the shutter, wherein the control circuit opens and closes the first and second liquid crystal shutters after the glasses are powered on for a predetermined time period. In an exemplary embodiment, the control circuit alternatively opens and closes the first and second liquid crystal shutters after the glasses are powered on for a predetermined time period. In an exemplary embodiment, the control circuit, after the predetermined time period, then opens and closes the first and second liquid crystal shutters as a function of a synchronization signal received by the control circuit. In an exemplary embodiment, the synchronization signal comprises a series of pulses at a predetermined interval. In an exemplary embodiment, the synchronization signal includes a series of pulses at a predetermined interval and wherein a first predetermined number of pulses opens the first liquid crystal shutter and wherein a second predetermined number of pulses opens the second liquid crystal shutter. In an exemplary embodiment, a portion of the series of pulses is encrypted. In an exemplary embodiment, the series of pulses includes a predetermined number of pulses that are not encrypted followed by encrypted data. In an exemplary embodiment, the synchronization signal comprises one or more data bits that are each preceded by one or more clock pulses. In an exemplary embodiment, the synchronization signal includes a synchronous serial data signal.

A method for providing a three dimensional video image has been described that includes having a pair of three dimensional viewing glasses comprising a first liquid crystal shutter and a second liquid crystal shutter, opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, holding the second liquid crystal shutter at a point of maximum light transmission for a second period of time, wherein the first period of time corresponds to the presentation of an image for a first eye of a viewer and the second period of time corresponds to the presentation of an image for a second eye of a viewer, powering on the glasses; and opening and closing the first and second liquid crystal shutters for a predetermined time period after powering on the glasses. In an exemplary embodiment, the method further includes providing a synchronization signal, wherein a portion of the synchronization signal is encrypted, sensing the synchronization signal, and wherein the first and second liquid crystal shutters open and close in a pattern corresponding to the sensed synchronization signal only after receiving an encrypted signal after the predetermined time period. In an exemplary embodiment, the synchronization signal includes a series of pulses at a predetermined interval and wherein a first predetermined number of pulses opens the first liquid crystal shutter and wherein a second predetermined number of pulses opens the second liquid crystal shutter. In an exemplary embodiment, a portion of the series of pulses is encrypted. In an exemplary embodiment, the series of pulses includes a predetermined number of pulses that are not encrypted followed by a predetermined number of pulses that are encrypted. In an exemplary embodiment, the first and second liquid crystal shutters open and close in a pattern corresponding to the synchronization signal only after receiving two consecutive encrypted signals. In an exemplary embodiment, the synchronization signal includes one or more data bits that are each preceded by one or more clock pulses. In an exemplary embodiment, the synchronization signal comprises a synchronous serial data signal.

A computer program installed on a machine readable medium for providing a three dimensional video image, using a pair of three dimensional viewing glasses comprising a first liquid crystal shutter and a second liquid crystal shutter, has been described that includes opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, holding the second liquid crystal shutter at a point of maximum light transmission for a second period of time, wherein the first period of time corresponds to the presentation of an image for a first eye of a viewer and the second period of time corresponds to the presentation of an image for a second eye of a viewer, powering on the glasses; and opening and closing the first and second liquid crystal shutters for a predetermined time period after powering on the glasses. In an exemplary embodiment, the computer program further includes providing a synchronization signal, wherein a portion of the synchronization signal is encrypted, sensing the synchronization signal, and wherein the first and second liquid crystal shutters open and close in a pattern corresponding to the synchronization signal only after receiving an encrypted signal after the predetermined time period. In an exemplary embodiment, the synchronization signal includes a series of pulses at a predetermined interval, and wherein a first predetermined number of pulses opens the first liquid crystal shutter and wherein a second predetermined number of pulses opens the second liquid crystal shutter. In an exemplary embodiment, a portion of the series of pulses is encrypted. In an exemplary embodiment, the series of pulses includes a predetermined number of pulses that are not encrypted followed by a predetermined number of pulses that are encrypted. In an exemplary embodiment, the first and second liquid crystal shutters open and close in a pattern corresponding to the synchronization signal only after receiving two consecutive encrypted signals. In an exemplary embodiment, the synchronization signal includes one or more data bits that are each preceded by one or more clock pulses. In an exemplary embodiment, the synchronization signal comprises a synchronous serial data signal.

A system for providing a three dimensional video image has been described that includes means for providing a pair of three dimensional viewing glasses comprising a first liquid crystal shutter and a second liquid crystal shutter, wherein the first liquid crystal shutter can open in less than one millisecond, wherein the second liquid crystal shutter can open in less than one millisecond, and means for opening and closing the first and second liquid crystal shutters after powering up the glasses for a predetermined period of time. In an exemplary embodiment, the system further includes means for opening and closing the first and second liquid crystal shutters upon receiving a synchronization signal after the predetermined period of time. In an exemplary embodiment, the synchronization signal includes one or more data bits that are each preceded by one or more clock pulses. In an exemplary embodiment, the synchronization signal includes a synchronous serial data signal.

A system for providing a three dimensional video image has been described that includes means for providing a pair of three dimensional viewing glasses comprising a first liquid crystal shutter and a second liquid crystal shutter, means for opening the first liquid crystal shutter in less than one millisecond, means for holding the first liquid crystal shutter at a point of maximum light transmission for a first period of time, means for closing the first liquid crystal shutter and then opening the second liquid crystal shutter in less than one millisecond, means for holding the second liquid crystal shutter at a point of maximum light transmission for a second period of time, wherein the first period of time corresponds to the presentation of an image for a first eye of a viewer and the second period of time corresponds to the presentation of an image for a second eye of a viewer, and means for opening and closing the first and second liquid crystal shutters after powering up the glasses for a predetermined period of time. In an exemplary embodiment, the system further includes means for transmitting a synchronization signal, wherein a portion of the synchronization signal is encrypted, means for sensing the synchronization signal, and means for opening and closing the first and second liquid crystal shutters in a pattern corresponding to the synchronization signal only after receiving an encrypted signal after the predetermined time period. In an exemplary embodiment, the synchronization signal includes a series of pulses at a predetermined interval and wherein a first predetermined number of pulses opens the first liquid crystal shutter and wherein a second predetermined number of pulses opens the second liquid crystal shutter. In an exemplary embodiment, a portion of the series of pulses is encrypted. In an exemplary embodiment, the series of pulses includes a predetermined number of pulses that are not encrypted followed by a predetermined number of pulses that are encrypted. In an exemplary embodiment, the first and second liquid crystal shutters open and close in a pattern corresponding to the synchronization signal only after receiving two consecutive encrypted signals. In an exemplary embodiment, the synchronization signal includes one or more data bits that are each preceded by one or more clock pulses. In an exemplary embodiment, the synchronization signal comprises a synchronous serial data signal.

A frame for 3-D glasses having right and left viewing shutters has been described that includes a frame front that defines right and left lens openings for receiving the right and left viewing shutters; and right and left temples coupled to and extending from the frame front for mounting on a head of a user of the 3-D glasses; wherein each of the right and left temples comprise a serpentine shape. In an exemplary embodiment, each of the right and left temples include one or more ridges. In an exemplary embodiment, the frame further includes a left shutter controller mounted within the frame for controlling the operation of the left viewing shutter; a right shutter controller mounted within the frame for controlling the operation of the right viewing shutter; a central controller mounted within the frame for controlling the operation of the left and right shutter controllers; a signal sensor operably coupled to the central controller for sensing a signal from an external source; and a battery mounted within the frame operably coupled to the left and right shutter controllers, the central controller, and the signal sensor for supplying power to the left and right shutter controllers, the central controller, and the signal sensor. In an exemplary embodiment, the viewing shutters each include a liquid crystal having an opening time of less than one millisecond. In an exemplary embodiment, the frame further includes a battery sensor operably coupled to the battery and the central controller for monitoring the operating status of the battery and providing a signal to the central controller representative of the operating status of the battery. In an exemplary embodiment, the frame further includes a charge pump operably coupled to the battery and the central controller for providing an increased voltage supply to the left and right shutter controllers. In an exemplary embodiment, the frame further includes a common shutter controller operably coupled to the central controller for controlling the operation of the left and right shutter controllers. In an exemplary embodiment, the signal sensor includes a narrow band pass filter; and a decoder.

3-D glasses having right and left viewing shutters have been described that include a frame defining left and right lens openings for receiving the right and left viewing shutters; a central controller for controlling the operation of the right and left viewing shutters; a housing coupled to the frame for housing the central controller defining an opening for accessing at least a portion of the controller; and a cover received within and sealingly engaging the opening in the housing. In an exemplary embodiment, the cover comprises an o-ring seal for sealingly engaging the opening in the housing. In an exemplary embodiment, the cover comprises one or more keying members for engaging complimentary recesses formed in the opening in the housing. In an exemplary embodiment, the 3-D glasses further include a left shutter controller operably coupled to the central controller mounted within the housing for controlling the operation of the left viewing shutter; a right shutter controller operably coupled to the central controller mounted within the housing for controlling the operation of the right viewing shutter; a signal sensor operably coupled to the central controller for sensing a signal from an external source; and a battery mounted within the housing operably coupled to the left and right shutter controllers, the central controller, and the signal sensor for supplying power to the left and right shutter controllers, the central controller, and the signal sensor. In an exemplary embodiment, the viewing shutters each include a liquid crystal having an opening time of less than one millisecond. In an exemplary embodiment, the 3-D glasses further include a battery sensor operably coupled to the battery and the central controller for monitoring the operating status of the battery and providing a signal to the central controller representative of the operating status of the battery. In an exemplary embodiment, the 3-D glasses further include a charge pump operably coupled to the battery and the central controller for providing an increased voltage supply to the left and right shutter controllers. In an exemplary embodiment, the 3-D glasses further include a common shutter controller operably coupled to the central controller for controlling the operation of the left and right shutter controllers. In an exemplary embodiment, the signal sensor includes a narrow band pass filter; and a decoder.

A method of housing a controller for 3-D glasses having right and left viewing elements has been described that includes providing a frame for supporting the right and left viewing elements for wearing by a user; providing a housing within the frame for housing a controller for the 3-D glasses; and sealing the housing within the frame using a removable cover having a sealing element for sealingly engaging the housing. In an exemplary embodiment, the cover includes one or more dimples. In an exemplary embodiment, sealing the housing comprises operating a key to engage the dimples in the cover of the housing. In an exemplary embodiment, the housing further houses a removable battery for providing power to the controller for the 3-D glasses.

A system for providing a three dimensional video image to a user of 3D glasses has been described that includes a power supply, first and a second liquid crystal shutters operably coupled to the power supply, and a control circuit operably coupled to the power supply and the liquid crystal shutters adapted to open the first liquid crystal shutter for a first period of time, close the first liquid crystal shutter for a second period of time, open the second liquid crystal shutter for the second period of time, close the second liquid crystal shutter for the first period of time, and transfer charge between the first and second liquid crystal shutters during portions of at least one of the first and second periods of time, wherein the first period of time corresponds to the presentation of an image for a first eye of the user and the second period of time corresponds to the presentation of an image for a second eye of the user. In an exemplary embodiment, the control circuit is adapted to use a synchronization signal to determine the first and second periods of time. In an exemplary embodiment, the system further includes an emitter that provides a synchronization signal and wherein the synchronization signal causes the control circuit to open one of the liquid crystal shutters. In an exemplary embodiment, the synchronization signal includes an encrypted signal. In an exemplary embodiment, the control circuit will only operate after validating the encrypted signal. In an exemplary embodiment, the control circuit is adapted to detect a synchronization signal and begin operating the liquid crystal shutters after detecting the synchronization signal. In an exemplary embodiment, the encrypted signal will only operate a pair of liquid crystal glasses having a control circuit adapted to receive the encrypted signal. In an exemplary embodiment, the synchronization signal includes one or more data bits that are each preceded by one or more clock pulses. In an exemplary embodiment, the synchronization signal comprises a synchronous serial data signal.

A system for providing three dimensional video images has been described that includes a pair of glasses comprising a first lens having a first liquid crystal shutter and a second lens having a second liquid crystal shutter, the liquid crystal shutters each having a liquid crystal, and a control circuit that alternately opens the first and second liquid crystal shutters and transfers charge between the liquid crystal shutters. In an exemplary embodiment, the system further includes an emitter that provides a synchronization signal and wherein the synchronization signal causes the control circuit to open one of the liquid crystal shutters. In an exemplary embodiment, the synchronization signal includes an encrypted signal. In an exemplary embodiment, the control circuit will only operate after validating the encrypted signal. In an exemplary embodiment, the control circuit is adapted to detect a synchronization signal and begin operating the liquid crystal shutters after detecting the synchronization signal. In an exemplary embodiment, the encrypted signal will only operate a pair of liquid crystal glasses having a control circuit adapted to receive the encrypted signal. In an exemplary embodiment, the synchronization signal includes one or more data bits that are each preceded by one or more clock pulses. In an exemplary embodiment, the synchronization signal includes a synchronous serial data signal.

A method for providing a three dimensional video image using first and second liquid crystal shutters has been described that includes closing the first liquid crystal shutter and opening the second liquid crystal shutter, then closing the second liquid crystal shutter and opening the first liquid crystal shutter, and transferring charge between the first and second liquid crystal shutters. In an exemplary embodiment, the method further includes providing a synchronization signal, and opening one of the liquid crystal shutters in response to the synchronization signal. In an exemplary embodiment, the synchronization signal includes an encrypted signal. In an exemplary embodiment, the method further includes operating only after validating the encrypted signal. In an exemplary embodiment, the method further includes detecting a synchronization signal, and begin operating the liquid crystal shutters after detecting the synchronization signal. In an exemplary embodiment, the synchronization signal comprises one or more data bits that are each preceded by one or more clock pulses. In an exemplary embodiment, the synchronization signal includes a synchronous serial data signal.

A computer program installed on a machine readable medium in a housing for 3D glasses having first and second liquid crystal shutters for providing a three dimensional video image to a user of the 3D glasses has been described that includes closing the first liquid crystal shutter and opening the second liquid crystal shutter, then closing the second liquid crystal shutter and opening the first liquid crystal shutter, and transferring charge between the first and second liquid crystal shutters. In an exemplary embodiment, the computer program further includes providing a synchronization signal, and opening one of the liquid crystal shutters in response to the synchronization signal. In an exemplary embodiment, the synchronization signal includes an encrypted signal. In an exemplary embodiment, the computer program further includes validating the encrypted signal. In an exemplary embodiment, the computer program further includes detecting a synchronization signal, and operating the liquid crystal shutters after detecting the synchronization signal. In an exemplary embodiment, the synchronization signal comprises one or more data bits that are each preceded by one or more clock pulses. In an exemplary embodiment, the synchronization signal includes a synchronous serial data signal.

A system for providing a three dimensional video image using first and second liquid crystal shutters has been described that includes means for closing the first liquid crystal shutter and opening the second liquid crystal shutter, means for then closing the second liquid crystal shutter and opening the first liquid crystal shutter, and means for transferring charge between the first and second liquid crystal shutters. In an exemplary embodiment, the system further includes means for providing a synchronization signal, and means for the synchronization signal causing opening one of the liquid crystal shutters. In an exemplary embodiment, the synchronization signal comprises an encrypted signal. In an exemplary embodiment, the system further includes means for only operating after validating the encrypted signal. In an exemplary embodiment, the synchronization signal includes one or more data bits that are each preceded by one or more clock pulses. In an exemplary embodiment, the synchronization signal includes a synchronous serial data signal. In an exemplary embodiment, the system further includes means for detecting a synchronization signal, and means for operating the liquid crystal shutters after detecting the synchronization signal.

A system for providing electrical power to 3D glasses including left and right liquid crystal shutters has been described that includes a controller operably coupled to the left and right liquid crystal shutters; a battery operably coupled to the controller; and a charge pump operably coupled to the controller; wherein the controller is adapted to transfer electrical charge between the left and right liquid crystal shutters when changing the operational state of either of the left or right liquid crystal shutter; and wherein the charge pump is adapted to accumulate electrical potential when the controller changes the operational state of either the left or right liquid crystal shutter. In an exemplary embodiment, the charge pump is adapted to stop accumulating electrical potential when the level of the electrical potential equals a predetermined level.

A method of providing electrical power to 3D glasses including left and right liquid crystal shutters has been described that includes transferring electrical charge between the left and right liquid crystal shutters when changing the operational state of either of the left or right liquid crystal shutters; and accumulating electrical potential when changing the operational state of either the left or right liquid crystal shutters. In an exemplary embodiment, the method further includes stopping the accumulation of electrical potential when the level of the electrical potential equals a predetermined level.

A computer program stored in a machine readable medium for providing electrical power to 3D glasses including left and right liquid crystal shutters has been described that includes transferring electrical charge between the left and right liquid crystal shutters when changing the operational state of either of the left or right liquid crystal shutters; and accumulating electrical potential when changing the operational state of either the left or right liquid crystal shutters. In an exemplary embodiment, the computer program further includes stopping the accumulation of electrical potential when the level of the electrical potential equals a predetermined level.

A system for providing electrical power to 3D glasses including left and right liquid crystal shutters has been described that includes means for transferring electrical charge between the left and right liquid crystal shutters when changing the operational state of either of the left or right liquid crystal shutters; and means for accumulating electrical potential when changing the operational state of either the left or right liquid crystal shutters. In an exemplary embodiment, the system further includes means for stopping the accumulation of electrical potential when the level of the electrical potential equals a predetermined level.

A signal sensor for use in 3D glasses for receiving a signal from a signal transmitter and sending a decoded signal to a controller for operating the 3D glasses has been described that includes a band pass filter for filtering the signal received from the signal transmitter; and a decoder operably coupled to the band pass filter for decoding the filtered signal and providing the decoded signal to the controller of the 3D glasses. In an exemplary embodiment, the signal received from the signal transmitter includes one or more data bits; and one or more clock pulses that proceed a corresponding one of the data bits. In an exemplary embodiment, the signal received from the signal transmitter comprises a synchronous serial data transmission. In an exemplary embodiment, the signal received from the signal transmitter comprise a synchronization signal for controlling the operation of the 3D glasses.

3-D have been described that include a band pass filter for filtering the signal received from a signal transmitter; a decoder operably coupled to the band pass filter for decoding the filtered signal; a controller operably coupled to the decoder for receiving the decoded signal; and left and right optical shutters operably coupled to and controlled by the controller as a function of the decoded signal. In an exemplary embodiment, the signal received from the signal transmitter includes one or more data bits; and one or more clock pulses that proceed a corresponding one of the data bits. In an exemplary embodiment, the signal received from the signal transmitter comprises a synchronous serial data transmission.

A method of transmitting data signals to 3D glasses has been described that includes transmitting a synchronous serial data signal to the 3D glasses. In an exemplary embodiment, the data signal comprises one or more data bits that are each preceded by a corresponding clock pulse. In an exemplary embodiment, the method further includes filtering the data signal to remove out of band noise. In an exemplary embodiment, the synchronous serial data signal comprises a synchronization signal for controlling the operation of the 3D glasses.

A method of operating 3D glasses having left and right optical shutters has been described that includes transmitting a synchronous serial data signal to the 3D glasses; and controlling the operation of the left and right optical shutters as a function of data encoded in the data signal. In an exemplary embodiment, the data signal includes one or more data bits that are each preceded by a corresponding clock pulse. In an exemplary embodiment, the method further includes filtering the data signal to remove out of band noise.

A computer program for transmitting data signals to 3D glasses has been described that includes transmitting a synchronous serial data signal to the 3D glasses. In an exemplary embodiment, the data signal includes one or more data bits that are each preceded by a corresponding clock pulse. In an exemplary embodiment, the computer program further includes filtering the data signal to remove out of band noise. In an exemplary embodiment, the synchronous serial data signal includes a synchronization signal for controlling the operation of the 3D glasses.

A computer program for operating 3D glasses having left and right optical shutters has been described that includes transmitting a synchronous serial data signal to the 3D glasses; and controlling the operation of the left and right optical shutters as a function of data encoded in the data signal. In an exemplary embodiment, the data signal includes one or more data bits that are each preceded by a corresponding clock pulse. In an exemplary embodiment, the computer program further includes filtering the data signal to remove out of band noise.

A synchronization signal for operating one or more optical shutters within a pair of three dimensional viewing glasses, the synchronization signal stored within a machine readable medium, has been described that includes one or more data bits for controlling the operation of the one or more of the optical shutters within the pair of three dimensional viewing glasses; and one or more clock pulses that precede each of the data bits. In an exemplary embodiment, the signal is stored within a machine readable medium operably coupled to a transmitter. In an exemplary embodiment, the transmitter includes an infra red transmitter. In an exemplary embodiment, the transmitter includes a visible light transmitter. In an exemplary embodiment, the transmitter includes a radio frequency transmitter. In an exemplary embodiment, the signal is stored within a machine readable medium operably coupled to a receiver. In an exemplary embodiment, the transmitter includes an infra red transmitter. In an exemplary embodiment, the transmitter includes a visible light transmitter. In an exemplary embodiment, the transmitter includes a radio frequency transmitter.

A method of synchronizing the operation of 3D glasses having left and right shutters with a display device has been described that includes initially synchronizing the operation of the 3D glasses with the operation of the display device; and periodically resynchronizing the operation of the 3D glasses with the operation of the display device. In an exemplary embodiment, initially synchronizing the operation of the 3D glasses with the operation of the display device comprises transmitting a signal from the display device to the 3D glasses that comprises one or more synchronization pulses. In an exemplary embodiment, initially synchronizing the operation of the 3D glasses with the operation of the display device comprises transmitting a signal from the display device to the 3D glasses that comprises information representative of the type of the display device. In an exemplary embodiment, initially synchronizing the operation of the 3D glasses with the operation of the display device comprises transmitting a signal from the display device to the 3D glasses that comprises information representative of an opening and closing sequence of the left and right shutters. In an exemplary embodiment, initially synchronizing the operation of the 3D glasses with the operation of the display device comprises transmitting a signal from the display device to the 3D glasses that comprises information representative of an operating frequency of the images displayed on the display device. In an exemplary embodiment, initially synchronizing the operation of the 3D glasses with the operation of the display device comprises transmitting a signal from the display device to the 3D glasses that comprises one or more synchronization pulses; transmitting a signal from the display device to the 3D glasses that comprises information representative of the type of the display device; transmitting a signal from the display device to the 3D glasses that comprises information representative of an opening and closing sequence of the left and right shutters; and transmitting a signal from the display device to the 3D glasses that comprises information representative of an operating frequency of the images displayed on the display device. In an exemplary embodiment, periodically resynchronizing the operation of the 3D glasses with the operation of the display device comprises transmitting a signal from the display device to the 3D glasses that comprises one or more synchronization pulses. In an exemplary embodiment, periodically resynchronizing the operation of the 3D glasses with the operation of the display device comprises transmitting a signal from the display device to the 3D glasses that comprises information representative of a time of transmission of the signal. In an exemplary embodiment, periodically resynchronizing the operation of the 3D glasses with the operation of the display device comprises transmitting a signal from the display device to the 3D glasses that comprises information representative of a time delay of the transmission of the signal. In an exemplary embodiment, periodically resynchronizing the operation of the 3D glasses with the operation of the display device comprises transmitting a signal from the display device to the 3D glasses that comprises one or more synchronization pulses; transmitting a signal from the display device to the 3D glasses that comprises information representative of a time of transmission of the signal; and transmitting a signal from the display device to the 3D glasses that comprises information representative of a time delay of the transmission of the signal. In an exemplary embodiment, the method further includes the 3D glasses using the time delay of the transmission of the signal to resynchronize the operation of the 3D glasses with the operation of the display device.

It is understood that variations may be made in the above without departing from the scope of the invention. While specific embodiments have been shown and described, modifications can be made by one skilled in the art without departing from the spirit or teaching of this invention. The embodiments as described are exemplary only and are not limiting. Many variations and modifications are possible and are within the scope of the invention. Furthermore, one or more elements of the exemplary embodiments may be omitted, combined with, or substituted for, in whole or in part, one or more elements of one or more of the other exemplary embodiments. Accordingly, the scope of protection is not limited to the embodiments described, but is only limited by the claims that follow, the scope of which shall include all equivalents of the subject matter of the claims.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A stereoscopic image projector comprising: an image generator configured to generate three left-eye wavelength-specific images and three right-eye wavelength-specific images having different wavelengths by modulating three light beams having the different wavelengths in spatial modulators; an image combiner configured to combine the three left-eye wavelength-specific images into a single left-eye combined image and the three right-eye wavelength-specific images into a single right-eye combined image; a relay lens configured to receive the left-eye combined image and the right-eye combined image and focus a real image of the left-eye combined image and a real image of the right-eye combined image that are separated from each other; a light guide configured to separately guide the real image of the left-eye combined image and the real image of the right-eye combined image; a left-eye image projection lens configured to project the real image of the left-eye combined image guided through the light guide on a screen so that a left-eye image is focused; and a right-eye image projection lens configured to project the real image of the right-eye combined image guided through the light guide on the screen so that a right-eye image is focused.

2. The stereoscopic image projector according to claim 1, wherein the light guide includes first and second prisms, the first prism has an entrance surface on which the real image of the left-eye combined image is incident, a reflection surface that reflects the real image of the left-eye combined image incident through the entrance surface, and an exit surface through which the real image of the left-eye combined image reflected off the reflection surface exits, and the second prism has an entrance surface on which the real image of the right-eye combined image is incident, a reflection surface that reflects the real image of the right-eye combined image incident through the entrance surface, and an exit surface through which the real image of the right-eye combined image reflected off the reflection surface exits.

3. The stereoscopic image projector according to claim 1 or 2, wherein the left-eye image projection lens and the right-eye image projection lens are configured to superimpose the left-eye image and the right-eye image on each other.

4. The stereoscopic image projector according to any preceding claim, further comprising a lens shift mechanism configured to adjust the distance between the left-eye image projection lens and the right-eye image projection lens in the direction perpendicular to the optical axes of the left-eye image projection lens and the right-eye image projection lens while keeping the optical axes parallel to each other.

5. The stereoscopic image projector according to any preceding claim, wherein the number of the spatial modulators are three, the spatial modulators corresponding to the three light beams, and each of the spatial modulators has a left-eye image region in which the left-eye image is generated and a right-eye image region in which the right-eye image is generated.

6. The stereoscopic image projector according to any preceding claim, further comprising a polarization control filter provided upstream of the entrance surface or downstream of the exit surface of each of the left-eye image projection lens and the right-eye image projection lens, the polarization control filters converting the polarization state of the light that forms the real image of the left-eye combined image to be projected on the screen and the polarization state of the light that forms the real image of the right-eye combined image to be projected on the screen in such a way that the two polarization states differ from each other.

7. The stereoscopic image projector according to any preceding claim, further comprising a wavelength selection filter provided upstream of the entrance surface or downstream of the exit surface of each of the left-eye image projection lens and the right-eye image projection lens, the wavelength selection filters converting the wavelength distribution of the light that forms the real image of the left-eye combined image to be projected on the screen and the wavelength distribution of the light that forms the real image of the right-eye combined image to be projected on the screen in such a way that the two wavelength distributions differ from each other.

8. The stereoscopic image projector according to any preceding claim, wherein the light that forms the left-eye wavelength-specific images and the right-eye wavelength-specific images generated in the image generator is circularly polarized, the light guide includes a prism, the prism has an entrance surface on which the real image of the left-eye combined image and the real image of the right-eye combined image are incident, a reflection surface that reflects the real images incident through the entrance surface, and an exit surface through which the real images reflected off the reflection surface exit, and a polarization control filter is provided between the image combiner and the entrance surface of the light guide, the polarization control filter converting the polarization state of the light that forms the real image of the left-eye combined image to be projected on the screen and the polarization state of the light that forms the real image of the right-eye combined image to be projected on the screen from circularly polarized light into linearly polarized light.

9. The stereoscopic image projector according to any preceding claim, further comprising:
a left-eye optical retarder positioned in front of the left-eye image projection lens; and
a right-eye optical retarder position in front of the right-eye image projection lens;
wherein the image generator is configured to swap one or more of the three left-eye wavelength-specific images with one or more of the three right-eye wavelength-specific images.

10. The stereoscopic image projector according to any preceding claim, wherein the image generator is configured to swap a location of one or more of the three left-eye wavelength-specific images with the location of one or more of the three right-eye wavelength-specific images.

11. An adaptor for a stereoscopic image projector, the adaptor comprising: a relay lens configured to receive a left-eye combined image that is a combined single image formed of three left-eye wavelength-specific images having different wavelengths and a right-eye combined image that is a combined single image formed of three right-eye wavelength-specific images having different wavelengths through the entrance surface of the relay lens and output a focused real image of the left-eye combined image and a focused real image of the right-eye combined image that are separated from each other through the exit surface of the relay lens; a light guide configured to face the exit surface of the relay lens and separately guide the real image of the left-eye combined image and the real image of the right-eye combined image in the direction away from the exit surface; and an attachment member configured to hold the relay lens and the light guide.
